# EUROPEAN PATENT SPECIFICATION

(11) **EP 2 776 506 B1**
(45) Date of publication and mention of the grant of the patent: **25.12.2019**
(21) Application number: 11875357.3
(22) Date of filing: 08.11.2011
(51) Int. Cl.: C08L 69/00, C08K 3/34, C08G 77/448

(54) **HIGH HEAT POLYCARBONATE AND SILOXANE COPOLYCARBONATE BLENDS THAT PROVIDE DUCTILE HIGH HEAT OPTIONS FOR FLAME RETARDANT APPLICATIONS**
HOCHHITZEBESTÄNDIGE POLYCARBONAT- UND SILOXAN-COPOLYCARBONAT-MISCHUNGEN MIT DUKTILEN HOCHHITZEBESTÄNDIGEN OPTIONEN FÜR FLAMMHEMMENDE ANWENDUNGEN
MÉLANGES DE POLYCARBONATE ET DE COPOLYCARBONATE DE SILOXANE DE TENUE AU FEU ÉLEVÉE QUI FOURNISSENT DES OPTIONS DE HAUTE TENUE THERMIQUE DUCTILE POUR DES APPLICATIONS RETARDATRICES DE FLAMME

(43) Date of publication of application: 17.09.2014
(73) Proprietor: SABIC Global Technologies B.V., 4612 PX Bergen op Zoom (NL)
(72) Inventor: SUN, Xiaoyu, Evansville, IN 47720 (US); NIU, Yaming, Shanghai (CN)
(74) Representative: Modiano, Micaela Nadia
(86) International application number: PCT/CN2011/081925
(87) International publication number: WO 2013/067684

(56) References cited:
- WO-A1-2007/094927
- WO-A1-2007/149663
- WO-A1-2009/040772
- US-A1- 2005 085 580
- US-A1- 2007 149 722
- US-A1- 2008 081 855
- US-A1- 2008 103 267
- US-A1- 2009 088 504
- US-A1- 2009 318 604

## Description

### BACKGROUND

The present disclosure relates to the development and use of high heat polycarbonate and siloxane copolycarbonate blends that provide ductile high heat options for flame retardant applications.

### BACKGROUND

Polycarbonates are synthetic thermoplastic resins that may be derived from bisphenols and phosgene, or their derivatives. The desired properties of polycarbonates include high impact strength and toughness, heat resistance, weather and ozone resistance, and good ductility. They are useful for forming a wide variety of products, such as by molding, extrusion, and thermoforming processes. Such products include articles and components that include auto parts, electronic appliances and cell phone components. Because of their broad use, particularly in electronic applications or auto part applications, such as computer or game console housings or head lamp support members, it is desirable to provide polycarbonates with flame retardant, high heat resistance, and better ductility in class with good aesthetics without delamination issues. US2009/318604 discloses a polycarbonate blend comprising a first polycarbonate comprising 2-phenyl-3,3-bis(4-hydroxyphenyl)phthalimidine (PPPBP) and 2,2-bis(4-hydroxyphenyl)propane (BPA) units and a polycarbonate-polysiloxane copolymer.

Polysiloxane polycarbonates have good impact strength performance, but articles molded from these copolymers exhibit lower heat resistance compared to other polycarbonates, which in turn limits its commercial applications to some extent. Polyester polycarbonate copolymers have better heat resistance than other polycarbonate grades, but not as good ductility. Blends of polysiloxane polycarbonates in either the SiPC1 or SiPC2 grades, and polyester polycarbonates can potentially provide a resin that has the combination of better ductility, as well as high heat resistance. Without being bound by theory, due to microphase separation of silicone domains in the polysiloxane polycarbonate, the amount of polysiloxane polycarbonate in these blends is limited to avoid aesthetic issues such as delamination. By limiting the polysiloxane polycarbonate levels in these blends, the improvement in ductility of these blends is also limited.

Accordingly, there is a need for producing blends that are high heat (e.g., Tg of at least 170°C) and provide good impact strength properties without substantially compromising the desired aesthetics, e.g. delamination, and colorability of a molded part derived therefrom.

### SUMMARY OF THE INVENTION

According to its first embodiment, the first invention provides a polycarbonate blend composition comprising:
(a) a first polycarbonate having a glass transition temperature of greater than 170°C as measured using a differential scanning calorimetry method, wherein the first polycarbonate is derived from:
   (i) one or more monomers having the structure HO-A₁-Y₁-A₂-OH wherein each of A₁ and A₂ comprise a monocyclic divalent arylene group, and Y₁ is a bridging group having one or more atoms; or
   (ii) polyester monomer units having the structure 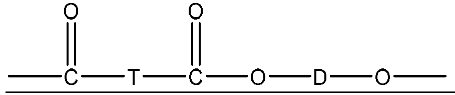 wherein D comprises one or more alkyl containing C₆-C₂₀ aromatic group(s), or one or more C₆-C₂₀ aromatic group(s), and T comprises a C₆-C₂₀ aromatic group; and
(b) a second polycarbonate wherein the second polycarbonate is a polysiloxane block copolymer derived from
   (i) the structure 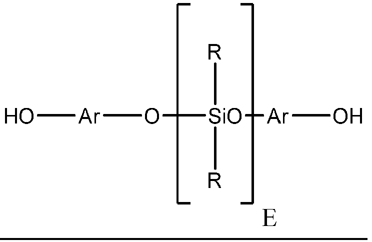 wherein R comprises a C₁-C₃₀ aliphatic, a C₆-C₃₀ aromatic group, or a combination thereof, wherein Ar comprises one or more C₆-C₃₀ aromatic group(s), or one or more alkyl containing C₆-C₃₀ aromatic group(s), wherein E has an average value of 20-200; or
   (ii) the structure 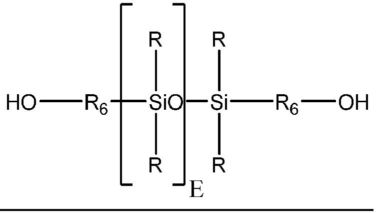
wherein R comprises a C₁-C₃₀ aliphatic, a C₆-C₃₀ aromatic group, or a combination thereof, wherein R₆ comprise C₆-C₃₀ aromatic group, or a combination of a C₆-C₃₀ aromatic group and a C₁-C₃₀ aliphatic group, wherein E has an average value of 20-200; wherein the wt% siloxane of (b) is between 15% to 25%; (c) greater than 0.1 wt.% and less than 0.3 wt.% of the total blend composition of an anti-drip agent being polytetrafluoroethylene encapsulated in styrene-acrylonitrile (TSAN), the perfluorinated polyolefin of the anti-drip agent being in a fibrous form;(d) 0.01 to 0.15 wt.% of a flame retardant additive based on weight of the blend composition; wherein the wt% of siloxane of the blended composition is between 1.5 and 5 %;
wherein the blend composition has a heat deflection temperature (HDT) of at least 150°C at 1.8 MPa, according to ASTM D 648-07;
wherein the blend composition has a vicat softening temperature (Vicat B/50) of at least 170°C, according to ASTM D 1525-09;
wherein an article molded from the blend composition has a notched Izod impact strength of at least 400 J/m at 23°C at a thickness of 5mm_(0.2 inches), according to ASTM D256-10: and
wherein a molded article from the blend composition has a UL94 rating of V₀ at 1.5 mm thickness.

The first polycarbonate of the blend composition may comprise units derived from aromatic ester units derived from isophthalic acid or terephthalic acid or isophthalic acid esters or terephthalic esters or a combination isophthalic acid and terephthalic acid or isophthalic acid esters and terephthalic acid esters. In another embodiment, the first polycarbonate of the blend composition may comprise units derived from the monomers 4,4'-(3,3,5-trimethylcyclohexane-1,1-diyl)diphenol. In a further embodiment, the first polycarbonate of the blend composition may comprise units derived from 3,3-bis(4-hydroxyphenyl)-2-phenylisoindolin-1-one (PPPBP), 1,1-bis(4-hydroxyphenyl)-1-phenylethane(Bisphenol-AP), and 1,1-bis(4-hydroxyphenyl)-3,3,5-trimethyl-cyclohexane (Bisphenol-TMC).

The second polycarbonate of the blend composition may further comprise a carbonate unit derived from the polysiloxane blocks having the structure 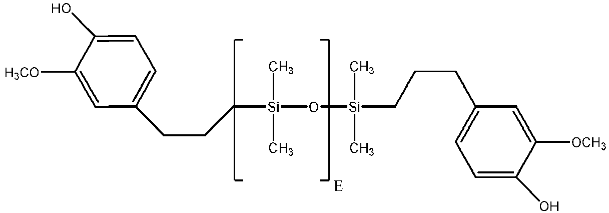 or 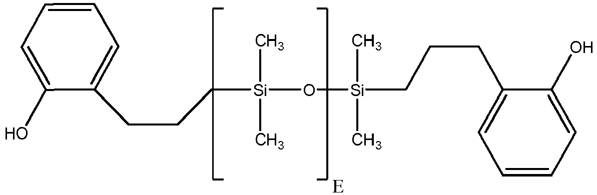 wherein the E has an average value of between 20 and 200.

The second polycarbonate of the blend composition may further comprise a carbonate unit derived from the polysiloxane blocks wherein the polysiloxane blocks have an Ar derived from resorcinol, the polydiorganosiloxane repeating units are derived from dihydroxy aromatic compounds of formula: 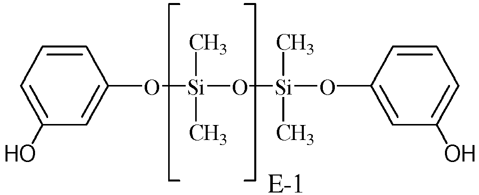 or, where Ar is derived from bisphenol-A, wherein the dihydroxy aromatic compounds of formula: 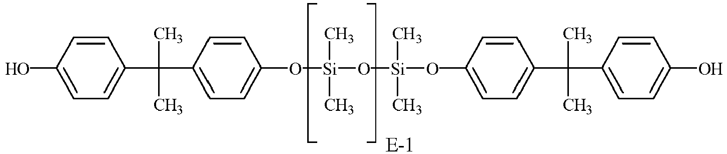 wherein E is as defined above.

As indicated above, the perfluorinated polyolefin of the blended composition's anti-drip agent has the molecular formula (C₂F₄)ₙ, wherein n may be 20-200 or 1 to 100, or 2 to 50. The perfluorinated polyolefin of the blended composition's anti-drip agent is in a fibrous form. The anti-drip agent of the blended composition is T-SAN, which is available from SABIC Innovative Plastics, and is greater than 0.1 wt% and less than 0.3 wt% of the total blend composition. The T-SAN of the blended composition's anti-drip agent may be made from an emulsion polymerization.

The flame retardant additive of the blend composition may be perfluorinated C₁₋₁₆ alkyl sulfonates, potassium diphenylsulfone sulfonate (KSS), sodium benzene sulfonate, sodium toluene sulfonate (NATS), salts derived from an alkali metal or alkaline earth metal (for example, lithium, sodium, potassium, magnesium, calcium and barium salts) or an inorganic acid complex salt. The perfluorinated C₁₋₁₆ alkyl sulfonate of the blend composition may be at least one of the following: potassium perfluorobutane sulfonate (Rimar salt), potassium perfluoroctane sulfonate, or tetraethylammonium perfluorohexane sulfonate.

A further embodiments of the instant invention is directed to an article molded from a polycarbonate blend composition described above, more in particular to an injection molded article comprising: the blend composition of the first embodiment of the invention, wherein the article has the following characteristics: (a) a notched izod impact strength of at least 400 J/m at 23° C at a thickness of 5 mm (0.2 inches), according to ASTM D 256-10; and (b) a UL94 rating of V0 at 1.5 mm thickness.

The article can be a component of a cell phone cover or computer housing or gaming device or smart phone, wherein the article is injection molded from the polycarbonate blend composition(s) encompassed by the first embodiment of the instant invention.

A still further embodiment of the instant invention is directed to a method of reducing or inhibiting the amount of surface structural defects on an article, comprising molding the polycarbonate blend composition according to the first embodiment of the instant invention, wherein the article molded from the polycarbonate blend composition exhibits between a 0.5 % and 100 % decrease in the level of a surface structural defect as compared to the surface of a known control article having a polysiloxane content greater than 5 % of the total wt% of the control article, wherein the surface structural defect is delamination, pearlescence, surface imperfections, uneven shine, non-uniform pearlescence, fractures, pealing, scaling, breakage, undesired coloring, abrasions, and/or hazing.

### BRIEF DESCRIPTION OF THE DRAWINGS

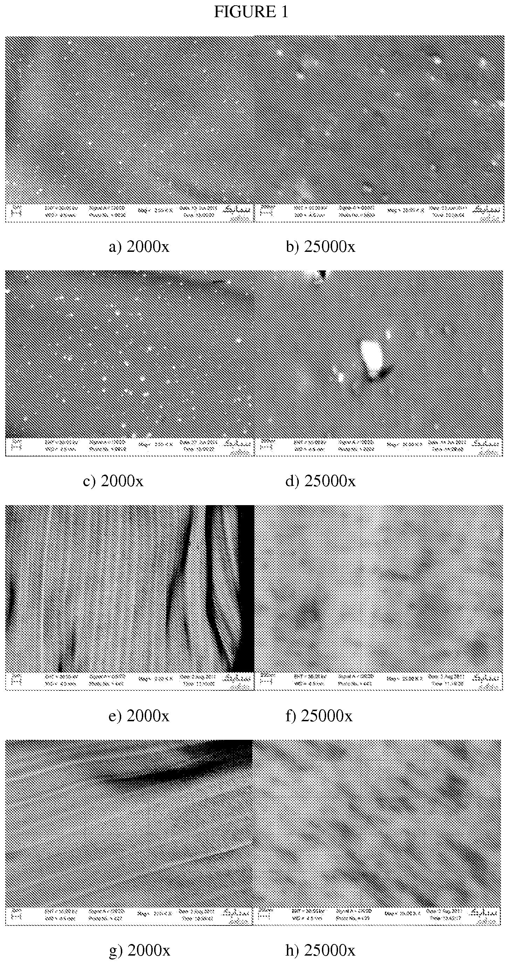

Figure 1 shows scanning transmission electron microscopy (STEM) pictures of PPPBP/BPA copolycarbonate with +/- 20 weight percent (wt%) siloxane block copolycarbonate (SiPC1) (17% of the SiPC1 weight percent loading). (A) With T-SAN at 2000x magnification; (B) with T-SAN at 25,000x magnification; (C) Without T-SAN at 2000x magnification showing larger aggregates of silicone domains; (D) Without T-SAN at 25,000x magnification. (E)-(H) show STEM picture of PPPBP/BPA copolycarbonate with +/- 6 wt% siloxane block copolycarbonate (SiPC2) (35% of the SiPC2 weight percent loading). (E) With T-SAN at 2000x magnification; (F) With T-SAN at 25,000x magnification showing smaller and more evenly distributed domains; (G) Without T-SAN at 2000x magnification; (D) Without T-SAN at 25,000x magnification.

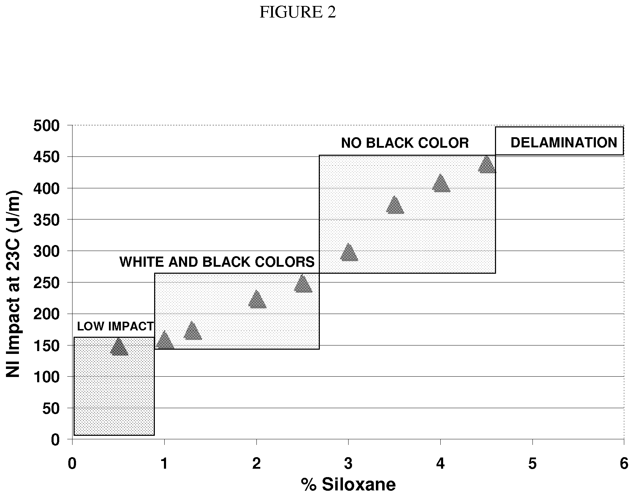

Figure 2 shows notched izod impact results at 23°C (J/m) and different aesthetic parameters as a function of the siloxane weight percent content present in PPPBP/polycarbonate/SIPC2 polycarbonate blends (with T-SAN and Rimar salt).

### DETAILED DESCRIPTION

Embodiments are directed to a polycarbonate blend composition having a combination of a high heat polycarbonate (as described in this disclosure), a polycarbonate polysiloxane copolymer (as described in this disclosure), an anti-drip agent being polytetrafluoroethylene encapsulated in styrene-acrylonitrile (TSAN), the perfluorinated polyolefin of the anti-drip agent being in a fibrous form, and a flame retardant additive.

The selected high heat polycarbonate component of the blend composition imparts a desired heat deflection temperature of at least 150°C at 1.8 MPa, according to ASTM D648-07, and a vicat softening temperature (Vicat B/500 of at least 170°C at ASTM D 1525-09. In a further embodiment, the polycarbonate polysiloxane copolymer component of the blend composition provides an article molded from the composition with the desired impact strength of at least 400 Joules/meter (J/m) at 23°C at a thickness of 5 mm (0.2 inches) according to ASTM D 256-10. These components may not coexist perfectly in conventional molded articles as agglomeration of siloxane units leads to visual and structural defects. The use of the anti-drip agent, that is polytetrafluoroethylene encapsulated in styrene-acrylonitrile (T-SAN) with the perfluorinated polyolefin of the said anti-drip agent being in a fibrous form, however, without being bound by theory, prevents siloxane agglomeration resulting in beneficial strength from the siloxane and heat resistance from the polycarbonate. The composition of the instant invention may therefore be used in articles for consumer electronics market, which has heat resistance, impact strength properties, and good aesthetics e.g. limited delamination issues and good colorability.

### DEFINITIONS

The terminology used herein is for the purpose of describing particular embodiments only and is not intended to be limiting. As used in the specification and the appended claims, the singular forms "a," "and" and "the" include plural references unless the context clearly dictates otherwise.

"Alkyl" as used herein may mean a linear, branched, or cyclic group, such as a methyl group, ethyl group, n-propyl group, isopropyl group, n-butyl group, isobutyl group, tert-butyl group, n-pentyl group, isopentyl group, n-hexyl group, isohexyl group, cyclopentyl group, cyclohexyl group, and the like.

"Copolymer" as used herein may mean a polymer derived from two or more structural unit or monomeric species, as opposed to a homopolymer, which is derived from only one structural unit or monomer.

"C₃-C₆ cycloalkyl" as used herein may mean cyclopropyl, cyclobutyl, cyclopentyl and cyclohexyl.

"Fluorinated α-olefin monomer as used herein may mean an α-olefin monomer that includes at least one fluorine atom substituent.

"Glass Transition Temperature" or "Tg" as used herein may mean the maximum temperature that a polycarbonate will have one or more useful properties. These properties include impact resistance, stiffness, strength, and shape retention. The Tg of a polycarbonate therefore may be an indicator of its useful upper temperature limit, particularly in plastics applications. The Tg may be measured using a differential scanning calorimetry method and expressed in degrees Celsius (°C).

The glass transition temperature of a polycarbonate may depend primarily on the composition of the polycarbonate. Polycarbonates that are formed from monomers having more rigid and less flexible chemical structures than bisphenol-A generally have higher glass transition temperatures than bisphenol-A, while polycarbonate that are formed from monomers having less rigid and more flexible chemical structures than bisphenol-A, for example, generally have lower glass transition temperatures than bisphenol-A. For example, a polycarbonate described herein formed from 33 mole % of a rigid monomer, 3,3-bis(4-hydroxyphenyl)-2-phenylisoindolin-1-one ("PPPBP"), and 67 mole % bisphenol-A has a glass transition temperature of 198°C, while a polycarbonate described herein formed from bisphenol-A, but also having 6 wt% of siloxane units, a flexible monomer, has a glass transition temperature of 145°C.

Mixing of two or more polycarbonates having different glass transition temperatures may result in a glass transition temperature value for the mixture that is intermediate between the glass transition temperatures of the polycarbonates that are mixed.

The glass transition temperature of a polycarbonate may also be an indicator of the molding or extrusion temperatures required to form polycarbonate parts. The higher the glass transition temperature of the polycarbonate the higher the molding or extrusion temperatures that are needed to form polycarbonate parts.

The glass transition temperatures (Tg) described herein are measures of heat resistance of the corresponding polycarbonate and polycarbonate blends. The Tg can be determined by differential scanning calorimetry. The calorimetry method may use a TA Instruments Q1000 instrument, for example, with setting of 20°C/min ramp rate and 40°C start temperature and 200°C end temperature.

"Halo" as used herein may be a substituent to which the prefix is attached is substituted with one or more independently selected halogen radicals. For example, "C₁-C₆ haloalkyl" means a C₁-C₆ alkyl substituent wherein one or more hydrogen atoms are replaced with independently selected halogen radicals. Non-limiting examples of C₁-C₆ haloalkyl include chloromethyl, 1-bromoethyl, fluoromethyl, difluoromethyl, trifluoromethyl, and 1,1,1-trifluoroethyl. It should be recognized that if a substituent is substituted by more than one halogen radical, those halogen radicals may be identical or different (unless otherwise stated).

"Halogen" or "halogen atom" as used herein may mean a fluorine, chlorine, bromine, or iodine atom.

"Haze" as used herein may mean that percentage of transmitted light, which in passing through a specimen deviates from the incident beam by forward scattering. Percent (%) haze may be measured according to ASTM D 1003-07 on a 3.2 millimeter (mm) thick plaque.

"Heteroaryl" as used herein may mean any aromatic heterocyclic ring which may comprise an optionally benzocondensed 5 or 6 membered heterocycle with from 1 to 3 heteroatoms selected among nitrogen (N), oxygen (O) or sulfur (S). Non limiting examples of heteroaryl groups may include pyridyl, pyrazinyl, pyrimidinyl, pyridazinyl, indolyl, imidazolyl, thiazolyl, isothiazolyl, pyrrolyl, phenyl-pyrrolyl, furyl, phenyl-furyl, oxazolyl, isoxazotyl, pyrazolyl, thienyl, benzothienyl, isoindolinyl, benzoimidazolyl, quinolinyl, isoquinolinyl, 1,2,3-triazolyl, 1-phenyl-1,2,3-triazolyl, and the like.

"Hindered phenol stabilizer" as used herein may mean 3,5-di-tert-butyl-4-hydroxyhydrocinnamic acid, octadecyl ester.

"Melt Flow Rate" (MFR) as used herein may mean the flow rate of a polymer in a melt phase as determined using the method of ASTM 1238-10 and ISO 1133-2005. MFR is expressed in grams per 10 minutes (g/10 min).

"Melt-Volumetric Rate" (MVR) of a molten polymer is measured by determining the amount of polymer that flows through a capillary of a specific temperature over a specified time using standard weights at a fixed temperature. MVR is expressed in cubic centimeter per 10 minutes (cc/10 min). The higher the MVR value of a polymer at a specific temperature, the greater the flow of that polymer at that specific temperature.

"Percent transmission" or "% transmission" as used herein may mean the ratio of transmitted light to incident light and may be measured according to ASTM D 1003-07 on a 3.2 millimeter (mm) thick plaque.

"PETS release agent" as used herein may mean pentaerythritol tetrastearate, mold release.

"Phosphite stabilizer" as used herein may mean tris-(2,4-di-tert-butylphenyl) phosphite.

"Polycarbonate" as used herein may mean an oligomer or polymer comprising residues of one or more polymer structural units, or monomers, joined by carbonate linkages.

"Straight or branched C₁-C₃ alkyl" or "straight or branched C₁-C₃ alkoxy" as used herein may mean methyl, ethyl, n-propyl, isopropyl, methoxy, ethoxy, n-propoxy and isopropoxy.

Unless otherwise indicated, each of the foregoing groups may be unsubstituted or substituted, provided that the substitution does not significantly adversely affect synthesis, stability, or use of the compound.

The terms "structural unit" and "monomer" are interchangeable as used herein.

For the recitation of numeric ranges herein, each intervening number there between with the same degree of precision is explicitly contemplated. For example, for the range of 6-9, the numbers 7 and 8 are contemplated in addition to 6 and 9, and for the range 6.0-7.0, the number 6.0, 6.1, 6.2, 6.3, 6.4, 6.5, 6.6, 6.7, 6.8, 6.9, and 7.0 are explicitly contemplated.

### POLYCARBONATE BLEND COMPOSITION

The herein described polycarbonate blend composition comprises a first polycarbonate, a second polycarbonate, an anti-drip agent, and a flame retardant additive. The polycarbonate blend may also comprise an additional polycarbonate and in one embodiment, the polycarbonate is derived from one or more aromatic dihydroxy compounds, e.g. bisphenol-A, and homopolymers derived therefrom. The polycarbonate blend composition provides high heat resistance similar to or better than bisphenol A (BPA) polycarbonate homopolymers, as well as improved impact strength performance. The polycarbonate blend composition further ensures articles molded from the polycarbonate blend composition obtain certain flame retardant requirements, e.g. Underwriters' Laboratory ("UL") listing of the product and good part appearance and aesthetics after molding, especially when the blend formulations include both black and/or white pigments.

The polycarbonate blend may comprise greater than: 10 wt%, 15 wt%, 20 wt%, 25 wt%, 30 wt%, 35 wt%, 40 wt%, 45 wt%, or 50 wt%, of the second polycarbonate. (In other words, the blend may comprise greater than 10 wt%, specifically, greater than 15 wt%, more specifically, greater than 20 wt%, yet more specifically, greater than 25 wt%, even more specifically, greater than 30 wt%, still more specifically, greater than 35 wt%, yet more specifically, greater than 40 wt%, still more specifically, greater than 45 wt%, and even more specifically, greater than 50 wt%, of the second polycarbonate.) The polycarbonate blend may comprise between 10 wt% and 20 wt% of the second polycarbonate when the second polycarbonate has an overall siloxane weight percent of 15 wt% to 25 wt%, and the total siloxane weight percent in the polycarbonate blend is 1.5 wt% to 5 wt%. The polycarbonate blend may comprise between 30 wt% and 40 wt% of the second polycarbonate when the second polycarbonate has an overall siloxane weight percent between 3 wt% and 10 wt%, and the total siloxane weight percent 1.5 wt% to 5 wt%.

The polycarbonate blend may comprise less than: 90 wt%, 85 wt%, 80 wt%, 75 wt%, 70 wt%, 65 wt%, 60 wt%, 55 wt%, or 50 wt% of the first polycarbonate. The polycarbonate blend may comprise 10 wt% to 20 wt% of the first polycarbonate. The sum of the weight (wt) percentages for the first and second polycarbonates may equal: 89.5 wt%, 89.6 wt%, 89.7 wt%, 89.8 wt%, 89.9 wt%, 99.0 wt%, 99.1 wt%, 99.2 wt%, 99.3 wt%, 99.4 wt%, or 99.5 wt%. The first and/or second polycarbonate may be branched.

The polycarbonate blend may comprise less than or equal to: 0.35 wt%, 0.24 wt%, 0.238 wt%, 0.22 wt%, 0.21 wt%, 0.20 wt%, 0.19 wt%, 0.18 wt%, 0.17 wt%, 0.16 wt%, 0.15 wt%, 0.149 wt%, 0.13 wt%, 0.12 wt%, 0.11 wt%, or 0.10 wt%, of the resin. In a further embodiment, the polycarbonate blend may comprise 0.15 wt% to 0.20 wt%. In another embodiment, the polycarbonate blend may comprise 0.20 wt% of the resin.

The polycarbonate blend may comprise less than or equal to: 0.15 wt%, 0.14 wt%, 0.13 wt%, 0.12 wt%, 0.11 wt%, 0.10 wt%, 0.09 wt%, 0.08 wt%, 0.07 wt%, 0.06 wt%, 0.05 wt%, of the fire retardant additive. The polycarbonate blend may comprise less or equal to 0.08 of the fire retardant additive or an effective amount to reach the desired properties in conjunction with other elements of the formulations described herein.

The polycarbonate blend composition has a heat deflection temperature (HDT) of at least 150°C, 151°C, 152°C, 153°C, 154°C, 155°C, 156°C, 157°C, 158°C, 159°C, 160°C, 161°C, 162°C, 163°C, 164°C, 165°C, 166°C, 167°C, 168°C, 169°C, 170°C, 171°C, 172°C, 173°C, 174°C, or 175°C, at 1.8 MegaPascal (MPa), according to ASTM D 648-07. The polycarbonate blend composition may have a heat deflection temperature (HDT) of greater than or equal to 155°C at 1.8 MPa, according to ASTM D 648-07, when the second polycarbonate has an overall siloxane weight percent (wt%) of 15 wt% to 25 wt%, and the total siloxane weight percent in the blend composition is 1.5 wt% to 5 wt%. The polycarbonate blend composition may have a heat deflection temperature (HDT) of greater than or equal to 150°C at 1.8 MPa according to ASTM D 648-07 when the second polycarbonate has an overall siloxane weight percent of 3 wt% to 10 wt%, and the total siloxane weight percent in the blend composition is 1.5 wt% to 5 wt%

The polycarbonate blend composition has a vicat softening temperature (Vicat B/50) of at least: 170°C, 171°C, 172°C, 173°C, 174°C, 175°C, 176°C, 177°C, 178°C, 179°C, 180°C, 181°C, 182°C, 183°C, 184°C, or 185°C, according to ASTM D 1525-09. The polycarbonate blend composition may have a vicat softening temperature (Vicat B/50) of greater than or equal to 174°C according to ASTM D 1525-09 when the second polycarbonate has an overall siloxane weight percent of 15 wt% to 25 wt%, and the total siloxane weight percent in the blend composition is 1.5 wt% to 5 wt%. The polycarbonate blend composition may have a vicat softening temperature (Vicat B/50) of greater than or equal to 170°C according to ASTM D 1525-09 when the second polycarbonate has an overall siloxane weight percent of 3 wt% to 10 wt%, and the total siloxane weight percent in the blend composition is 1.5 wt% to 5 wt%

A molded article from the polycarbonate blend composition may has a V0 at greater than 1.5 mm, UL94 rating. For example, the molded article from the polycarbonate blend has a V0 at 1.5 mm, UL94 rating; a V0 at 2.0 mm, UL94 rating; a V0 at 2.5 mm, UL94 rating; or a V0 at 3.0 mm, UL94 rating. The polycarbonate composition may have a V0 at 1.5 mm, UL94 rating when the second polycarbonate has an overall siloxane weight percent of 15 wt% to 25 wt%, and the total siloxane weight percent in the blend composition is 1.5 wt% to 5 wt%. The polycarbonate composition may have a V0 at 1.5 mm, UL94 rating when the second polycarbonate has an overall siloxane weight percent of 3 wt% to 10 wt%, and the total siloxane weight percent in the blend composition is between 1.5 wt% and 5 wt%

The polycarbonate blend composition has a notched izod impact strength (NII) of 400 J/m, 405 J/m, 410 J/m, 415 J/m, or 420 J/m at 23 °C, according to ASTM D 256-10. The polycarbonate blend composition may have a NII of at least (i.e., greater than or equal to): 400 J/m, 401 J/m, 402 J/m, 403 J/m, 404 J/m, or 405 J/m, at 23 °C, according to ASTM D 256-10, when the second polycarbonate has an overall siloxane weight percent of 15 wt% to 25 wt%, and the total siloxane weight percent in the blend composition is 1.5 wt% to 5 wt%. The polycarbonate blend composition may have a NII of greater than or equal to 400 J/m at 23 °C, according to ASTM D 256-10, when the second polycarbonate has an overall siloxane weight percent of 15 wt% to 25 wt%, and the total siloxane weight percent in the blend composition is 1.5 wt% to 5 wt%. A sample may mean a polycarbonate test bar. The test bar may have a defined thickness. The polycarbonate test bar has undergone ductile failure in a notched izod test if, after impact, the bar remains as a single piece, with the two ends of the bar attached and rigid (i.e. self-supporting). A test bar has undergone brittle failure if after impact either the two ends of the bar have broken into two separate pieces or if they are attached by only a thin, flexible connection of plastic.

The polycarbonate blend composition may have a notched izod impact strength (NII) of: 150 J/m, 155 J/m, 160 J/m, 165 J/m, 170 J/m, 175 J/m, 180 J/m, 185 J/m, 190 J/m, 195 J/m, 200 J/m, 205 J/m, 210 J/m, 215 J/m, or 220 J/m at 0 °C, according to ASTM D 256-10. The polycarbonate blend composition may have a NII of greater than or equal to: 185 J/m, 186 J/m, 187 J/m, 188 J/m, 189 J/m, 190 J/m, 191 J/m, 192 J/m, 193 J/m, 194 J/m, or 195 J/m, at 0 °C, according to ASTM D 256-10, when the second polycarbonate has an overall siloxane weight percent of 15 wt% to 25 wt%, and the total siloxane weight percent in the blend composition is 1.5 wt% to 5 wt%. The polycarbonate blend composition may have a NII of greater than or equal to 190 J/m at 0 °C, according to ASTM D 256-10, when the second polycarbonate has an overall siloxane weight percent of 15 wt% to 25 wt%, and the total siloxane weight percent in the blend composition is 1.5 wt% to 5 wt%

The polycarbonate blend composition may have a notched izod impact strength (NII) of: 100 J/m, 105 J/m, 110 J/m, 115 J/m, 120 J/m, 125 J/m, 130 J/m, 135 J/m, 140 J/m, 145 J/m, 150 J/m, 155 J/m, 160 J/m, 165 J/m, or 170 J/m at -30 °C, according to ASTM D 256-10. The polycarbonate blend composition may have a NII of greater than or equal to: 145 J/m, 146 J/m, 147 J/m, 148 J/m, 149 J/m, 150 J/m, 151 J/m, 152 J/m, 153 J/m, 154 J/m, or 155 J/m at -30 °C, according to ASTM D 256-10 when the second polycarbonate has an overall siloxane weight percent of 15 wt% to 25 wt%, and the total siloxane weight percent in the blend composition is 1.5 wt% to 5 wt%. The polycarbonate blend composition may have a NII of greater than or equal to 150 J/m at -30 °C, according to ASTM D 256-10, when the second polycarbonate has an overall siloxane weight percent of 15 wt% to 25 wt%, and the total siloxane weight percent in the blend composition is 1.5 wt% to 5 wt%

The polycarbonate blend composition may have a notched izod impact strength (NII) of: 420 J/m at 23 °C, according to ASTM D 256-10.

The polycarbonate blend composition may have a notched izod impact strength (NII) of: 150 J/m, 155 J/m, 160 J/m, 165 J/m, 170 J/m, 175 J/m, 180 J/m, 185 J/m, 190 J/m, 195 J/m, 200 J/m, 205 J/m, 210 J/m, 215 J/m, or 220 J/m, at 0 °C, according to ASTM D 256-10. The polycarbonate blend composition may have a NII of greater than or equal to: 155 J/m, 156 J/m, 157 J/m, 158 J/m, 159 J/m, 160 J/m, 161 J/m, 162 J/m, 163 J/m, 1644 J/m, or 165 J/m, at 23 °C, according to ASTM D 256-10, when the second polycarbonate has an overall siloxane weight percent of 3 wt% to 10 wt%, and the total siloxane weight percent in the blend composition is 1.5 wt% to 5 wt%. The polycarbonate blend composition may have a NII of greater than or equal to 160 J/m at 0 °C, according to ASTM D 256-10, when the second polycarbonate has an overall siloxane weight percent of 3 wt% to 10 wt%, and the total siloxane weight percent in the blend composition is 1.5 wt% to 5 wt%

The polycarbonate blend composition may have a notched izod impact strength (NII) of: 90 J/m, 95 J/m, 100 J/m, 105 J/m, 110 J/m, 155 J/m, 250 J/m, 205 J/m, 250 J/m, 230 J/m, 235 J/m, 240 J/m, 245 J/m, 250 J/m, or 255 J/m at -30 °C, according to ASTM D 256-10. The polycarbonate blend composition may have a NII of greater than or equal to: 125 J/m, 126 J/m, 127 J/m, 128 J/m, 129 J/m, 130 J/m, 131 J/m, 132 J/m, 133 J/m, 134 J/m, or 135 J/m at -30 °C, according to ASTM D 256-10, when the second polycarbonate has an overall siloxane weight percent of 3 wt% to 10 wt%, and the total siloxane weight percent in the blend composition is 1.5 wt% to 5 wt%. The polycarbonate blend composition may have a NII of greater than or equal to 130 J/m at -30 °C, according to ASTM D 256-10, when the second polycarbonate has an overall siloxane weight percent of 3 wt% to 10 wt%, and the total siloxane weight percent in the blend composition is 1.5 wt% to 5 wt%

The polycarbonate blend composition may have a colorability from white to deep grey under appropriate processing conditions when the second polycarbonate has an overall siloxane weight percent of 15 wt% to 25 wt%, and the total siloxane weight percent in the blend composition is 1.5 wt% to 5 wt%. The polycarbonate blend composition may have good colorability to both black and white and colors in between when the second polycarbonate has an overall siloxane weight percent of 3 wt% to 10 wt%, and the total siloxane weight percent in the blend composition is 1.5 wt% to 5 wt%

An article molded from the polycarbonate blend composition does not demonstrate delamination when the polycarbonate blend composition has less than or equal to: 0.3 wt%, 0.20 wt%, 0.19 wt%, 0.18 wt%, 0.17 wt%, 0.16 wt%, or 0.15 wt%, of the anti-drip agent and less than or equal to: 0.15 wt%, 0.10 wt%, 0.09 wt%, 0.08 wt%, 0.07 wt%, 0.06 wt%, 0.05 wt%, of the fire retardant additive. An article molded from the polycarbonate blend composition does not demonstrate delamination when the polycarbonate blend composition has 0.20 wt% or less of the anti-drip agent and 0.08 wt% or less of the fire retardant additive.

The polycarbonate blend composition may have a glass transition temperature (Tg) of between 165°C and 185°C, between 170°C and 185°C, between 174°C and 179°C, or between175°C and 179°C, as measured using differential scanning calorimetry.

Melt flow rate (MFR) measures the rate of extrusion of a thermoplastic through an orifice at a prescribed temperature and load. MFR may be measured according to the method ASTM D 1238-10 at 2.16 kg at 330°C. The herein described polycarbonate blend compositions may have an MFR of 12 to 37 g/10 minutes, of 13 to 36 g/10 minutes, of 14 to 35 g/10 minutes, of 15 to 34 g/10 minutes, 16 to 33 g/10 minutes, 17 to 32 g/10 minutes, or 17.5 to 31 g/10 min. In an embodiment, the polycarbonate composition has an MFR measured at 300°C/2.16 kg, according to ASTM D 1238-10, of 17.0 to 32.5 g/10 min, specifically 17.2 to 32 g/10 min, and more specifically 17.1 to 31 g/10 min. Mixtures of polycarbonates of different flow properties may be used to achieve the overall desired flow property.

The addition of the anti-drip agent in this polycarbonate blend composition ensures a fire resistance (FR) performance of V0 at 1.5 mm as per UL94 rating. Using greater than 0.2 wt% of the anti-drip agent, however, can cause die-swell of the polycarbonate blend compositions and the polycarbonate may not be pulled out from the die head in a uniform thickness, and some of the strands could break during elongation. The polycarbonate blends with the second polycarbonate having polysiloxane levels greater than 4.5, specifically, greater than 5.0 wt%, in the blend exhibited delamination, during testing as set forth below. The polycarbonate blends with the second polycarbonate having polysiloxane levels under 2.0 wt% in the blend exhibited poor impact strength properties

### FIRST POLYCARBONATE

Described herein is the first polycarbonate of the polycarbonate blend composition. The first polycarbonate may be a homopolycarbonate or a copolycarbonate derived from one dihydroxy aromatic monomer or a combination of two or more dihydroxy aromatic monomers, respectively, such that the glass transition temperature of the homopolycarbonate or the copolycarbonate has a Tg of at least 170°C. The dihydroxy aromatic monomer of the homopolycarbonate can produces a polycarbonate with a Tg of greater than (>) 170°C. If more than one dihydroxy aromatic monomers are present in the copolycarbonate, the combination of dihydroxy aromatic monomers can produce a polycarbonate with a Tg of >170°C; the selection of said monomeric units can be done without undue experimentation. The first polycarbonate may alternatively be a polyester polycarbonate copolymer having a Tg of at least 170°C. The polyester polycarbonate may be a combination of a polyester structural unit and a polycarbonate structural unit. The polyester structural unit may be derived from a C₆-C₂₀ aromatic dicarboxylic acid and one or more dihydroxy aromatic monomers. The polycarbonate structural unit may be derived from one or more dihydroxy aromatic monomers. The dihydroxy aromatic monomers of the polyester structural unit and the polycarbonate structural unit may be the same or different. Details of these structural units of the first polycarbonate are described below.

### HOMOPOLYCARBONATE/COPOLYCARBONATE

The first polycarbonate may be a homopolycarbonate or a copolycarbonate. The term "polycarbonate" and "polycarbonate resin" may mean compositions having repeating structural carbonate units of the formula (1): 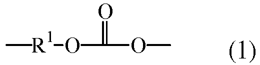 in which at least about 60 % of the total number of R¹ groups are aromatic organic groups and the balance thereof are aliphatic, alicyclic, or aromatic groups. In an embodiment, each R¹ is an aromatic organic group, for example a group of the formula (2):

-A¹-Y¹-A²- (2)

wherein each of A¹ and A² is a monocyclic divalent aryl group and Y¹ is a bridging group having one or two atoms that separate A¹ from A². For example, one atom may separate A¹ from A², with illustrative examples of these groups including -O-, -S-, -S(O)-, -S(O)₂-, -C(O)-, methylene, cyclohexyl-methylene, 2-[2.2.1]-bicycloheptylidene, ethylidene, isopropylidene, neopentylidene, cyclohexylidene, cyclopentadecylidene, cyclododecylidene, and adamantylidene. The bridging group Y¹ may be a hydrocarbon group or a saturated hydrocarbon group such as methylene, cyclohexylidene, or isopropylidene.

The polycarbonates may be produced from dihydroxy compounds having the formula HO-R¹-OH, wherein R¹ is defined as above for formula (1). The formula HO-R¹-OH includes bisphenol compounds of formula (3):

HO-A¹-Y¹-A²-OH (3)

wherein Y¹, and A² are as described above. Included are bisphenol compounds of general formula (4): 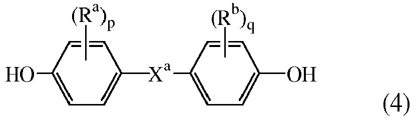 wherein R^{a} and R^{b} each represent a halogen atom or a monovalent hydrocarbon group and may be the same or different; p and q are each independently integers of 0 to 4; and X^{a} represents one of the groups of formula (5): 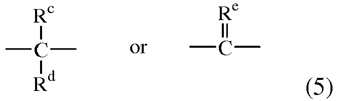 wherein R^{c} and R^{d} each independently represent a hydrogen atom or a monovalent linear alkyl or cyclic alkylene group and R^{e} is a divalent hydrocarbon group. In an embodiment, R^{c} and R^{d} represent a cyclic alkylene group; or a heteroatom-containing cyclic alkylene group comprising carbon atoms and heteroatoms with a valency of two or greater. In an embodiment, a heteroatom-containing cyclic alkylene group comprises at least one heteroatom with a valency of 2 or greater, and at least two carbon atoms. Suitable heteroatoms for use in the heteroatom-containing cyclic alkylene group include -O-, -S-, and -N(Z)-, where Z is a substituent group selected from hydrogen, C₁₋₁₂ alkyl, C₁₋₁₂ alkoxy, or C₁₋₁₂ acyl. Where present, the cyclic alkylene group or heteroatom-containing cyclic alkylene group may have 3 to 20 atoms, and may be a single saturated or unsaturated ring, or fused polycyclic ring system wherein the fused rings are saturated, unsaturated, or aromatic.

Other bisphenols containing substituted or unsubstituted cyclohexane units may be used, for example, bisphenol of formula (6): 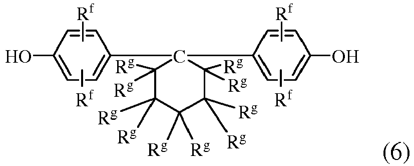 wherein each R^{f} is independently hydrogen, C₁₋₁₂ alkyl, or halogen; and each R^{g} is independently hydrogen or C₁₋₁₂ alkyl. The substituents may be aliphatic or aromatic, straight-chain, cyclic, bicyclic, branched, saturated, or unsaturated. Such cyclohexane-containing bisphenols, for example the reaction product of two moles of a phenol with one mole of a hydrogenated isophorone, are useful for making polycarbonate polymers with high glass transition temperatures and high heat distortion temperatures.

Other useful dihydroxy compounds having the formula HO-R¹-OH include aromatic dihydroxy compounds of formula (7): 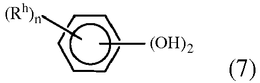 wherein each R^{h} is independently a halogen atom, a C₁-₁₀ hydrocarbyl such as a C₁₋₁₀ alkyl group, a halogen substituted C₁₋₁₀ hydrocarbyl such as a halogen-substituted C₁₋₁₀ alkyl group, and n is 0 to 4. The halogen is usually bromine.

Some exemplary dihydroxy compounds include: 4,4'-dihydroxybiphenyl, 1,6-dihydroxynaphthalene, 2,6-dihydroxynaphthalene, bis(4-hydroxyphenyl)methane, bis(4-hydroxyphenyl)diphenylmethane, bis(4-hydroxyphenyl)-1-naphthylmethane, 1,2-bis(4-hydroxyphenyl)ethane, 1,1-bis(4-hydroxyphenyl)-1-phenylethane, 2-(4-hydroxyphenyl)-2-(3-hydroxyphenyl)propane, bis(4-hydroxyphenyl)phenylmethane, 2,2-bis(4-hydroxy-3-bromophenyl)propane, 1,1-bis (hydroxyphenyl)cyclopentane, 1,1-bis(4-hydroxyphenyl)cyclohexane, 1,1-bis(4-hydroxyphenyl)isobutene, 1,1-bis(4-hydroxyphenyl)cyclododecane, trans-2,3-bis(4-hydroxyphenyl)-2-butene, 2,2-bis(4-hydroxyphenyl)adamantine, alpha, alpha'-bis(4-hydroxyphenyl)toluene, bis(4-hydroxyphenyl)acetonitrile, 2,2-bis(3-methyl-4-hydroxyphenyl)propane, 2,2-bis(3-ethyl-4-hydroxyphenyl)propane, 2,2-bis(3-n-propyl-4-hydroxyphenyl)propane, 2,2-bis(3-isopropyl-4-hydroxyphenyl)propane, 2,2-bis(3-sec-butyl-4-hydroxyphenyl)propane, 2,2-bis(3-t-butyl-4-hydroxyphenyl)propane, 2,2-bis(3-cyclohexyl-4-hydroxyphenyl)propane, 2,2-bis(3-allyl-4-hydroxyphenyl)propane, 2,2-bis(3-methoxy-4-hydroxyphenyl)propane, 2,2-bis(4-hydroxyphenyl)hexafluoropropane, 1,1-dichloro-2,2-bis(4-hydroxyphenyl)ethylene, 1,1-dibromo-2,2-bis(4-hydroxyphenyl)ethylene, 1,1-dichloro-2,2-bis(5-phenoxy-4-hydroxyphenyl)ethylene, 4,4'-dihydroxybenzophenone, 3,3-bis(4-hydroxyphenyl)-2-butanone, 1,6-bis(4-hydroxyphenyl)-1,6-hexanedione, ethylene glycol bis(4-hydroxyphenyl)ether, bis(4-hydroxyphenyl)ether, bis(4-hydroxyphenyl)sulfide, bis(4-hydroxyphenyl)sulfoxide, bis(4-hydroxyphenyl)sulfone, 9,9-bis(4-hydroxyphenyl)fluorine, 2,7-dihydroxypyrene, 6,6'-dihydroxy-3,3,3',3'- tetramethylspiro(bis)indane ("spirobiindane bisphenol"), 3,3-bis(4-hydroxyphenyl)phthalide, 2,6-dihydroxydibenzo-p-dioxin, 2,6-dihydroxythianthrene, 2,7-dihydroxyphenoxathin, 2,7-dihydroxy-9,10-dimethylphenazine, 3,6-dihydroxydibenzofuran, 3,6-dihydroxydibenzothiophene, and 2,7-dihydroxycarbazole, resorcinol, substituted resorcinol compounds such as 5-methyl resorcinol, 5-ethyl resorcinol, 5-propyl resorcinol, 5-butyl resorcinol, 5-t-butyl resorcinol, 5-phenyl resorcinol, 5-cumyl resorcinol, 2,4,5,6-tetrafluoro resorcinol, 2,4,5,6-tetrabromo resorcinol, or the like; catechol; hydroquinone; substituted hydroquinones such as 2-methyl hydroquinone, 2-ethyl hydroquinone, 2-propyl hydroquinone, 2-butyl hydroquinone, 2-t-butyl hydroquinone, 2-phenyl hydroquinone, 2-cumyl hydroquinone, 2,3,5,6-tetramethyl hydroquinone, 2,3,5,6-tetra-t-butyl hydroquinone, 2,3,5,6-tetrafluoro hydroquinone, 2,3,5,6-tetrabromo hydroquinone, and the like, as well as combinations comprising at least one of the foregoing dihydroxy compounds.

Specific examples of bisphenol compounds that may be represented by formula (3) include 1,1-bis(4-hydroxyphenyl) methane, 1,1-bis(4-hydroxyphenyl) ethane, 2,2-bis(4-hydroxyphenyl) propane (also referred to as "bisphenol A" or "BPA"), 2,2-bis(4-hydroxyphenyl) butane, 2,2-bis(4-hydroxyphenyl) octane, 1,1-bis(4-hydroxyphenyl) propane, 1,1-bis(4-hydroxyphenyl) n-butane, 2,2-bis(4-hydroxy-1-methylphenyl) propane, 1,1-bis(4-hydroxy-t-butylphenyl) propane, and 1,1-bis(4-hydroxy-3-methylphenyl)cyclohexane (DMBPC). Combinations comprising at least one of the foregoing dihydroxy compounds may also be used.

The dihydroxy compounds of formula (3) may be the following formula (8): 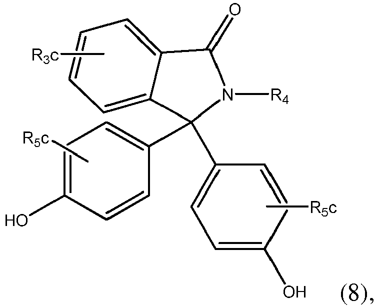 wherein R₃ and R₅ are each independently a halogen or a C₁₋₆ alkyl group, R₄ is a C₁₋₆ alkyl, phenyl, or phenyl substituted with up to five halogens or C₁₋₆ alkyl groups, and c is 0 to 4. In a specific embodiment, R₄ is a C₁₋₆ alkyl or phenyl group. In still another embodiment, R₄ is a methyl or phenyl group. In another specific embodiment, each c is 0.

The dihydroxy compounds of formula (3) may have the following formula (9) that may impart high Tgs to the first polycarbonate as a homopolycarbonate or copolycarbonate: 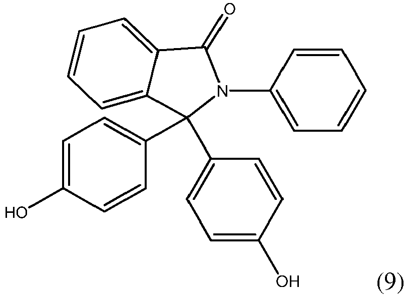 (also known as 3,3-bis(4-hydroxyphenyl)-2-phenylisoindolin-1-one (PPPBP)).

Alternatively, the dihydroxy compounds of formula (3) may be the following formula (10): 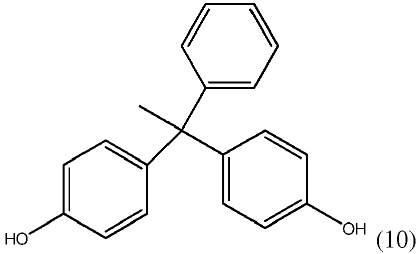 (also known as 4,4'-(1-phenylethane-1,1-diyl)diphenol (bisphenol AP) or 1,1-bis(4-hydroxyphenyl)-1-phenyl-ethane).

Alternatively, the dihydroxy compounds of formula (3) may be the following formula (11): 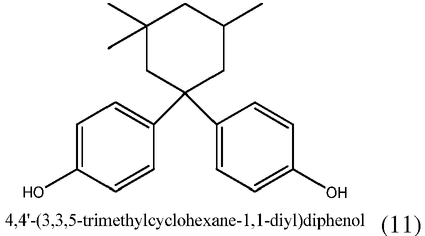 (bisphenol TMC) or 1,1-bis(4-hydroxyphenyl)-3,3,5-trimethylcyclohexane). Other dihydroxy compounds that might impart high Tgs to the first polycarbonate as a homopolycarbonate or copolycarbonate are dihydroxy compounds having adamantane units, as described in U.S. Patent No. 7,112,644 and U.S. Patent No. 3,516,968. A compound having adamantane units may have repetitive units of the following formula (12): 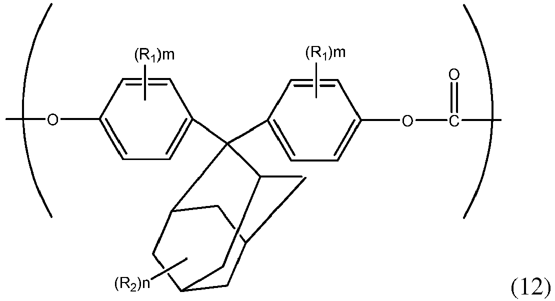 wherein R₁ represent a group selected from the group of a halogen atom, an alkyl group having 1 to 6 carbon atoms, an alkoxy group having 1 to 6 carbon atoms, an aryl group having 6 to 12 carbon atoms, an aryl-substituted alkenyl group having 7 to 13 carbon atoms and a fluoroalkyl group having 1 to 6 carbon atoms; R₂ represents a group selected from the group of a halogen atom, an alkyl group having 1 to 12 carbon atoms, an alkoxy group having 1 to 12 carbon atoms, an aryl group having 6 to 12 carbon atoms, an aryl-substituted alkenyl group having 7 to 13 carbon atoms and a fluoroalkyl group having 1 to 12 carbon atoms; m represents an integer of 0 to 4; and n represents an integer of 0 to 14.

Other dihydroxy compounds that might impart high Tgs to the first polycarbonate as a homopolycarbonate or copolycarbonate are dihydroxy compounds having fluorene-units, as described in U.S. Patent No. 7,244,804. One such fluorene-unit containing dihydroxy compound is represented by the following formula (13): 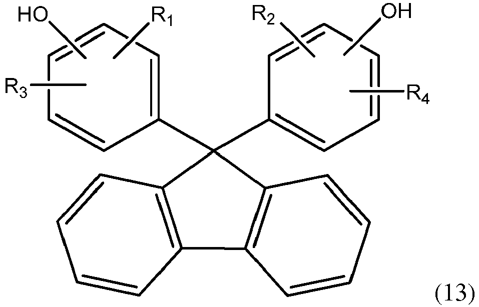 wherein R₁ to R₄ are each independently a hydrogen atom, a hydrocarbon group with 1 to 9 carbon atoms which may contain an aromatic group, or a halogen atom.

### POLYESTER POLYCARBONATES

The first polycarbonate may be a copolymer comprising different R₁ moieties in the carbonate. The copolymer may comprise other types of polymer units, such as ester units, and combinations comprising at least one of homopolycarbonates and copolycarbonates as described above in section (1) of the first polycarbonate. A specific type of copolymer may be a polyester carbonate, also known as a polyester-polycarbonate. Such copolymers further contain, in addition to recurring carbonate chain units of the formula (1) as described above, repeating units of formula (14): 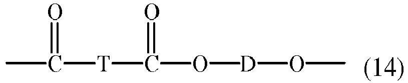 wherein O-D-O is a divalent group derived from a dihydroxy compound, and D may be, for example, one or more alkyl containing C₆-C₂₀ aromatic group(s), or one or more C₆-C₂₀ aromatic group(s), a C₂₋₁₀ alkylene group, a C₆₋₂₀ alicyclic group, a C₆₋₂₀ aromatic group or a polyoxyalkylene group in which the alkylene groups contain 2 to about 6 carbon atoms, specifically 2, 3, or 4 carbon atoms; and T divalent group derived from a dicarboxylic acid, and may be, for example, a C₂₋₁₀ alkylene group, a C₆₋₂₀ alicyclic group, a C₆₋₂₀ alkyl aromatic group, or a C₆₋₂₀ aromatic group.

In an embodiment, D may be a C₂₋₃₀ alkylene group having a straight chain, branched chain, or cyclic (including polycyclic) structure. In another embodiment, O-D-O may be derived from an aromatic dihydroxy compound of formula (3) above. In another embodiment, O-D-O may be derived from an aromatic dihydroxy compound of formula (4) above. In another embodiment, O-D-O may be derived from an aromatic dihydroxy compound of formula (7) above.

Examples of aromatic dicarboxylic acids that may be used to prepare the polyester units include isophthalic or terephthalic acid, 1,2-di(p-carboxyphenyl)ethane, 4,4'-dicarboxydiphenyl ether, 4,4'-bisbenzoic acid, and combinations comprising at least one of the foregoing acids. Acids containing fused rings can also be present, such as in 1,4-, 1,5-, or 2,6-naphthalenedicarboxylic acids. Specific dicarboxylic acids may be terephthalic acid, isophthalic acid, naphthalene dicarboxylic acid, cyclohexane dicarboxylic acid, or combinations thereof. A specific dicarboxylic acid comprises a combination of isophthalic acid and terephthalic acid wherein the weight ratio of isophthalic acid to terephthalic acid is about 91:9 to about 2:98. In another embodiment, D may be a C₂₋₆ alkylene group and T is p-phenylene, m-phenylene, naphthalene, a divalent cycloaliphatic group, or a combination thereof. This class of polyester includes the poly(alkylene terephthalates).

The molar ratio of ester units to carbonate units in the copolymers may vary broadly, for example 1:99 to 99:1, specifically 10:90 to 90:10, more specifically 25:75 to 75:25, depending on the desired properties of the final composition.

The polyester unit of a polyester-polycarbonate may be derived from the reaction of a combination of isophthalic and terephthalic diacids (or derivatives thereof) with resorcinol. In another embodiment, the polyester unit of a polyester-polycarbonate may be derived from the reaction of a combination of isophthalic acid and terephthalic acid with bisphenol-A. The polycarbonate units may be derived from bisphenol A. The polycarbonate units may be derived from resorcinol and bisphenol A in a molar ratio of resorcinol carbonate units to bisphenol A carbonate units of 1:99 to 99:1.

Useful polyesters may include aromatic polyesters, poly(alkylene esters) including poly(alkylene arylates), and poly(cycloalkylene diesters). Aromatic polyesters may have a polyester structure according to formula (14), wherein D and T are each aromatic groups as described hereinabove. In an embodiment, useful aromatic polyesters may include, for example, poly(isophthalate-terephthalate-resorcinol) esters, poly(isophthalate-terephthalate-bisphenol-A) esters, poly[(isophthalate-terephthalate-resorcinol) ester-co-(isophthalate-terephthalate-bisphenol-A)] ester, or a combination comprising at least one of these.

### ISOSORBIDE-CONTAINING POLYCARBONATE

The first polycarbonate may be a copolymer comprising homopolycarbonate units as described above in (1) and other types of polymer units such as isosorbide containing polycarbonate. The isosorbide-bisphenol isosorbide-bisphenol for making polymers may be represented by formula (15): 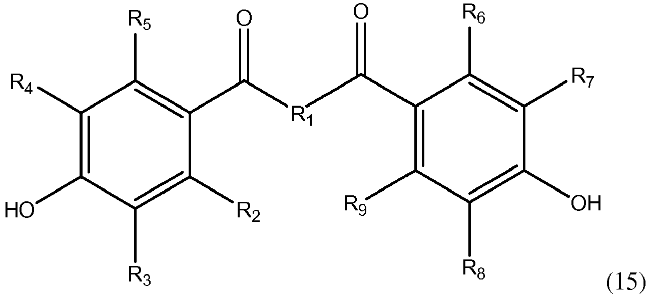 R₁ is an isosorbide unit and R₂-R₉ may be independently selected from the group consisting of a hydrogen, a halogen, a C₁-C₆ alkyl, a methoxy, an ethoxy, and an alkyl ester.

The isosorbide unit may be represented by formula (16):

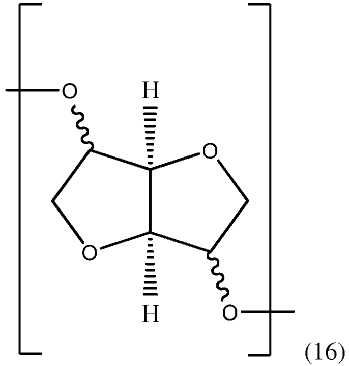

The isosorbide unit may be derived from an isosorbide, a mixture of isosorbide, a mixture of isomers of isosorbide, and/or from individual isomers of isosorbide. The stereochemistry for the isosorbide-based carbonate units of formula 17 is not particularly limited. Specifically, isosorbide has the general formula 17: 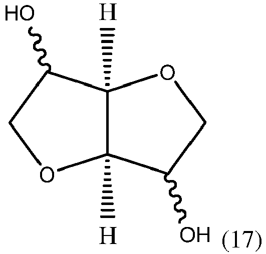 and can be a single diol isomer or mixture of diol isomers. The stereochemistry for the isosorbide of formula 17 is also not particularly limited. These diols may be prepared by the dehydration of the corresponding hexitols. Hexitols are produced commercially from the corresponding sugars (aldohexose). Aliphatic diols of formula 17 include 1,4:3,6-dianhydro-D glucitol, of formula 18; 1,4:3,6-dianhydro-D mannitol, of formula 19; and 1,4:3,6-dianhydro-L iditol, of formula 20, and any combination thereof. Isosorbides are available commercially from various chemical suppliers including Cargill, Roquette, and Shanxi.

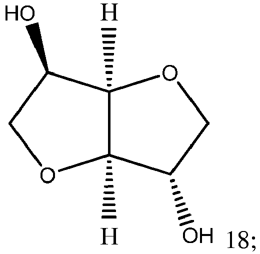

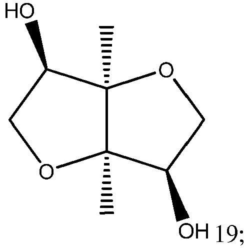

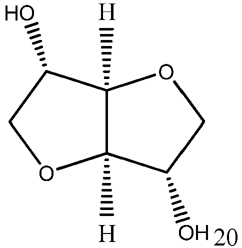

The diol of formula 17 may be desirable because it is rigid, chemically and thermally stable aliphatic diol that may be used to produce higher Tg copolymers than the other diols of formulas 17 and 18. The isosorbide-bisphenol may have a pKa of between 8 and 11.

### ISOSORBIDE-BISPHENOL (FORMULA I)-REACTING COMPOUND

The isosorbide-bisphenol may react with one or more of phosgene, a triphosgene, diacyl halide, dihaloformate, dicyanate, diester, diepoxy, diarylcarbonate, dianhydride, dicarboxylic acid, and/or diacid chloride to form a polymer represented by Formula (1) or Formula (2). The isosorbide-bisphenol reacting compound and the isosorbide-bisphenol may react under polymerization conditions to form a polymer structural unit, which can be polymerized.

### OTHER MONOMERS

The one or more isosorbide-bisphenol structural unit(s), which may be identical or different, may be polymerized with one or more other non-isosorbide-containing monomer compounds ("other monomers") (e.g. a second, third, fourth, fifth, sixth, etc., monomer compound). The other monomer(s) or compounds may be optionally selected for incorporation into the product polymer. Therefore, the polymers or polycarbonates may be isosorbide-containing copolymers.

The isosorbide-bisphenol monomers and other monomers may be randomly incorporated into the polymer. For example, the copolymer may be arranged in an alternating sequence following a statistical distribution, which is independent of the mole ratio of the structural units present in the polymer chain. A random copolymer may have a structure, which can be indicated by the presence of several block sequences of isosorbide-containing monomers (I-I) and other monomers (O-O) and alternate sequences (I-O) or (O-I), that follow a statistical distribution. In a random x:(1-x) copolymer, wherein x is the mole percent of the other monomer(s) and 1-x is the mole percent of the isosorbide-containing monomer, one can calculate the distribution of each monomer using peak area values determined by ¹³C NMR, for example.

The copolymer may have alternating copolymers with regular alternating I and O units (-I-O-I-O-I-O-I-O-), I and O units arranged in a repeating sequence (e.g. a periodic copolymer having the formula: (I-O-I-O-O-I-I-I-I-O-O-O)n)). The copolymer may be a statistical copolymer in which the sequence of monomer residues follows a statistical rule. For example, if the probability of finding a given type monomer residue at a particular point in the chain is equal to the mole fraction of that monomer residue in the chain, then the polymer may be referred to as a truly random copolymer. The copolymer may be a block copolymer that comprises two or more homopolymer subunits linked by covalent bonds (-I-I-I-I-I-O-O-O-O-O-). The union of the homopolymer subunits may require an intermediate non-repeating subunit, known as a junction block. Block copolymers with two or three distinct blocks are called diblock copolymers and triblock copolymers, respectively.

The other monomer may be a dihydroxy compound. The dihydroxy compound may be represented by formula 21: 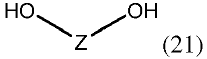 wherein Z may be an aromatic compound or an aliphatic compound.

The dihydroxy compound may be any bisphenol compound. The dihydroxy compound may be a 4,4'(3,3,5-trimethylcyclohexylidene)diphenol; a 4,4'-bis(3,5-dimethyl)diphenol, a 1,1-bis(4-hydroxy-3-methylphenyl)cyclohexane, a 1,1-bis(4'hydroxy-3'methylphenyl)cyclohexane (DMBPC), a 4,4'-1-methyl-4-(1-methyl-ethyl)-1,3-cyclohexandiyl]bisphenol (1,3 BHPM), a 4-[1-[3-(4-hydroxyphenyl)-4-methylcyclohexyl]-1-methyl-ethyl]-phenol (2,8 BHPM), a 3,8-dihydroxy-5a, 10b-diphenyl-coumarano-2', 3', 2, 3-coumarane (DCBP), a 2-phenyl-3,3-bis(4-hydroxyphenyl)heptane, a 2,4'-dihdroxydiphenylmethane, a bis(2-hydroxyphenyl)methane, a bis(4-hydroxyphenyl)methane, a bis(4-hydroxy-5-nitrophenyl)methane, a bis(4-hydroxy-2,6-dimethyl-3-methoxyphenyl)methane, a 1,1-bis(4-hydroxyphenyl)ethane, a 1,1-bis(4-hydroxy-2-chlorophenyl)ethane, a 2,2-bis(4-hydroxyphenyl)propane (BPA), a 2,2-bis(3-phenyl-4-hydroxyphenyl)propane, a 2,2-bis(4-hydroxy-3-methylphenyl)propane, a 2,2-bis(4-hydroxy-3-ethylphenyl)propane, a 2,2-bis(4-hydroxy-3-isopropylphenyl)propane, a 2, 2-bis(4-hydroxy-3,5-dimethylphenyl)propane, a 2,2-bis(3,5,3',5'-tetrachloro-4,4'-dihydroxyphenyl)propane, a bis(4-hydroxyphenyl)cyclohexymethane, a 2,2-bis(4-hydroxyphenyl)-1-phenylpropane, a 2,4-dihydroxyphenyl sulfone, 4,4'-dihydroxydiphenylsulfone (BPS), bis(4-hydroxyphenyl)methane (bisphenol F, BPF), a 4,4'dihydroxy-1,1-biphenyl, 2,6-dihydroxy naphthalene, a hydroquinone, a resorcinol, a C1-3 alkyl-substituted resorcinol, a 3-(4-hydroxyphenyl)-1,1,3-trimethylindan-5-ol, a 1-(4-hydroxyphenyl)-1,3,3-trimethylindan-5-ol, or a 2,2,2',2'-tetrahydro-3,3,3',3'-tetramethyl-1,1'-spirobi[1H-indene]-6, 6'-diol. The dihydroxy compound may be 1,3-propylene glycol, 1,2-propylene glycol, 2,2-diethyl-1,3-propanediol, 2,2-dimethyl-1,3-propanediol, 2-ethyl-2-butyl-1,3-polypropanediol, 2-ethyl-2-isobutyl-1,3-propanediol, 1,3-terbutanediol, 1,4-butanediol, 1,5-pentanediol, 1,6-hexanediol, 2,2,4-tnmethyl-1,6-hexanediol, 1,3-cyclohexanedimethanol, 1,4-cyclohexanedimethanol, or a 2,2,4,4-tetramethyl-1,3-cyclobutanediol.

### ISOSORBIDE-CONTAINING POLYMERS

The isosorbide-bisphenol polycarbonate may be polymerized to form a homopolymer, the isosorbide-bisphenol may be polymerized with one or more other isosorbide-bisphenol structural units and/or it may be polymerized with one or more other non-isosorbide-containing monomers to form a copolymer. The homopolymers may be manufactured by selecting and reacting a single polymerizable isosorbide-containing monomer. Copolymers can be manufactured by selecting and reacting two or more different polymerizable monomers, wherein at least one monomer is an isosorbide-containing monomer, such as isosorbide bisphenol-containing structural unit. The isosorbide-containing polymer may be a polyurethane, a polyurea, a polyarylate, a polyester, a polyether, a polyetheramide, a polyformal, and a polyphenylene ether.

The polymer may have a weight average molecular weight (Mw) of 3,000 to 150,000, of 10,000 to 125,000, of 50,000 to 100,000, or of 75,000 to 90,000, and a glass transition temperature (Tg) of 80°C to 300°C, of 100°C to 275°C, of 125°C to 250°C, of 150°C to 225°C, or of 175°C to 200°C. The polymer may have a high mechanical strength. The elastic modulus may be 2.0 GPa (GigaPascal) to 6 Gpa or 3.0 GPa to 5 Gpa, as determined by, for example, an instrumented indentation technique. The polymer may have a hardness of 150 MPa to 350 MPa, of 200 MPa to 325 MPa, of 225 MPa to 300 MPa, or of 250 MPa to 275 MPa. The polymer may have a Fries product concentration of less than 500 parts per million (ppm), less than 400 ppm, less than 300 ppm, less than 200 ppm, or less than 100 ppm. The Fries product concentration may be determined by high performance liquid chromatography (HPLC). The polymer may exhibit lower refractive index (RI), higher scratch resistance and/or lower oxygen permeability compared to conventional homo- or copolymers. The polymer may be optically active.

The herein described polymers may be blended with other polymers, such as thermoplastics and thermosets. The herein described polymers may be blended with polycarbonates including, but not limited to, conventional BPA polycarbonate and polycarbonates made using monomers such as resorcinol, 1,1-bis(4'-hydroxy-3'methyl phenyl)cyclohexane and 4,4'[1-methyl-4-91-methylethyl)-1,3-cyclohexandiyl]bisphenol. The herein described polymers may be blended with an aliphatic polyester. The aliphatic polyester may be polycyclohexylidene cyclohexanedicarboxylate (PCCD).

### FUNCTIONAL CHARACTERISTICS OF THE FIRST POLYCARBONATE

The first polycarbonate may have a glass transition temperature (Tg) of greater than 170°C, 175°C, 180°C, 185°C, 190°C, 200°C, 210°C, 220°C, 230°C, 240°C, 250°C, 260°C, 270°C, 280°C, 290°C, or 300°C, as measured using a differential scanning calorimetry method.

The first polycarbonate may have a percent haze value of less than or equal to: 10.0 %, 8.0 %, 6.0 %, 5.0 %, 4.0 %, 3.0 %, 2.0 %, 1.0 %, 1.5 %, or 0.5 %, as measured at a 3.2 thickness according to ASTM D 1003-07. The first polycarbonate may be measured at a 0.125 inch thickness. The first polycarbonate may have a light transmittance greater than or equal to: 50 %, 60 %, 65 %, 70 %, 75 %, 80 %, 85%, 90%, or 95%, as measured at 3.2 millimeters thickness according to ASTM D 1003-07. The first polycarbonate exhibits a heat resistance higher than the levels achieved with BPA homopolymer as described in the Examples. In an embodiment, the first polycarbonate must have a glass transition temperature of greater than 170°C.

### SECOND POLYCARBONATE--SILOXANE

Described herein is the second polycarbonate of the polycarbonate blend composition. The second polycarbonate is a polycarbonate polysiloxane copolymer. The polycarbonate polysiloxane copolymer has a polysiloxane structural unit and a polycarbonate structural unit. The polycarbonate structural unit of the polycarbonate polysiloxane copolymer may be derived from carbonate units of formula (1) as described above. The carbonate units may be derived from one or more dihydroxy monomers of formula (3) including bisphenol compound of formula (4), both as described and incorporated herein from above. The dihydroxy compound may be bisphenol-A.

The polysiloxane structural unit may be derived from a siloxane-containing dihydroxy compounds (also referred to herein as "hydroxyaryl end-capped polysiloxanes") that contains diorganosiloxane units blocks of formula (22): 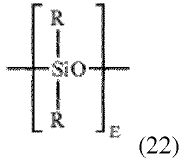 wherein each occurrence of R is same or different, and is a C₁₋₁₃ monovalent organic group. For example, R can be a C₁-C₁₃ alkyl group, C₁- C₁₃ alkoxy group, C₂- C₁₃ alkenyl group, C₂-C₁₃ alkenyloxy group, C₃-C₆ cycloalkyl group, C₃-C₆ cycloalkoxy group, C₆-C₁₄ aryl group, C₆-C₁₀ aryloxy group, C₇- C₁₃ aralkyl group, C₇- C₁₃ aralkoxy group, C₇- C₁₃ alkylaryl group, or C₇- C₁₃ alkylaryloxy group. The foregoing groups can be fully or partially halogenated with fluorine, chlorine, bromine, or iodine, or a combination thereof. In an embodiment, where a transparent polycarbonate is desired, R does not contain any halogen. Combinations of the foregoing R groups can be used in the same polycarbonate.

The value of E in formula (22) can vary widely depending on the type and relative amount of each of the different units in the polycarbonate, the desired properties of the polycarbonate, and like considerations. Generally, E can have an average value of 20 to 200, 20 to 100, 30 to 100, 30 to 75, and 20 to 75. In an embodiment, E has an average value of about 20 to about 70, and about 20 to about 100. Where E is of a lower value, e.g., less than about 40, it can be desirable to use a relatively larger amount of the units containing the polysiloxane. Conversely, where E is of a higher value, e.g., greater than 40, it can be desirable to use a relatively lower amount of the units containing the polysiloxane.

In an embodiment, the polysiloxane blocks are provided by repeating structural units of formula (23): 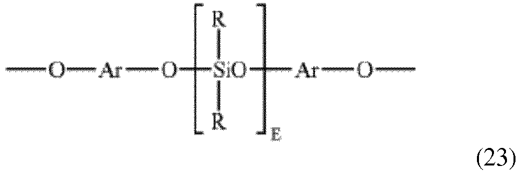 wherein E is as defined above; each R is the same or different, and is as defined above; and each Ar is the same or different, and Ar is one or more C₆-C₃₀ aromatic group(s), or one or more alkyl containing C₆-C₃₀ aromatic group(s), wherein the bonds are directly connected to an aromatic moiety. -O-Ar-O- groups in formula (23) can be, for example, a C₆-C₃₀ dihydroxyaromatic compound. Combinations comprising at least one of the foregoing dihydroxyaromatic compounds can also be used. Exemplary dihydroxyaromatic compounds are 1,1-bis(4-hydroxyphenyl) methane, 1,1-bis(4-hydroxyphenyl)ethane, 2,2-bis(4-hydroxyphenyl)propane, 2,2-bis(4-hydroxyphenyl)butane, 2,2-bis(4-hydroxyphenyl)octane, 1,1-bis(4-hydroxyphenyl)propane, 1,1-bis(4-hydroxyphenyl)n-butane, 2,2-bis(4-hydroxy-1-methylphenyl)propane, 1,1-bis(4-hydroxyphenyl)cyclohexane, bis(4-hydroxyphenyl sulfide), 1,1-bis(4-hydroxy-3-methylphenyl)cyclohexane, and 1,1-bis(4-hydroxy-t-butylphenyl)propane, or a combination comprising at least one of the foregoing dihydroxy compounds.

Polycarbonates comprising such units can be derived from the corresponding dihydroxy compound of formula (24): 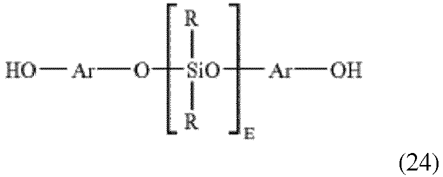 wherein Ar and E are as described above. Compounds of formula (24) can be obtained by the reaction of a dihydroxyaromatic compound with, for example, an alpha, omega-bis-acetoxy-polydiorganosiloxane oligomer under phase transfer conditions. Compounds of formula (24) can also be obtained from the condensation product of a dihydroxyaromatic compound, with, for example, an alpha, omega bis-chloro-polydimethylsiloxane oligomer in the presence of an acid scavenger.

In a specific embodiment, Ar from formula (24) is derived from resorcinol, and the polydiorganosiloxane repeating units are a dihydroxy aromatic compound of formula (25): 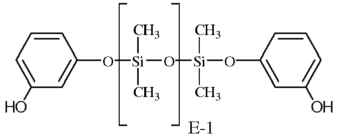 or, wherein Ar is derived from bisphenol-A, and the polydiorganosiloxane repeating units are a dihydroxy aromatic compound of formula (26): 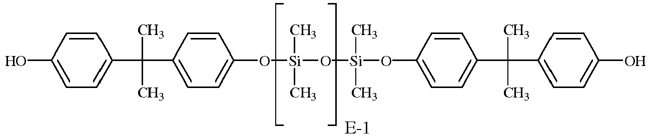 wherein E has an average value of between 20 and 200.

In another embodiment, polydiorganosiloxane blocks comprises units of formula (27): 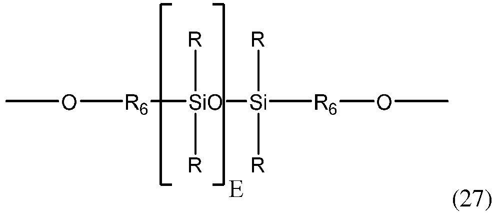 wherein R and E are as described above, and each R₆ is independently a divalent C₁-C₃₀ organic group such as a C₁-C₃₀ alkyl, C₆-C₃₀ aryl or C₇-C₃₀ alkylaryl. The polysiloxane blocks corresponding to formula (27) are derived from the corresponding dihydroxy compound of formula (28): 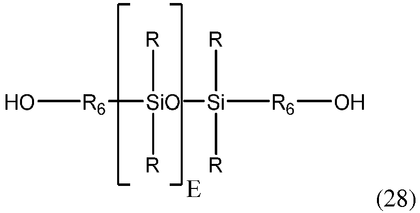 wherein R and E and R₆ are as described for formula (27).

In a specific embodiment, the second polycarbonate comprises carbonate units derived from a polysiloxane monomer having the structure (29): 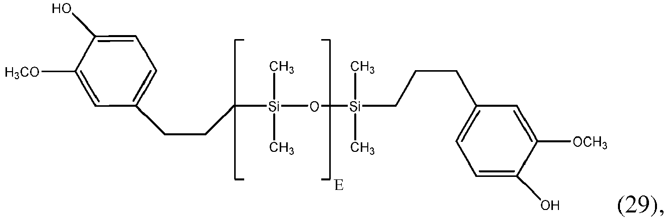 wherein E is an average value of between 20 and 200.

In another specific embodiment, the second polycarbonate comprises carbonate units derived from a polysiloxane monomer having the structure (30): 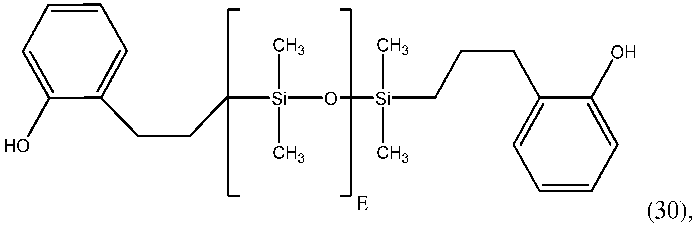 wherein E is an average value of between 20 and 200, 20 to 100, or 20 and 70.

In a specific embodiment, the polydiorganosiloxane blocks are provided by repeating structural units of formula (31) 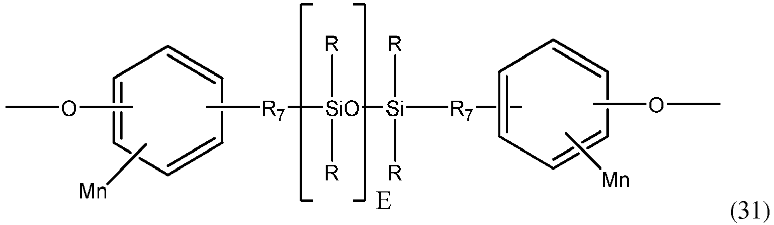 wherein R and E are as defined above. R₇ in formula (31) is a divalent C₂-C₈ aliphatic group. Each M in formula (31) can be the same or different, and is a halogen, cyano, nitro, C₁-C₈ alkylthio, C₁-C₈ alkyl, C₁-C₈ alkoxy, C₂-C₈ alkenyl, C₂-C₈ alkenyloxy group, C₃-C₈ cycloalkyl, C₃-C₈ cycloalkoxy, C₆-C₁₀ aryl, C₆-C₁₀ aryloxy, C₇-C₁₂ aralkyl, C₇- C₁₂ aralkoxy, C₇- C₁₂ alkylaryl, or C₇- C₁₂ alkylaryloxy, wherein each n is independently 0, 1, 2, 3, or 4.

In one embodiment, M of formula (31) is bromo or chloro, an alkyl group such as methyl, ethyl, or propyl, an alkoxy group such as methoxy, ethoxy, or propoxy, or an aryl group such as phenyl, chlorophenyl, or tolyl, n= 0 to 4; R₇ is a dimethylene, trimethylene or tetramethylene group; and R is a C₁₋₈ alkyl, haloalkyl such as trifluoropropyl, cyanoalkyl, or aryl such as phenyl, chlorophenyl or tolyl. In another embodiment, R is methyl, or a combination of methyl and trifluoropropyl, or a combination of methyl and phenyl. In still another embodiment, M is methoxy, n is one, R₇ is a divalent C₁-C₃ aliphatic group, and R is methyl.

Polysiloxane-polycarbonates comprising units of formula (31) can be derived from the corresponding dihydroxy polydiorganosiloxane (32): 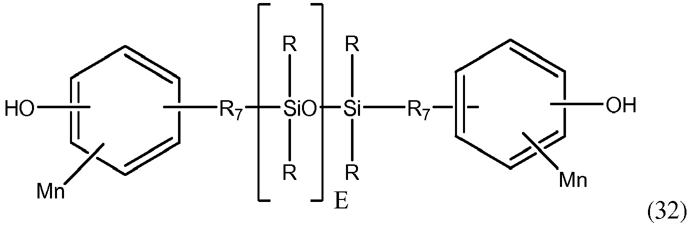 wherein each of R, E, M, R₇, and n are as described above. Such dihydroxy polysiloxanes can be made by effecting a platinum-catalyzed addition between a siloxane hydride of formula (33): 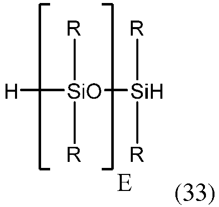 wherein R and E are as previously defined, and an aliphatically unsaturated monohydric phenol. Exemplary aliphatically unsaturated monohydric phenols included, for example, eugenol, 2-allylphenol, 4-allyl-2-methylphenol, 4-allyl-2-phenylphenol, 4-allyl-2-bromophenol, 4-allyl-2-t-butoxyphenol, 4-phenyl-2-phenylphenol, 2-methyl-4-propylphenol, 2-allyl-4,6-dimethylphenol, 2-allyl-4-bromo-6-methylphenol, 2-allyl-6-methoxy-4-methylphenol, 4-allylphenol, and 2-allyl-4,6-dimethylphenol. Combinations comprising at least one of the foregoing can also be used.

### POLYSILOXANE-POLYCARBONATE

In an embodiment, the polysiloxane-polycarbonate can comprise polysiloxane blocks, and are derived from the corresponding dihydroxy polysiloxane compound, present in an amount of: 0.15 wt% to 30 wt%, 0.5 wt% to 25 wt%, 1 to 20 wt%, 5 wt% to 7 wt%, 4 wt% to 6 wt%, or 4 wt% to 8 wt% based on the total wt of the polysiloxane polycarbonate. In a specific embodiment, the % wt amount of siloxane may be 1 to 10 wt%, 2 to 9 wt%, or 3 to 8 wt%, based on the total wt of polysiloxane polycarbonate.

In an embodiment, the carbonate units comprising the polysiloxane-polycarbonate are present in an amount of 70 wt% to 99.85 wt%, specifically 75 wt% to 99.5 wt%, and more specifically 80 wt% to 99 wt% based on the total wt of polysiloxane polycarbonate. In a specific embodiment, the carbonate units are present in an amount of 90 wt% to 99 wt%, specifically 91 wt% to 98 wt%, and more specifically 92 wt% to 97 wt%, based on the total wt of polysiloxane polycarbonate.

The polysiloxane-polycarbonate may be a blend of 4,4'-dihydroxy-2,2-diphenylpropane) with a block copolymer of polycarbonate and eugenol capped polydimethylsilioxane (PDMS) having the structure as shown below in formula (34): 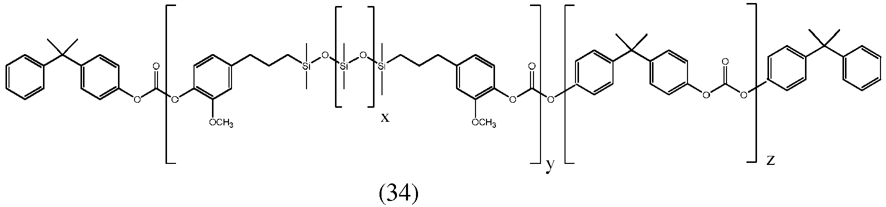 where x, y and z are varied to achieve various properties.

### FUNCTIONAL CHARACTERISTICS OF THE SECOND POLYCARBONATE

The second polycarbonate may have a percent haze value of less than or equal to 10.0 %, 8.0 %, 6.0 %, 5.0 %, 4.0 %, 3.0 %, 2.0 %, 1.0 %, 1.5 %, or 0.5 % as measured at 3.2 millimeters thickness, according to ASTM D 1003-07. The second polycarbonate may have a percent haze value of less than or equal to 3.0 % as measured at 3.2 millimeters thickness, according to ASTM D 1003-07. The second polycarbonate may exhibit 100 % ductility at -20°C as measured using the method of ASTM D 256-10. The second polycarbonate may be measured at a 0.125 inch thickness.

### METHOD OF MAKING FIRST AND SECOND POLYCARBONATES

Polycarbonates can be manufactured by processes such as interfacial polymerization and melt polymerization. High Tg copolycarbonates are generally manufactured using interfacial polymerization. Although the reaction conditions for interfacial polymerization can vary, an exemplary process generally involves dissolving or dispersing a dihydric phenol reactant in aqueous caustic soda or potash, adding the resulting mixture to a water-immiscible solvent medium, and contacting the reactants with a carbonate precursor in the presence of a catalyst such as, for example, a tertiary amine or a phase transfer catalyst, under controlled pH conditions, e.g., 8 to 10. The most commonly used water immiscible solvents include methylene chloride, 1,2-dichloroethane, chlorobenzene, toluene, and the like.

Exemplary carbonate precursors include, for example, a carbonyl halide such as carbonyl bromide or carbonyl chloride, or a haloformate such as a bishaloformates of a dihydric phenol (e.g., the bischloroformates of bisphenol A, hydroquinone, or the like) or a glycol (e.g., the bishaloformate of ethylene glycol, neopentyl glycol, polyethylene glycol, or the like). Combinations comprising at least one of the foregoing types of carbonate precursors can also be used. In an exemplary embodiment, an interfacial polymerization reaction to form carbonate linkages uses phosgene as a carbonate precursor, and is referred to as a phosgenation reaction.

Among tertiary amines that can be used are aliphatic tertiary amines such as triethylamine, tributylamine, cycloaliphatic amines such as N,N-diethyl-cyclohexylamine and aromatic tertiary amines such as N,N-dimethylaniline.

Among the phase transfer catalysts that can be used are catalysts of the formula (R³)₄Q⁺X, wherein each R³ is the same or different, and is a C₁₋₁₀ alkyl group; Q is a nitrogen or phosphorus atom; and X is a halogen atom or a C₁₋₈ alkoxy group or C₆₋₁₈ aryloxy group. Exemplary phase transfer catalysts include, for example, [CH₃(CH₂)₃]₄NX, [CH₃(CH₂)₃]₄PX, [CH₃(CH₂)₅]₄NX, [CH₃(CH₂)₆]₄NX, [CH₃(CH₂)₄]₄NX, CH₃[CH₃(CH₂)₃]₃NX, and CH₃[CH₃(CH₂)₂]₃NX, wherein X is Cl⁻, Br⁻, a C₁₋₈ alkoxy group or a C₆₋₁₈ aryloxy group. An effective amount of a phase transfer catalyst can be 0.1 to 10 wt% based on the wt of bisphenol in the phosgenation mixture. In another embodiment, an effective amount of phase transfer catalyst can be 0.5 to 2 wt% based on the wt of bisphenol in the phosgenation mixture.

The polycarbonate may be prepared by a melt polymerization process. Generally, in the melt polymerization process, polycarbonates are prepared by co-reacting, in a molten state, the dihydroxy reactant(s) (i.e. aliphatic diol and/or aliphatic diacid, and any additional dihydroxy compound) and a diaryl carbonate ester, such as diphenyl carbonate, or more specifically in an embodiment, an activated carbonate such as bis(methyl salicyl) carbonate, in the presence of a transesterification catalyst. The reaction may be carried out in typical polymerization equipment, such as one or more continuously stirred reactors (CSTR's), plug flow reactors, wire wetting fall polymerizers, free fall polymerizers, wiped film polymerizers, BANBURY* mixers, single or twin screw extruders, or combinations of the foregoing. Volatile monohydric phenol is removed from the molten reactants by distillation and the polymer is isolated as a molten residue. A specifically useful melt process for making polycarbonates uses a diaryl carbonate ester having electron-withdrawing substituents on the aryls. Examples of specifically useful diaryl carbonate esters with electron withdrawing substituents include bis(4-nitrophenyl)carbonate, bis(2-chlorophenyl)carbonate, bis(4-chlorophenyl)carbonate, bis(methyl salicyl)carbonate, bis(4-methylcarboxylphenyl)carbonate, bis(2-acetylphenyl)carboxylate, bis(4-acetylphenyl)carboxylate, or a combination comprising at least one of the foregoing.

### END CAPPING AGENT

All types of polycarbonate end groups are contemplated as being useful in the high and low Tg polycarbonates, provided that such end groups do not significantly adversely affect desired properties of the compositions. An end-capping agent (also referred to as a chain-stopper) can be used to limit molecular weight growth rate, and so control molecular weight of the first and/or second polycarbonate. Exemplary chain-stoppers include certain monophenolic compounds (i.e., phenyl compounds having a single free hydroxy group), monocarboxylic acid chlorides, and/or monochloroformates. Phenolic chain-stoppers are exemplified by phenol and C₁-C₂₂ alkyl-substituted phenols such as p-cumylphenol, resorcinol monobenzoate, and p- and tertiary-butyl phenol, cresol, and monoethers of diphenols, such as p-methoxyphenol. Alkyl-substituted phenols with branched chain alkyl substituents having 8 to 9 carbon atoms can be specifically mentioned.

Endgroups can derive from the carbonyl source (i.e., the diaryl carbonate), from selection of monomer ratios, incomplete polymerization, chain scission, and the like, as well as any added end-capping groups, and can include derivatizable functional groups such as hydroxy groups, carboxylic acid groups, or the like. In an embodiment, the endgroup of a polycarbonate can comprise a structural unit derived from a diaryl carbonate, where the structural unit can be an endgroup. In a further embodiment, the endgroup is derived from an activated carbonate. Such endgroups can derive from the transesterification reaction of the alkyl ester of an appropriately substituted activated carbonate, with a hydroxy group at the end of a polycarbonate polymer chain, under conditions in which the hydroxy group reacts with the ester carbonyl from the activated carbonate, instead of with the carbonate carbonyl of the activated carbonate. In this way, structural units derived from ester containing compounds or substructures derived from the activated carbonate and present in the melt polymerization reaction can form ester endgroups. In an embodiment, the ester endgroup derived from a salicylic ester can be a residue of bis(methyl salicyl) carbonate (BMSC) or other substituted or unsubstituted bis(alkyl salicyl) carbonate such as bis(ethyl salicyl) carbonate, bis(propyl salicyl) carbonate, bis(phenyl salicyl) carbonate, bis(benzyl salicyl) carbonate, or the like. In a specific embodiment, where BMSC is used as the activated carbonyl source, the endgroup is derived from and is a residue of BMSC, and is an ester endgroup derived from a salicylic acid ester, having the structure of formula (35):

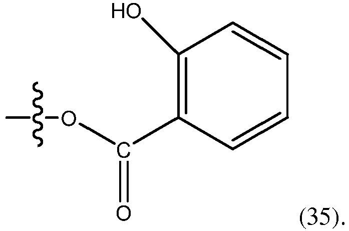

The reactants for the polymerization reaction using an activated aromatic carbonate can be charged into a reactor either in the solid form or in the molten form. Initial charging of reactants into a reactor and subsequent mixing of these materials under reactive conditions for polymerization may be conducted in an inert gas atmosphere such as a nitrogen atmosphere. The charging of one or more reactant may also be done at a later stage of the polymerization reaction. Mixing of the reaction mixture is accomplished by any methods known in the art, such as by stirring. Reactive conditions include time, temperature, pressure and other factors that affect polymerization of the reactants. Typically the activated aromatic carbonate is added at a mole ratio of 0.8 to 1.3, and more preferably 0.9 to 1.3, and all sub-ranges there between, relative to the total moles of monomer unit compounds. In a specific embodiment, the molar ratio of activated aromatic carbonate to monomer unit compounds is 1.013 to 1.29, specifically 1.015 to 1.028. In another specific embodiment, the activated aromatic carbonate is BMSC.

### BRANCHING GROUPS

Polycarbonates with branching groups are also contemplated as being useful, provided that such branching does not significantly adversely affect desired properties of the polycarbonate. Branched polycarbonate blocks can be prepared by adding a branching agent during polymerization. These branching agents include polyfunctional organic compounds containing at least three functional groups selected from hydroxyl, carboxyl, carboxylic anhydride, haloformyl, and mixtures of the foregoing functional groups. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl)alpha, alpha-dimethyl benzyl)phenol), 4-chloroformyl phthalic anhydride, trimesic acid, and benzophenone tetracarboxylic acid. The branching agents can be added at a level of about 0.05 to about 2.0 wt%. Mixtures comprising linear polycarbonates and branched polycarbonates can be used.

### ANTI-DRIP AGENT

The polycarbonate composition comprises an anti-drip agent. The anti-drip agent is comprised of a perfluorinated polyolefin in a fibrous form, and a second polymer, which is styrene-acrylonitile. The anti-drip agent includes perfluorinated polyolefin particles totally or partially encapsulated by the second polymer or copolymer obtained by polymerization of monomers or mixtures of monomers, which can be emulsion-polymerized by a radical route. The anti-drip agent is essentially characterized by a morphology different from that of perfluorinated polyolefin-based polymer blends obtained by co-precipitation because it is virtually free of perfluorinated polyolefin filaments forming a network connecting the particles of the anti-drip agent together, in particular, for relatively perfluorinated polyolefin contents.

The anti-drip agent exhibits a bulk density of from 240 to 560 kg per cubic meter 15 to 35 pounds per cubic foot). The anti-drip agent may be a powder that will pass through a 6, 7, 8, 9, 10, 11, 12, 13, 14, 15, 16, 17, 18, 19, or 20 mesh screen. The anti-drip agent may have a specific gravity of at least: 1.45, 1.46, 1.47, 1.48, 1.49, 1.50, 1.51, 1.52, 1.53, 1.54, 1.55, 1.56, 1.57, 1.58, 1.59, 1.60, 1.61, 1.62, 1.63, 1.64, or 1.65 g/cc according to ASTM D 792-10. The anti-drip agent may have a particle size of at least: 200, 220, 240, 260, 280, 300, 320, 340, 360, 380, 400, 420, 440, 460, 480, or 500, nanometers (nm). The anti-drip agent may be used in amounts of at least: 0.10, 0.11, 0.12, 0.13, 0.14, 0.15, 0.16, 0.17, 0.18, 0.19, 0.20, 0.21, 0.22, and up to 0.3% by wt, based on 100 parts by wt of
total blend composition.

### PERFLUORINATED POLYOLEFIN PARTICLES

The anti-drip agent may be perfluorinated polyolefin particles that are totally or partially encapsulated by a second polymer or copolymer in an aqueous styrene-acrylonitrile emulsion.

Perfluorinated polyolefin particles may include homopolymers and copolymers that comprise repeating units derived from one or more fluorinated α-olefin monomers. Suitable fluorinated α-olefin monomers may include fluoroethylenes, such as CF₂=CF₂, CHF=CF₂, CH₂=CF₂, CH₂=CHF, CClF=CF₂, CCl₂=CF₂, CClF=CClF, CHF=CCl₂, CH₂=CClF, and CCl₂=CClF; and fluoropropylenes, such as CF₃, CF=CF₂, CF₃CF=CHF, CF₃CH=CF₂, CF₃ CH=CH₂, CF₃CF=CHF, CHF₂CH=CHF and CF₃CH=CH₂. The fluorinated α-olefin monomer may be a perfluorinated polyolefin.

The perfluorinated polyolefin may be one or more units of tetrafluoroethylene (CF₂ =CF₂), chlorotrifloroethylene (CClF=CF₂), vinylidene fluoride (CH₂ =CF₂) and hexafluoropropylene (CF₂ =CFCF₃). Suitable fluoropolymers and methods for making such fluoropolymers are known, see, e.g., U.S. Pat. Nos. 3,671,487, 3,723,373 and 3,383,092. The perfluorinated polyolefin may be available from a number of chemical companies, including Solvay Chemicals, Inc. and DuPont

The perfluorinated polyolefin may include poly(tetra-fluoroethylene) or poly(hexafluoroethylene). The perfluorinated polyolefin copolymers may comprise repeating units derived from two or more fluorinated α-olefin copolymers, such as poly(tetrafluoroethylene-hexafluoroethylene), and copolymers comprising repeating units derived from one or more fluorinated monomers and one or more non-fluorinated monoethylenically unsaturated monomers that are copolymerizable with the fluorinated monomers, such as poly(tetrafluoroethylene-ethylene-propylene) copolymers. Suitable non-fluorinated monoethylenically unsaturated monomers include α-olefin monomers, such as ethylene, propylene, butene, (meth)acrylate monomers, methyl methacrylate, butyl acrylate, vinyl ethers, cyclohexyl vinyl ether, ethyl vinyl ether or n-butyl vinyl ether, vinyl esters, vinyl acetate, or vinyl versatate.

The perfluorinated polyolefin may be a poly(tetrafluoroethylene) homopolymer ("PTFE"). As a tetrafluoroethylene polymerizes, it is possible to use, poly(tetrafluoroethylene), tetrafluoro-ethylene-hexafluoroethylene copolymers, and copolymers of tetrafluoroethylene with small quantities of copolymerizable ethylenically unsaturated monomers. These polymers are known and are described, inter alia, in "Vinyl and related polymers", Schildknecht, John Wiley & Sons, Inc., New York, 1952, pages 484-494, and "Fluoropolymers" Woll, Wiley-Interscience, John Wiley & Sons, Inc., New York, 1972. PTFE may be available from a number of chemical companies, including Solvay Chemicals, Inc. and DuPont.

The tetrafluoroethylene polymerizate latex comprises 20 to 80% by weight of solids, and the particle size of this latex is between 0.05 and 20µm (measured by laser diffraction), or between 0.1 and 1 micrometers (µm).

### SECOND POLYMER OF THE ANTI-DRIP AGENT

The anti-drip agent comprises second polymers and/or copolymers for encapsulating the perfluorinated polyolefin, such as PTFE. The second polymer may be any polymer or copolymer obtained from monomers or mixtures of monomers, which can be emulsion-polymerized, in particular, by a radical route.

Among the second polymers which are used as encapsulation polymers, the second polymer may be styrene-acrylonitrile or α-methylstyrene-acrylonitrile copolymers.

The second polymer may comprise a copolymer of repeating units derived from styrene and acrylonitrile. The copolymer may comprise a unit derived styrene with the formula of (36) 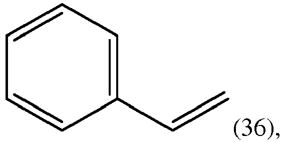 and a unit derived from acrylonitrile with the formula (36):

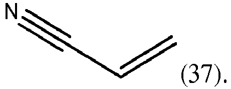

The second polymer may comprise from 60 to 90 wt% repeating units derived from styrene and from 10 to 40 wt% repeating units derived from acrylonitrile.

### METHOD OF MAKING

The anti-drip agent may be prepared by emulsion polymerization, such as by radical route, of a monomer or a mixture of monomers in the presence of a perfluorinated polyolefin, such as polytetrafluoroethylene latex. Various emulsion-polymerization processes may be used to produce the encapsulation polymer, for example, a discontinuous, semi-continuous or continuous emulsion. The term emulsion used herein denotes an emulsion alone or an emulsion-suspension. The polymerizate latex, including groups of TFE derivatives, may be introduced into the reaction medium for polymerizing the encapsulation polymer or copolymer right from the start, that is, before any polymerization has begun, or during the polymerization, generally before 90 % by wt or more of the monomers have been polymerized or copolymerized.

Emulsion polymerization by radical route is a well-known process. The radical polymerization is described, inter alia, in the work "Chemie macromoleculaire [Macromolecular chemistry]", volume 1, chapter III, by G. CHAMPETIER, HERMANN. Once the polymerization of the encapsulation polymer has been accomplished, the next step is coagulation and drying, in order to obtain a powder of polymer blend which flows freely, does not have a tendency to block and is substantially free of tetrafluoroethylene polymerizate filaments forming a network connecting the particles of the blend together.

### METHOD OF MAKING T-SAN AND GRANULAR PTFE

The anti-drip agent may be a fibril forming fluoropolymer, such as polytetrafluoroethylene (PTFE). The anti-drip agent is encapsulated by a rigid copolymer as described above, for example, styrene-acrylonitrile copolymer (SAN). PTFE encapsulated in SAN is known as T-SAN. As generally described above, T-SAN is formed by combining PTFE aqueous latex with stryrene and acrylonitrile monomers, and then conducting emulsion polymerization of the stryrene and acrylonitrile in the presence of the PTFE latex by a radical route resulting in encapsulation or partial encapsulation of the PTFE particles within the SAN polymer matrix. The PTFE may be processed into granular powders by compressing them into a desired shape and heating them at temperatures above their melting point to consolidate the powder. The granulated PTFE may be from DuPont as Zonyl MP1300 polytetrafluoroethylene. The compressed PTFE remains fibrous while encapsulated in the T-SAN. Encapsulation of PTFE involves little chemical bonding between PTFE and SAN. The method is described in U.S. Patent No. 5,804,654.

Powders of T-SAN flow much more easily than the powder obtained by coagulation. The method of emulsion polymerization to synthesize T-SAN allows T-SAN to have a considerably lower tendency than the powders obtained by coagulation of a latex mixture, in particular for high PTFE contents. The use of encapsulated tetrafluoroethylone-polymerizate-based blends makes it possible to obtain a high tetrafluoroethylene polymerizate content in a master batch (for example, greater than 40 %), which is virtually impossible to obtain using other ways of preparing the master batch (for example, by co-coagulation of polytetrafluoroethylene latex with a latex of the polymer support).

### USE OF T-SAN

T-SAN is easily dispersible and compatible with the matrix, the very fine particles of tetrafluoroethylene polymerizates being uniformly dispersed, which results in excellent surface appearance of the injection-molded or extrusion-moulded parts while still keeping the other excellent properties of the composition. T-SAN can provide significant advantages over PTFE, in that T-SAN can be more readily dispersed in the composition. An exemplary anti-drip agent T-SAN can comprise 50 wt% PTFE and 50 wt% SAN, based on the total wt of the encapsulated fluoropolymer. The SAN can comprise, for example, 75 wt% styrene and 25 wt% acrylonitrile based on the total wt of the copolymer. The T-SAN may be greater than 0.1 wt% and less than 0.3 wt% of the total blend composition. T-SAN is used as an anti-drip agent.

The use of T-SAN does not adversely affect the impact strength, in particular the multiaxial impact strength, and the Izod impact strength, even with high levels of tetrafluoroethylene polymerizate (for example, 60%).

### FLAME RETARDANT ADDITIVE

The polycarbonate composition comprises a flame retardant additive. The flame retardant additive may be flame retardant salts, such as alkali metal salts of perfluorinated C₁₋₁₆ alkyl sulfonates, such as potassium perfluorobutane sulfonate (Rimar salt), potassium perfluoroctane sulfonate, tetraethylammonium perfluorohexane sulfonate, potassium diphenylsulfone sulfonate (KSS), and the like, sodium benzene sulfonate, sodium toluene sulfonate (NATS) and the like; and salts formed by reacting, for example, an alkali metal or alkaline earth metal (for example, lithium, sodium, potassium, magnesium, calcium and barium salts) and an inorganic acid complex salt, for example, an oxo-anion, such as alkali metal and alkaline-earth metal salts of carbonic acid, such as Na₂CO₃, K₂CO₃, MgCO₃, CaCO₃, and BaCO₃ or fluoro-anion complex such as Li₃AlF₆, BaSiF₆, KBF₄, K₃AlF₆, KAlF₄, K₂SiF₆, and/or Na₃AlF₆ or the like. Rimar salt and KSS and NATS, alone or in combination with other flame retardants, are particularly useful in the blend composition.

The flame retardants may be selected from at least one of the following: alkali metal salts of perfluorinated C₁₋₁₆ alkyl sulfonates; potassium perfluorobutane sulfonate; potassium perfluoroctane sulfonate; tetraethylammonium perfluorohexane sulfonate; and potassium diphenylsulfone sulfonate.

The flame retardant may not be a bromine or chlorine containing composition.

The flame retardant additives may include organic compounds that include phosphorus, bromine, and/or chlorine. Non-brominated and non-chlorinated phosphorus-containing flame retardants can be used in certain applications for regulatory reasons, for example, organic phosphates and organic compounds containing phosphorus-nitrogen bonds. One type of exemplary organic phosphate is an aromatic phosphate of the formula (GO)3P=O, wherein each G is independently an alkyl, cycloalkyl, aryl, alkylaryl, or arylalkyl group, provided that at least one G is an aromatic group. Two of the G groups can be joined together to provide a cyclic group, for example, diphenyl pentaerythritol diphosphate. Exemplary aromatic phosphates include, phenyl bis(dodecyl) phosphate, phenyl bis(neopentyl) phosphate, phenyl bis(3,5,5'-trimethylhexyl) phosphate, ethyl diphenyl phosphate, 2-ethylhexyl di(p-tolyl) phosphate, bis(2-ethylhexyl) p-tolyl phosphate, tritolyl phosphate, bis(2-ethylhexyl) phenyl phosphate, tri(nonylphenyl) phosphate, bis(dodecyl) p-tolyl phosphate, dibutyl phenyl phosphate, 2-chloroethyl diphenyl phosphate, p-tolyl bis(2,5,5'-trimethylhexyl) phosphate, 2-ethylhexyl diphenyl phosphate, or the like. A specific aromatic phosphate is one in which each G is aromatic, for example, triphenyl phosphate, tricresyl phosphate, isopropylated triphenyl phosphate, and the like.

Di- or poly-functional aromatic phosphorus-containing compounds are also useful as additives, for example, compounds of the formulas below: 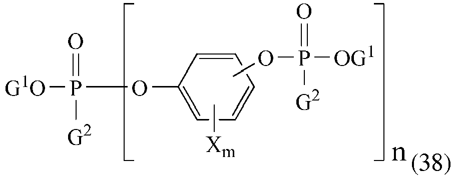 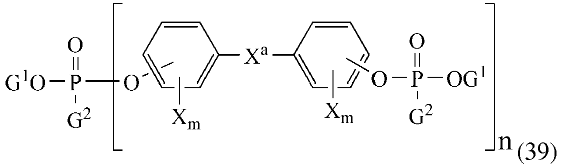 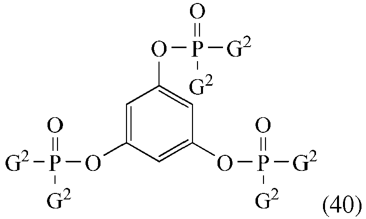 wherein each G¹ is independently a hydrocarbon having 1 to 30 carbon atoms; each G² is independently a hydrocarbon or hydrocarbonoxy having 1 to 30 carbon atoms; each X is independently a bromine or chlorine; m is 0 to 4, and n is 1 to 30. Exemplary di- or polyfunctional aromatic phosphorus-containing compounds include resorcinol tetraphenyl diphosphate (RDP), the bis(diphenyl) phosphate of hydroquinone and the bis(diphenyl) phosphate of bisphenol-A, respectively, their oligomeric and polymeric counterparts, and the like.

Exemplary flame retardant additives containing phosphorus-nitrogen bonds include phosphonitrilic chloride, phosphorus ester amides, phosphoric acid amides, phosphonic acid amides, phosphinic acid amides, tris(aziridinyl) phosphine oxide.

The flame retardant additive may have formula (41): 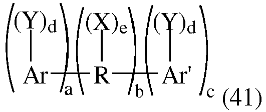 wherein R is a C₁₋₃₆ alkylene, alkylidene or cycloaliphatic linkage, e.g., methylene, ethylene, propylene, isopropylene, isopropylidene, butylene, isobutylene, amylene, cyclohexylene, cyclopentylidene, or the like; or an oxygen ether, carbonyl, amine, or a sulfur-containing linkage, e.g., sulfide, sulfoxide, sulfone, or the like. R can also consist of two or more alkylene or alkylidene linkages connected by such groups as aromatic, amino, ether, carbonyl, sulfide, sulfoxide, sulfone, or the like.

Ar and Ar' in formula (41) are each independently mono- or polycarbocyclic aromatic groups such as phenylene, biphenylene, terphenylene, naphthylene, or the like.

Y is an organic, inorganic, or organometallic radical, for example (1) halogen, e.g., chlorine, bromine, iodine, fluorine or (2) ether groups of the general formula OB, wherein B is a monovalent hydrocarbon group similar to X or (3) monovalent hydrocarbon groups of the type represented by R or (4) other substituents, e.g., nitro, cyano, and the like, said substituents being essentially inert provided that there is greater than or equal to one, specifically greater than or equal to two, halogen atoms per aryl nucleus. One or both of Ar and Ar' may further have one or more hydroxyl substituents.

When present, each X is independently a monovalent hydrocarbon group, for example an alkyl group such as methyl, ethyl, propyl, isopropyl, butyl, decyl, or the like; an aryl groups such as phenyl, naphthyl, biphenyl, xylyl, tolyl, or the like; and aralkyl group such as benzyl, ethylphenyl, or the like; a cycloaliphatic group such as cyclopentyl, cyclohexyl, or the like. The monovalent hydrocarbon group can itself contain inert substituents.

Each d is independently 1 to a maximum equivalent to the number of replaceable hydrogens substituted on the aromatic rings comprising Ar or Ar'. Each e is independently 0 to a maximum equivalent to the number of replaceable hydrogens on R. Each a, b, and c is independently a whole number, including 0. When b is not 0, neither a nor c can be 0. Otherwise either a or c, but not both, can be 0. Where b is 0, the aromatic groups are joined by a direct carbon-carbon bond.

The hydroxyl and Y substituents on the aromatic groups, Ar and Ar' can be varied in the ortho, meta or para positions on the aromatic rings and the groups can be in any possible geometric relationship with respect to one another.

Included within the scope of polymeric or oligomeric flame retardants derived from mono or dihydroxy derivatives of formula (30) are: 2,2-bis-(3,5-dichlorophenyl)-propane; bis-(2-chlorophenyl)-methane; bis(2,6-dibromophenyl)-methane; 2,2',6,6'-tetrabromo-4,4'-isopropylidenediphenol (also known as 2,2-bis(3,5-dibromo-4-hydroxyphenyl)propane; 1,1-bis-(4-iodophenyl)-ethane; 1,2-bis-(2,6-dichlorophenyl)-ethane; 1,1-bis-(2-chloro-4-iodophenyl)ethane; 1,1-bis-(2-chloro-4-methylphenyl)-ethane; 1,1-bis-(3,5-dichlorophenyl)-ethane; 2,2-bis-(3-phenyl-4-bromophenyl)-ethane; 2,6-bis-(4,6-dichloronaphthyl)-propane; 2,2-bis-(2,6-dichlorophenyl)-pentane; 2,2-bis-(3,5-dibromophenyl)-hexane; bis-(4-chlorophenyl)-phenyl-methane; bis-(3,5-dichlorophenyl)-cyclohexylmethane; bis-(3-nitro-4-bromophenyl)-methane; bis-(4-hydroxy-2,6-dichloro-3-methoxyphenyl)-methane; and 2,2-bis-(3,5-dichloro-4-hydroxyphenyl)-propane 2,2 bis-(3-bromo-4-hydroxyphenyl)-propane. Also included within the above structural formula are: 1,3-dichlorobenzene, 1,4-dibromobenzene, 1,3-dichloro-4-hydroxybenzene, and biphenyls such as 2,2'-dichlorobiphenyl, polybrominated 1,4-diphenoxybenzene, 2,4'-dibromobiphenyl, and 2,4'-dichlorobiphenyl as well as decabromo diphenyl oxide, and the like.

Another useful class of flame retardant is the class of cyclic siloxanes having the general formula (R₂SiO)y wherein R is a monovalent hydrocarbon or fluorinated hydrocarbon having from 1 to 18 carbon atoms and y is a number from 3 to 12. Examples of fluorinated hydrocarbon include, but are not limited to, 3-fluoropropyl, 3,3,3-trifluoropropyl, 5,5,5,4,4,3,3-heptafluoropentyl, fluorophenyl, difluorophenyl and trifluorotolyl. Examples of suitable cyclic siloxanes include, but are not limited to, octamethylcyclotetrasiloxane, 1,2,3,4-tetramethyl-1,2,3,4-tetravinylcyclotetrasiloxane, 1,2,3,4-tetramethyl-1,2,3,4-tetraphenylcyclotetrasiloxane, octaethylcyclotetrasiloxane, octapropylcyclotetrasiloxane, octabutylcyclotetrasiloxane, decamethylcyclopentasiloxane, dodecamethylcyclohexasiloxane, tetradecamethylcycloheptasiloxane, hexadecamethylcyclooctasiloxane, eicosamethylcyclodecasiloxane, octaphenylcyclotetrasiloxane, and the like. A particularly useful cyclic siloxane is octaphenylcyclotetrasiloxane.

When present, the foregoing flame retardant additives are generally present in amounts of: 0.01 to 0.15 wt%, 0.02 to 0.14 wt%, 0.03 to 0.13 wt%, 0.04 to 0.12 wt%, 0.05 to 0.13 wt%, 0.06 to 0.12 wt%, 0.07 to 0.11 wt%, 0.09 to 0.10 wt%, and 0.08 wt% based on 100 parts by wt of the blend composition. They may be added in an effective amount to achieve the desired characteristics of the molded product.

### OTHER ADDITIVES

### IMPACT MODIFIERS

The polycarbonate blend composition may further comprise other additives, such as impact modifiers. For example, the composition can further include impact modifier(s), with the proviso that the additives are selected so as to not significantly adversely affect the desired properties of the composition. Suitable impact modifiers may be high molecular weight elastomeric materials derived from olefins, monovinyl aromatic monomers, acrylic and methacrylic acids and their ester derivatives, as well as conjugated dienes. The polycarbonate blend composition formed from conjugated dienes can be fully or partially hydrogenated. The elastomeric materials can be in the form of homopolymers or copolymers, including random, block, radial block, graft, and core-shell copolymers. Combinations of impact modifiers may be used.

A specific type of impact modifier may be an elastomer-modified graft copolymer comprising (i) an elastomeric (i.e., rubbery) polymer substrate having a Tg less than about 10°C, less than about 0°C, less than about -10°C, or between about -40°C to -80°C, and (ii) a rigid polymer grafted to the elastomeric polymer substrate. Materials suitable for use as the elastomeric phase include, for example, conjugated diene rubbers, for example, polybutadiene and polyisoprene; copolymers of a conjugated diene with less than about 50 wt% of a copolymerizable monomer, for example, a monovinylic compound, such as styrene, acrylonitrile, n-butyl acrylate, or ethyl acrylate; olefin rubbers, such as ethylene propylene copolymers (EPR) or ethylene-propylene-diene monomer rubbers (EPDM); ethylene-vinyl acetate rubbers; silicone rubbers; elastomeric C₁₋₈ alkyl(meth)acrylates; elastomeric copolymers of C₁₋₈ alkyl(meth)acrylates with butadiene and/or styrene; or combinations comprising at least one of the foregoing elastomers. Materials suitable for use as the rigid phase include, for example, monovinyl aromatic monomers such as styrene and alpha-methyl styrene, and monovinylic monomers such as acrylonitrile, acrylic acid, methacrylic acid, and the C₁-C₆ esters of acrylic acid and methacrylic acid, specifically methyl methacrylate.

Specific impact modifiers include styrene-butadiene-styrene (SBS), styrene-butadiene rubber (SBR), styrene-ethylene-butadiene-styrene (SEBS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN). Exemplary elastomer-modified graft copolymers include those formed from styrene-butadiene-styrene (SBS), styrene-butadiene rubber (SBR), styrene-ethylene-butadiene-styrene (SEBS), ABS (acrylonitrile-butadiene-styrene), acrylonitrile-ethylene-propylene-diene-styrene (AES), styrene-isoprene-styrene (SIS), methyl methacrylate-butadiene-styrene (MBS), and styrene-acrylonitrile (SAN).

MBS may be derived from the following monomers:

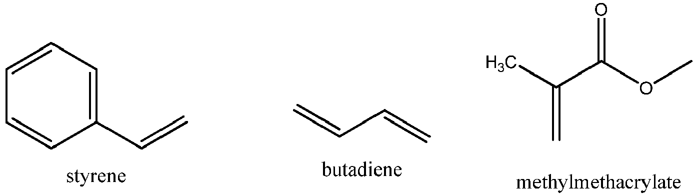

SEBS may be a linear triblock copolymer based on styrene and ethylene/butylene. Each copolymer chain that may consist of three blocks: a middle block that is a random ethylene/butylene copolymer surrounded by two blocks of polystyrene. The SEBS may be styrene-b-(ethylene-co-butylene)-b-styrene polymer.

Impact modifiers may be present in amounts of 1 to 30 parts by weight, based on 100 parts by weight of copolycarbonate, polysiloxane-polycarbonate, and any additional polymer. Impact modifiers may include MBS and SBS.

### ULTRAVIOLET (UV) STABILIZERS

The polycarbonate blend composition may further comprise a UV stabilizer for improved performance in UV stabilization. UV stabilizers disperse the UV radiation energy.

UV stabilizers may be hydroxybenzophenones, hydroxyphenyl benzotriazoles, cyanoacrylates, oxanilides, and hydroxyphenyl triazines. UV stabilizers may include, but are not limited to, poly[(6-morphilino-s-triazine-2,4-diyl)[2,2,6,6-tetramethyl-4-piperidyl) imino]-hexamethylene[(2,2,6,6-tetramethyl-4-piperidyl)imino], 2-hydroxy-4-octloxybenzophenoe (Uvinul* 3008), 6-tert-butyl-2-(5-chloro-2H-benzotriazole-2-yl)-4-methylphenyl (Uvinul* 3026), 2,4-di-tert-butyl-6-(5-chloro-2H-benzotriazole-2-yl)-phenol (Uvinul*3027), 2-(2H-benzotriazole-2-yl)-4,6-di-tert-pentylphenol (Uvinul* 3028), 2-(2H-benzotriazole-2-yl)-4-(1,1,3,3-tetramethylbutyl)-phenol (Uvinul* 3029), 1,3-bis[(2'cyano-3',3'-diphenylacryloyl)oxy]-2,2-bis-{[(2'-cyano-3',3'-diphenylacryloyl)oxy]methyl}-propane (Uvinul* 3030), 2-(2H-benzotriazole-2-yl)-4-methylphenol (Uvinul* 3033), 2-(2H-bezhotriazole-2-yl)-4,6-bis(1-methyl-1-phenyethyl)phenol (Uvinul* 3034), ethyl-2-cyano-3,3-diphenylacrylate (Uvinul* 3035), (2-ethylhexyl)-2-cyano-3,3-diphenylacrylate (Uvinul* 3039), N,N'-bisformyl-N,N'-bis(2,2,6,6-tetramethyl-4-piperidinyl)hexamethylendiamine (Uvinul* 4050H), bis-(2,2,6,6-tetramethyl-4-pipieridyl)-sebacate (Uvinul* 4077H), bis-(1,2,2,6,6-pentamethyl-4-piperdiyl)-sebacate + methyl-(1,2,2,6,6-pentamethyl-4-piperidyl)-sebacate (Uvinul* 4092H) or combination thereof.

The polycarbonate blend composition may comprise one or more UV stabilizers, including Cyasorb 5411, Cyasorb UV-3638, Uvinul* 3030, and/or Tinuvin 234.

Certain monophenolic UV absorbers, which can also be used as capping agents, can be utilized as one or more additives; for example, 4-substituted-2-hydroxybenzophenones and their derivatives, aryl salicylates, monoesters of diphenols such as resorcinol monobenzoate, 2-(2-hydroxyaryl)-benzotriazoles and their derivatives, 2-(2-hydroxyaryl)-1,3,5-triazines and their derivatives, and the like.

### COLORANTS

The polycarbonate blend composition may further comprise colorants, such as pigment and/or dye additives. Useful pigments can include, for example, inorganic pigments such as metal oxides and mixed metal oxides, such as zinc oxide, titanium dioxides, iron oxides, or the like; sulfides, such as zinc sulfides, or the like; aluminates; sodium sulfo-silicates sulfates, chromates, or the like; carbon blacks; zinc ferrites; ultramarine blue; organic pigments, such as azos, di-azos, quinacridones, perylenes, naphthalene tetracarboxylic acids, flavanthrones, isoindolinones, tetrachloroisoindolinones, anthraquinones, enthrones, dioxazines, phthalocyanines, and azo lakes; Pigment Red 101, Pigment Red 122, Pigment Red 149, Pigment Red 177, Pigment Red 179, Pigment Red 202, Pigment Violet 29, Pigment Blue 15, Pigment Blue 60, Pigment Green 7, Pigment Yellow 119, Pigment Yellow 147, Pigment Yellow 150, and Pigment Brown 24; or combinations comprising at least one of the foregoing pigments. Pigments are generally used in amounts of 0.01 to 10 parts by wt, based on 100 parts by wt of the polymer component of the thermoplastic composition.

Exemplary dyes are generally organic materials and include, for example, coumarin dyes such as coumarin 460 (blue), coumarin 6 (green), nile red or the like; lanthanide complexes; hydrocarbon and substituted hydrocarbon dyes; polycyclic aromatic hydrocarbon dyes; scintillation dyes such as oxazole or oxadiazole dyes; aryl- or heteroaryl-substituted poly (C₂₋₈) olefin dyes; carbocyanine dyes; indanthrone dyes; phthalocyanine dyes; oxazine dyes; carbostyryl dyes; napthalenetetracarboxylic acid dyes; porphyrin dyes; bis(styryl)biphenyl dyes; acridine dyes; anthraquinone dyes; cyanine dyes; methine dyes; arylmethane dyes; azo dyes; indigoid dyes, thioindigoid dyes, diazonium dyes; nitro dyes; quinone imine dyes; aminoketone dyes; tetrazolium dyes; thiazole dyes; perylene dyes, perinone dyes; bis-benzoxazolylthiophene (BBOT); triarylmethane dyes; xanthene dyes; thioxanthene dyes; naphthalimide dyes; lactone dyes; fluorophores, such as anti-stokes shift dyes which absorb in the near infrared wavelength and emit in the visible wavelength, or the like; luminescent dyes such as 7-amino-4-methylcoumarin; 3-(2'-benzothiazolyl)-7-diethylaminocoumarin; 2-(4-biphenylyl)-5-(4-t-butylphenyl)-1,3,4-oxadiazole; 2,5-bis-(4-biphenylyl)-oxazole; 2,2'-dimethyl-p-quaterphenyl; 2,2-dimethyl-p-terphenyl; 3,5,3"",5""-tetra-t-butyl-p-quinquephenyl; 2,5-diphenylfuran; 2,5-diphenyloxazole; 4,4'-diphenylstilbene; 4-dicyanomethylene-2-methyl-6-(p-dimethylaminostyryl)-4H-pyran; 1,1'-diethyl-2,2'-carbocyanine iodide; 3,3'-diethyl-4,4',5,5'-dibenzothiatricarbocyanine iodide; 7-dimethylamino-1-methyl-4-methoxy-8-azaquinolone-2; 7-dimethylamino-4-methylquinolone-2; 2-(4-(4-dimethylaminophenyl)-1,3-butadienyl)-3-ethylbenzothiazolium perchlorate; 3-diethylamino-7-diethyliminophenoxazonium perchlorate; 2-(1-naphthyl)-5-phenyloxazole; 2,2'-p-phenylen-bis(5-phenyloxazole); rhodamine 700; rhodamine 800; pyrene, chrysene, rubrene, coronene, or the like; or combinations comprising at least one of the foregoing dyes. Dyes are generally used in amounts of 0.01 to 10 parts by wt, based on 100 parts by wt of the polycarbonate component of the blend composition.

### HEAT STABILIZERS

The polycarbonate blend composition may comprise heat stabilizers. Exemplary heat stabilizer additives include, for example, organophosphites, such as triphenyl phosphite, tris-(2,6-dimethylphenyl)phosphite, tris-(mixed mono-and dinonylphenyl)phosphite or the like; phosphonates, such as dimethylbenzene phosphonate or the like, phosphates, such as trimethyl phosphate, or the like, or combinations comprising at least one of the foregoing heat stabilizers. Heat stabilizers are generally used in amounts of 0.0001 to 1 part by wt, based on 100 parts by wt of the polymer component of the thermoplastic composition.

In addition to the heat stabilizer, for example, the herein described polycarbonates and blends can include various additives ordinarily incorporated in polycarbonate compositions, with the proviso that the additives are selected so as to not significantly adversely affect the desired properties of the polycarbonate, such as transparency. Combinations of additives can be used. Such additives can be mixed at a suitable time during the mixing of the components for forming the polycarbonate and/or blend.

### PLASTICIZERS, LUBRICANTS, MOLD RELEASE AGENTS

The polycarbonate blend composition may further comprise plasticizers, lubricants, mold release agents. Mold release agent (MRA) will allow the material to be removed quickly and effectively. Mold releases can reduce cycle times, defects, and browning of finished product. There is considerable overlap among these types of materials, which may include, for example, phthalic acid esters, such as dioctyl-4,5-epoxy-hexahydrophthalate; tris-(octoxycarbonylethyl)isocyanurate; tristearin; di- or polyfunctional aromatic phosphates, such as resorcinol tetraphenyl diphosphate (RDP), the bis(diphenyl) phosphate of hydroquinone and the bis(diphenyl) phosphate of bisphenol-A; poly-alphaolefins; epoxidized soybean oil; silicones, including silicone oils; esters, for example, fatty acid esters such as alkyl stearyl esters, e.g., methyl stearate, stearyl stearate, pentaerythritol tetrastearate (PETS), and the like; combinations of methyl stearate and hydrophilic and hydrophobic nonionic surfactants comprising polyethylene glycol polymers, polypropylene glycol polymers, poly(ethylene glycol-co-propylene glycol) copolymers, or a combination comprising at least one of the foregoing glycol polymers, e.g., methyl stearate and polyethylene-polypropylene glycol copolymer in a suitable solvent; waxes, such as beeswax, montan wax, paraffin wax, or the like. Such materials are generally used in amounts of 0.001 to 1 part by wt, specifically 0.01 to 0.75 part by wt, more specifically 0.1 to 0.5 part by wt, based on 100 parts by wt of the polymer component of the thermoplastic composition.

### OTHER FILLER OR REINFORCING AGENTS

The polycarbonate blend composition may further comprise other fillers or reinforcing agents. Possible fillers or reinforcing agents include, for example, silicates and silica powders such as aluminum silicate (mullite), synthetic calcium silicate, zirconium silicate, fused silica, crystalline silica graphite, natural silica sand, or the like; boron powders such as boron-nitride powder, boron-silicate powders, or the like; oxides, such as TiO₂, aluminum oxide, magnesium oxide, or the like; calcium sulfate (as its anhydride, dihydrate or trihydrate); calcium carbonates, such as chalk, limestone, marble, synthetic precipitated calcium carbonates, or the like; talc, including fibrous, modular, needle shaped, lamellar talc, or the like; wollastonite; surface-treated wollastonite; glass spheres, such as hollow and solid glass spheres, silicate spheres, cenospheres, aluminosilicate (armospheres), or the like; kaolin, including hard kaolin, soft kaolin, calcined kaolin, kaolin comprising various coatings known in the art to facilitate compatibility with the polycarbonate polymeric matrix, or the like; single crystal fibers or "whiskers", such as silicon carbide, alumina, boron carbide, iron, nickel, copper, or the like; fibers (including continuous and chopped fibers), such as asbestos, carbon fibers, glass fibers, such as E, A, C, ECR, R, S, D, or NE glasses, or the like; sulfides, such as molybdenum sulfide, zinc sulfide or the like; barium compounds, such as barium titanate, barium ferrite, barium sulfate, heavy spar, or the like; metals and metal oxides such as particulate or fibrous aluminum, bronze, zinc, copper and nickel or the like; flaked fillers such as glass flakes, flaked silicon carbide, aluminum diboride, aluminum flakes, steel flakes or the like; fibrous fillers, for example short inorganic fibers, such as those derived from blends comprising at least one of aluminum silicates, aluminum oxides, magnesium oxides, and calcium sulfate hemihydrate or the like; natural fillers and reinforcements, such as wood flour obtained by pulverizing wood, fibrous products, such as cellulose, cotton, sisal, jute, starch, cork flour, lignin, ground nut shells, corn, rice grain husks or the like; organic fillers such as polytetrafluoroethylene; reinforcing organic fibrous fillers formed from organic polymers capable of forming fibers such as poly(ether ketone), polyimide, polybenzoxazole, poly(phenylene sulfide), polyesters, polyethylene, aromatic polyamides, aromatic polyimides, polyetherimides, polytetrafluoroethylene, acrylic resins, poly(vinyl alcohol) or the like; as well as additional fillers and reinforcing agents such as mica, clay, feldspar, flue dust, fillite, quartz, quartzite, perlite, tripoli, diatomaceous earth, carbon black, or the like, or combinations comprising at least one of the foregoing fillers or reinforcing agents.

The fillers and reinforcing agents can be coated with a layer of metallic material to facilitate conductivity, or surface treated with silanes to improve adhesion and dispersion with the polycarbonate polymeric matrix. In addition, the reinforcing fillers can be provided in the form of monofilament or multifilament fibers and can be used individually or in combination with other types of fiber, through, for example, co-weaving or core/sheath, side-by-side, orange-type or matrix and fibril constructions, or by other methods known to one skilled in the art of fiber manufacture. Exemplary co-woven structures include, for example, glass fiber-carbon fiber, carbon fiber-aromatic polyimide (aramid) fiber, and aromatic polyimide fiberglass fiber or the like. Fibrous fillers can be supplied in the form of, for example, rovings, woven fibrous reinforcements, such as 0-90 degree fabrics or the like; non-woven fibrous reinforcements such as continuous strand mat, chopped strand mat, tissues, papers and felts or the like; or three-dimensional reinforcements such as braids. Fillers are generally used in amounts of 0 to 80 parts by wt, based on 100 parts by wt of the polymer component of the composition.

### ANTIOXIDANT ADDITIVES

The polycarbonate blend composition may further comprise an antioxidant additive. Exemplary antioxidant additives include, for example, organophosphites, such as tris(nonyl phenyl)phosphite, tris(2,4-di-t-butylphenyl)phosphite ("IRGAFOS^{∗} 168" or "1-168"), bis(2,4-di-t-butylphenyl)pentaerythritol diphosphite, distearyl pentaerythritol diphosphite or the like; alkylated monophenols or polyphenols; alkylated reaction products of polyphenols with dienes, such as tetrakis[methylene(3,5-di-tert-butyl-4-hydroxyhydrocinnamate)] methane, or the like; butylated reaction products of para-cresol or dicyclopentadiene; alkylated hydroquinones; hydroxylated thiodiphenyl ethers; alkylidene-bisphenols; benzyl compounds; esters of beta-(3,5-di-tert-butyl-4-hydroxyphenyl)-propionic acid with monohydric or polyhydric alcohols; esters of beta-(5-tert-butyl-4-hydroxy-3-methylphenyl)-propionic acid with monohydric or polyhydric alcohols; esters of thioalkyl or thioaryl compounds, such as distearylthiopropionate, dilaurylthiopropionate, ditridecylthiodipropionate, octadecyl-3-(3,5-di-tert-butyl-4-hydroxyphenyl)propionate, pentaerythrityl-tetrakis[3-(3,5-di-tert-butyl-4-hydroxyphenyl)propionate or the like; amides of beta-(3,5-di-tert-butyl-4-hydroxyphenyl)-propionic acid or the like, or combinations comprising at least one of the foregoing antioxidants. Antioxidants are generally used in amounts of 0.0001 to 1 part by wt, based on 100 parts by wt of the polymer component of the thermoplastic composition (excluding any filler).

### ANTISTATIC AGENTS

The polycarbonate blend composition may further comprise an antistatic agent. Examples of monomeric antistatic agents may include glycerol monostearate, glycerol distearate, glycerol tristearate, ethoxylated amines, primary, secondary and tertiary amines, ethoxylated alcohols, alkyl sulfates, alkylarylsulfates, alkylphosphates, alkylaminesulfates, alkyl sulfonate salts, such as sodium stearyl sulfonate, sodium dodecylbenzenesulfonate or the like, quaternary ammonium salts, quaternary ammonium resins, imidazoline derivatives, sorbitan esters, ethanolamides, betaines, or the like, or combinations comprising at least one of the foregoing monomeric antistatic agents.

Exemplary polymeric antistatic agents may include certain polyesteramides polyether-polyamide (polyetheramide) block copolymers, polyetheresteramide block copolymers, polyetheresters, or polyurethanes, each containing polyalkylene glycol moieties polyalkylene oxide units, such as polyethylene glycol, polypropylene glycol, polytetramethylene glycol, and the like. Such polymeric antistatic agents are commercially available, for example, PELESTAT* 6321 (Sanyo) or PEBAX* MH1657 (Atofina), IRGASTAT* P18 and P22 (Ciba-Geigy). Other polymeric materials may be used as antistatic agents are inherently conducting polymers, such as polyaniline (commercially available as PANIPOL*EB from Panipol), polypyrrole and polythiophene (commercially available from Bayer), which retain some of their intrinsic conductivity after melt processing at elevated temperatures. Carbon fibers, carbon nanofibers, carbon nanotubes, carbon black, or a combination comprising at least one of the foregoing may be used in a polymeric resin containing chemical antistatic agents to render the composition electrostatically dissipative. Antistatic agents are generally used in amounts of 0.0001 to 5 parts by wt, based on 100 parts by wt of the polymer component of the thermoplastic composition.

### BLOWING AGENTS

The polycarbonate blend composition may further comprise blowing agent. Foam may be a useful blowing agent. Low boiling halohydrocarbons and those that generate carbon dioxide may be used as blowing agents. Blowing agents that are solid at room temperature and when heated to temperatures higher than their decomposition temperature, generate gases, such as nitrogen, carbon dioxide, and ammonia gas, such as azodicarbonamide, metal salts of azodicarbonamide, 4,4' oxybis(benzenesulfonylhydrazide), sodium bicarbonate, ammonium carbonate, or the like, or combinations comprising at least one of the foregoing blowing agents. Blowing agents may be used in amounts of 0.01 to 20 parts by wt, based on 100 parts by wt of the polymer component of the thermoplastic composition.

### RADIATION STABILIZERS

The polycarbonate blend composition may further comprise radiation stabilizers. The radiation stabilizer may be a gamma-radiation stabilizer. Exemplary gamma-radiation stabilizers include alkylene polyols, such as ethylene glycol, propylene glycol, 1,3-propanediol, 1,2-butanediol, 1,4-butanediol, meso-2,3-butanediol, 1,2-pentanediol, 2,3-pentanediol, 1,4-pentanediol, 1,4-hexandiol, and the like; cycloalkylene polyols, such as 1,2-cyclopentanediol, 1,2-cyclohexanediol, and the like; branched alkylenepolyols such as 2,3-dimethyl-2,3-butanediol (pinacol), and the like, as well as alkoxy-substituted cyclic or acyclic alkanes. Unsaturated alkenols are also useful, examples of which include 4-methyl-4-penten-2-ol, 3-methyl-pentene-3-ol, 2-methyl-4-penten-2-ol, 2,4-dimethyl-4-pene-2-ol, and 9 to decen-1-ol, as well as tertiary alcohols that have at least one hydroxy substituted tertiary carbon, for example 2-methyl-2,4-pentanediol (hexylene glycol), 2-phenyl-2-butanol, 3-hydroxy-3-methyl-2-butanone, 2-phenyl-2-butanol, and the like, and cyclic tertiary alcohols, such as 1-hydroxy-1-methyl-cyclohexane. Certain hydroxymethyl aromatic compounds that have hydroxy substitution on a saturated carbon attached to an unsaturated carbon in an aromatic ring can also be used. The hydroxy-substituted saturated carbon can be a methylol group (-CH₂OH) or it can be a member of a more complex hydrocarbon group, such as - CR⁴HOH or -CR⁴₂OH wherein R⁴ is a complex or a simple hydrocarbon. Specific hydroxy methyl aromatic compounds include benzhydrol, 1,3-benzenedimethanol, benzyl alcohol, 4-benzyloxy benzyl alcohol and benzyl benzyl alcohol. 2-Methyl-2,4-pentanediol, polyethylene glycol, and polypropylene glycol are often used for gamma-radiation stabilization. Gamma-radiation stabilizing compounds are typically used in amounts of 0.1 to 10 parts by wt based on 100 parts by wt of the polymer component of the thermoplastic composition.

### MIXERS AND EXTRUDERS

The polycarbonate blend composition can be manufactured by various methods. For example, the first and second polycarbonates may be first blended in a high speed HENSCHEL-Mixer*. Other low shear processes, including but not limited to hand mixing, can also accomplish this blending. The blend may then be fed into the throat of a single or twin-screw extruder via a hopper. Alternatively, at least one of the components can be incorporated into the composition by feeding directly into the extruder at the throat and/or downstream through a sidestuffer. Additives can also be compounded into a master batch with a desired polymeric resin and fed into the extruder. The extruder is generally operated at a temperature higher than that necessary to cause the composition to flow. The extrudate is immediately quenched in a water batch and pelletized. The pellets, so prepared, when cutting the extrudate can be 6 mm (one-fourth inch) long or less as desired. Such pellets can be used for subsequent molding, shaping, or forming.

### ARTICLES

The polycarbonate blend composition may be formed, shaped, molded or injection molded into an article. The polycarbonate blend composition can be molded into useful shaped articles by a variety of means such as injection molding, extrusion, rotational molding, blow molding and thermoforming to form articles such as, for example, a sample for notched Izod tests a home electrical component, a medical device component or a component of a meter system. The article may be a component of a smart meter housing, a mobile phone, a camera, a camera/lens mount including the inner parts of the camera and lens, a digital video, a computer or computer monitor or printer, an electronic tablet, hand receivers, an Integrated Circuit ("IC") card case or smart card, an electronic game device, a rice cooker, an electronic tablet, hand receivers, or a kitchen appliance, and the like.

The article may have a biocontent according to ASTMD 6866 of at least: 1 wt%, 2 wt%, 3 wt%, 4 wt%, 5 wt%, 6 wt%, 7 wt%, 8 wt%, 9 wt%, 10 wt%, 11 wt%, 12 wt%, 13 wt%, 14 wt%, 15 wt%, 16 wt%, 17 wt%, 18 wt%, 19 wt%, 20 wt%, 25 wt%, 30 wt%, 35 wt%, 40 wt%, 45 wt%, 50 wt%, 55 wt%, 60 wt%, or 65 wt%.

The article may be formed, shaped, molded, or injection molded from the polycarbonate blend, which article may have a notched izod impact strength (NII) of: 400 J/m, 405 J/m, 410 J/m, 415 J/m, or 420 J/m, at 23 °C, according to ASTM D 256-10. The article may have a NII of greater than or equal to: 400 J/m, 401 J/m, 402 J/m, 403 J/m, 404 J/m, or 405 J/m at 23 °C, according to ASTM D 256-10, when the second polycarbonate has an overall siloxane weight percent of 15 wt% to 25 wt%, and the total siloxane weight percent in the blend composition is 1.5 wt% to 5 wt%. The article may have a NII of greater than or equal to 400 J/m at 23 °C, according to ASTM D 256-10, when the second polycarbonate has an overall siloxane weight percent of 15 wt% to 25 wt%, and the total siloxane weight percent in the blend composition is 1.5 wt% to 5 wt%.

The article may have a notched izod impact strength (NII) of: 150 J/m, 155 J/m, 160 J/m, 165 J/m, 170 J/m, 175 J/m, 180 J/m, 185 J/m, 190 J/m, 195 J/m, 200 J/m, 205 J/m, 210 J/m, 215 J/m, or 220 J/m at 0°C, according to ASTM D 256-10. The article composition may have a NII of greater than or equal to: 185 J/m, 186 J/m, 187 J/m, 188 J/m, 189 J/m, 190 J/m, 191 J/m, 192 J/m, 193 J/m, 194 J/m, or 195 J/m at 0 °C, according to ASTM D 256-10, when the second polycarbonate has an overall siloxane weight percent of 15 wt% to 25 wt%, and the total siloxane weight percent in the blend composition is 1.5 wt% to 5 wt%. The article may have a NII of greater than or equal to 190 J/m at 0 °C, according to ASTM D 256-10, when the second polycarbonate has an overall siloxane weight percent of 15 wt% to 25 wt%, and the total siloxane weight percent in the blend composition is 1.5 wt% to 5 wt%

The article may have a notched izod impact strength (NII) of: 100 J/m, 105 J/m, 110 J/m, 115 J/m, 120 J/m, 125 J/m, 130 J/m, 135 J/m, 140 J/m, 145 J/m, 150 J/m, 155 J/m, 160 J/m, 165 J/m, or 170 J/m at -30 °C, according to ASTM D 256-10. The article may have a NII of greater than or equal to 145: J/m, 146 J/m, 147 J/m, 148 J/m, 149 J/m, 150 J/m, 151 J/m, 152 J/m, 153 J/m, 154 J/m, or 155 J/m at -30 °C, according to ASTM D 256-10, when the second polycarbonate has an overall siloxane weight percent of 15 wt% to 25 wt%, and the total siloxane weight percent in the blend composition is 1.5 wt% to 5 wt%. The article may have a NII of greater than or equal to 150 J/m at -30 °C, according to ASTM D 256-10, when the second polycarbonate has an overall siloxane weight percent of 15 wt% to 25 wt%, and the total siloxane weight percent in the blend composition is 1.5 wt% to 5 wt%

The article may have a notched izod impact strength (NII) of: at least 400 J/m or 420 J/m at 23 °C according to ASTM D 256-10. The article composition may have a NII of greater than or equal to: 245 J/m, 246 J/m, 247 J/m, 248 J/m, 249 J/m, 250 J/m, 251 J/m, 252 J/m, 253 J/m, 254 J/m, or 255 J/m at 23 °C, according to ASTM D 256-10, when the second polycarbonate has an overall siloxane weight percent of 3 wt% to 10 wt%, and the total siloxane weight percent in the blend composition is 1.5 wt% to 5 wt%. The article may have a NII of greater than or equal to 400 J/m at 23 °C, according to ASTM D 256-10, when the second polycarbonate has an overall siloxane weight percent of 3 wt% to 10 wt%, and the total siloxane weight percent in the blend composition is 1.5 wt% to 5 wt%.

The article may have a notched izod impact strength (NII) of: 150 J/m, 155 J/m, 160 J/m, 165 J/m, 170 J/m, 175 J/m, 180 J/m, 185 J/m, 190 J/m, 195 J/m, 200 J/m, 205 J/m, 210 J/m, 215 J/m, or 220 J/m at 0°C according to ASTM D 256-10. The article composition may have a NII of greater than or equal to: 155 J/m, 156 J/m, 157 J/m, 158 J/m, 159 J/m, 160 J/m, 161 J/m, 162 J/m, 163 J/m, 1644 J/m, or 165 J/m at 03 °C, according to ASTM D 256-10, when the second polycarbonate has an overall siloxane weight percent of 3 wt% to 10 wt%, and the total siloxane weight percent in the blend composition is 1.5 wt% to 5 wt%. The article may have a NII of greater than or equal to 160 J/m at 0 °C, according to ASTM D 256-10, when the second polycarbonate has an overall siloxane weight percent of 3 wt% to 10 wt%, and the total siloxane weight percent in the blend composition is 1.5 wt% to 5 wt%.

The article may have a notched izod impact strength (NII) of: 90 J/m, 95 J/m, 100 J/m, 105 J/m, 110 J/m, 155 J/m, 250 J/m, 205 J/m, 250 J/m, 230 J/m, 235 J/m, 240 J/m, 245 J/m, 250 J/m, or 255 J/m at -30 °C, according to ASTM D 256-10. The article may have a NII of greater than or equal to: 125 J/m, 126 J/m, 127 J/m, 128 J/m, 129 J/m, 130 J/m, 131 J/m, 132 J/m, 133 J/m, 134 J/m, or 135 J/m at -30 °C, according to ASTM D 256-10, when the second polycarbonate has an overall siloxane weight percent of 3 wt% to 10 wt%, and the total siloxane weight percent in the blend composition is 1.5 wt% to 5 wt%. The article may have a NII of greater than or equal to 130 J/m at -30 °C, according to ASTM D 256-10, when the second polycarbonate has an overall siloxane weight percent of 3 wt% to 10 wt%, and the total siloxane weight percent in the blend composition is 1.5 wt% to 5 wt%. The error rate of measuring the impact strength may be +/- 5 (kilojoule/square meter (kJ/m²).

### METHOD OF MAKING THE ARTICLE FROM THE BLENDED POLYMER COMPOSITION

The article may be produced by a molding/manufacturing process. The process may comprise the steps of (a) providing a blended copolymer comprising (i) one or more polyester-polycarbonates as described above wherein at least one of the polyester-polycarbonates has at least some structural units derived from siloxane, anti-drip agent and fire retardant additive. The blended copolymer from step (a) is then melted between 200-400°C, 225-350°C, 250-310°C, or 270-290°C in an extruder. The blended copolymer of step (b) is then (c) extruded, (d) the extrudate is isolated or chopped and (e) the extrudate is molded into parts, such as machine parts and/or extruding sheets and films. The article of manufacture may further be produced by the steps of (e) drying the blended copolymer of (d) wherein the article has a melt flow rate of 12 to 37 g/10 min, of 13 to 36 g/10 min, of 14 to 35 g/10 min, of 15 to 34 g/10 min, 16 to 33 g/10 min, 17 to 32 g/10 min, or 17.5 to 31 g/10 min. In a specific embodiment, a suitable polycarbonate composition has an MFR measured at 300°C/2.16 kg, according to ASTM D 1238-10, of 17.0 to 32.5 g/10 min, specifically 17.2 to 32 g/10 min, and more specifically 17.1 to 31 g/10 min.

The article may be metalized by vapor deposition, non-conducting vacuum metalization or overmolding. The overmolded article may further comprise a metal frame made from aluminum, tin, cobalt, stainless steel, gold, platinum, silver, or iron.

The article may also be subjected to overmolding with an uncured or partially cured silicone rubber, which is then fully cured by heat treatment. The article may also be subjected to further decoration and coloration using, such known methods as dye or image transfer and more specifically dye sublimation.

### DYE SUBLIMATION

The article may be subjected to dye sublimation. Dye sublimation may use heat to transfer dye onto the article, whereby the dye may transition between a solid and gas state without going through a liquid stage. During dye sublimation, dye carriers may adhere onto three-dimensional curved parts and complex geometries of the article. A full spectrum of colors, shades and/or designs may be applied to the article surface. The designs may be three-dimensional. The dye(s) may penetrate the surface of the article. During sublimation the dye(s) may be heated, whereby the dye vaporizes. If the dye is in proximity to the article, the vapors may penetrate between 0. 05 mm (0. 002 inches) to 7.6 mm(0.30 inche)s between 0.05 mm (0.002 inches) to 6.4 mm (0.25 inches, or between 1.3 mm (0.05 inches) to 2.5 mm (0.10 inches) into the article. The dye transfer may be initiated with heat and controlled with pressure and time.

A printer may be used to subject the article to dye sublimation. Many dye-sublimation printers use CMYO (Cyan Magenta Yellow Overcoating) colors. The overcoating may be stored on a ribbon and is effectively a thin laminate which protects the print from discoloration from UV light and the air, while also rendering the print water-resistant. During a printing cycle, heating elements on a printer head change temperature rapidly, laying different amounts of dye depending on the amount of heat applied. After being heated into a gas, the dye diffuses onto the article and solidifies. After the printer finishes covering the medium in one color, the printer may wind the ribbon on to the next color panel and partially eject the article from the printer to prepare for the next cycle. The entire process may be repeated four times in total: the first three lay the colors onto the medium to form a complete image, while the last one lays the laminate over top. This layer may protect the dye from resublimating when handled or exposed to warm conditions.

The dye sublimation process may use a dye-donor element, which is provided with a dye layer containing sublimable dyes having heat transferability. This dye donor element may be brought into contact with the article and selectively, in accordance with a pattern information signal, heated with a thermal printing head provided with a plurality of juxtaposed heat-generating resistors, whereby dye from the selectively heated regions of the dye-donor element is transferred to the article and forms a pattern thereon, the shape and density of which is in accordance with the pattern and intensity of heat applied to the dye-donor element. Such a process is described in U.S. Patent No. 5,122,499. Other processes include laser-induced thermal transfer methods may also be used and include, for example, dye transfer, melt transfer, and ablative material transfer. These processes have been described in, for example, DeBoer, U.S. Pat. No. 4,942,141; Kellogg, U.S. Pat. No. 5,019,549; Evans, U.S. Pat. No. 4,948,776; Foley et al., U.S. Pat. No. 5,156,938; Ellis et al., U.S. Pat. No. 5,171,650; and Koshizuka et al., U.S. Pat. No. 4,643,917.

### METHOD FOR REDUCING DELAMINATION

Also provided herein is a method for reducing or inhibiting delamination of an article molded from the polycarbonate blend composition. More in particular, the method of reducing or inhibiting the amount of surface structural defects on an article, comprises molding the polycarbonate blend composition of the instant inventin, wherein the article molded from the polycarbonate blend composition exhibits between a 0.5 % and 100 % decrease in the level of a surface structural defect as compared to the surface of a known control article having a polysiloxane content greater than 5 % of the total wt% of the control article, wherein the surface structural defect is delamination, pearlescence, surface imperfections, uneven shine, non-uniform pearlescence, fractures, pealing, scaling, breakage, undesired coloring, abrasions, and/or hazing.

As outlined, the molded article is manufactured from the polycarbonate blend composition of the instant invention, which imparts resistance to various forms of delamination, including structural defects or surface and appearance defects. These defects include fractures, pealing breakage and a wide range of appearance defects that arise during molding, such as surface imperfections known to those skilled in the art such as an uneven shine or gloss, non-uniform pearlescence, fibril formation, silver streaking, whitening, cloudiness, scaling, undesired and uneven coloring, and/or intermittent white haze within the molded part. Two or more of these defects may be related. For example, non-uniform pearlescence, which may produce an uneven shine or the appearance of scaling along the article, may also be a precursor to pealing. A molded article having a structural or appearance defect often fails to exhibit the requisite aesthetic and/or functional value(s) desired by a user of the article.

The level of reduction or inhibition of structural defects of an article may be measured using any number of known tests and compared to a known control article. For example, a peel test is often used to assess the delamination of articles. The main requirement is that the surface of the article must be able to withstand a peel force. The peel test is a frequently used test method for assessing the failure of various polymers and laminates, and may be performed with standard mechanical testing equipment. See, for example, Kinlock et al., Int. J. Fract. 66, 45-70 (1994). A significant amount of work has been undertaken to understand the peel test parameters, such as the peel angle employed, the thickness of the materials, the effect of temperature, etc., as they relate to various materials being tested. For example, it has been recognized that for a given laminate or polymer of width b tested at a give rate and temperature, the applied peel angle θ would affect the value of the measured peel force P. Other tests include the Breakpoint Frequency (BF) method and the Most Probable Impedance Equivalent Circuit (MPI) method. See van der Weidje et al., Corrosion Science (30)4, 643-652 (1994). Further, an extrinsic Fabry-Perot interferometric optical fiber-based sensor may be used to detect discontinuities along an article's transverse axis to detect edge-induced and local internal delamination. See Bhatia et al., Smart Materials and Structures (4)3:164 (1995). The sensors in various configurations may provide real-time, on-line information about damage initiation and propagation within the article. This method may also be used to detect flaws of critical size, which may result in premature structural failure.

Detection of flaws may be measured by a tool used to probe for delamination or visual streaking defects having a 100 mm diameter disc with a thickness of 1.35 mm. The part contains a circular gate in the center of the flat surface of the disc. The diameter of the gate is 16 mm. Visual streaking or physical delamination typically occurs in a radical pattern originating from the gate area at the center of the disc. The discs may be molded on a Van Dorn HT Model 120 ton molding machine, with resin melt temperature at 325°C and mold temperature of 105°C. Injection speed was 25 mm/sec, and total shot to shot cycle time was 35 seconds.

The article molded from the polycarbonate blend composition may not exhibit any structural defect, but only an appearance or aesthetic defect. Polysiloxane polycarbonate block copolymers may be particularly prone to appearance defects because often these defects result from agglomeration of polysiloxane blocks that form regions with very high and non-uniform siloxane content in the part and other regions are deficient in siloxane content. If the regions become sufficiently large and non-uniform, they can affect the uniform appearance of the part. This agglomeration can be particularly significant in regions of the part that are subjected to high shear forces during molding. The appearance defects of the part may also be influenced and further enhanced by the presence of certain opaque pigment colorants such as carbon black or titanium dioxide or combination of these colorants. The appearance defects may also be enhanced by the presence of dyes that disperse or dissolve unevenly throughout the polysiloxane and polycarbonate regions.

One method for predicting whether molding conditions could result in surface appearance defects is to mold blend formulations under particularly high shear molding conditions achieved by the use of high pressure in the molding operation and/or the use of molds that are designed to create high shear conditions in the molten resin in certain regions of the mold. The parts are then examined for any surface appearance defects.

A further useful tool for predicting the likelihood surface appearance or aesthetic defects in molded parts is the use of Scanning Transmission Electron Microscopy (STEM). This analytical method provides a view of the microstructure of a blend within the molded part and allows for observing the size and uniformity of the agglomerates of the polysiloxane in polycarbonate polysiloxane block copolymers and blends. In general, the larger and less uniform the size of the agglomerates observed in a region of a molded part, the more likely surface and aesthetic defects might occur in that region.

In a first embodiment, the polycarbonate blend composition of the invention comprises:
(a) a first polycarbonate having a glass transition temperature of greater than 170°C, as measured using a differential scanning calorimetry method, wherein the first polycarbonate is derived from:
   (i) one or more monomers having the structure HO-A₁-Y₁-A₂-OH wherein each of A₁ and A₂ comprise a monocyclic divalent arylene group, and Y₁ is a bridging group having one or more atoms; or
   (ii) polyester monomer units having the structure 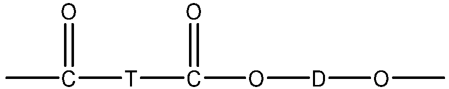 wherein D comprises one or more alkyl containing C₆-C₂₀ aromatic group(s), or one or more C₆-C₂₀ aromatic group(s), and T comprises a C₆-C₂₀ aromatic group; and
(b) a second polycarbonate wherein the second polycarbonate is a polysiloxane block copolymer derived from
   (i) the structure 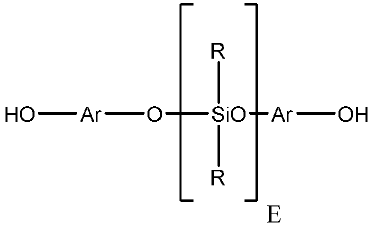 wherein R comprises a C₁-C₃₀ aliphatic, a C₆-C₃₀ aromatic group, or a combination thereof, wherein Ar comprises one or more C₆-C₃₀ aromatic group(s), or one or more alkyl containing C₆-C₃₀ aromatic group(s), wherein E has an average value of 20-200; or
   (ii) the structure 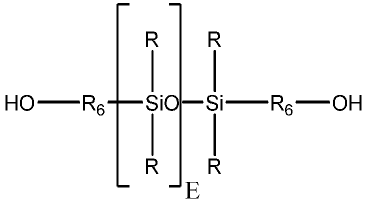 wherein R comprises a C₁-C₃₀ aliphatic, a C₆-C₃₀ aromatic group, or a combination thereof, wherein R₆ comprise C₆-C₃₀ aromatic group, or a combination of a C₆-C₃₀ aromatic group and a C₁-C₃₀ aliphatic group, wherein E has an average value of 20-200;
   wherein the wt% siloxane of (b) is between 15- to 25 %;
(c) greater than 0.1 wt.% and less than 0.3 wt.% of the total blend composition of an anti-drip agent being polytetrafluoroethylene encapsulated in styrene-acrylonitrile (TSAN), the perfluorinated polyolefin of the anti-drip agent being in a fibrous form;(d) 0.01 to 0.15 wt.% of a flame retardant additive based on weight of the blend composition;
   wherein the wt% of siloxane of the blended composition is between 1.5 and 5 %:
   wherein the blend composition has a heat deflection temperature (HDT) of at least 150°C at 1.8 MPa, according to ASTM D 648-07;
   wherein the blend composition has a vicat softening temperature (Vicat B/50) of at least 170°C, according to ASTM D 1525-09;
   wherein an article molded from the blend composition has a notched Izod impact strength of at least 400 J/m at 23°C at a thickness of 5_mm_( 0.2 inches), according to ASTM D256-10; and
   wherein a molded article from the blend composition has a UL94 rating of V0 at 1.5 mm thickness.(e) In a second embodiment, an injection molded article comprises the blend composition according to the first embodiment,
   wherein the article has the following characteristics:(a) a notched izod impact strength of at least 400 J/m at 23° C at a thickness of 5 mm (0.2 inches), according to ASTM D 256-10; and (b) a UL94 rating of V₀ at 1.5 mm thickness. and optionally (c) a heat deflection temperature (HDT) of at least 150°C at 1.8 MPa, according to ASTM D 648-07; and(d) a vicat softening temperature (Vicat B/50) of at least 170°C, according to ASTM D 1525-09.

In a further embodiment, a polycarbonate blend composition according to the first embodiment can comprise: (a) a 2-phenyl-3,3-bis-(4-hydroxyphenyl)phthalimidine (PPPBP)/ bisphenol A (BPA) copolycarbonate; and(b) a second polycarbonate wherein the second polycarbonate is a polysiloxane block copolymer derived from(i) the structure 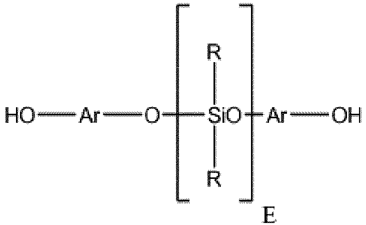
wherein R comprises a C₁-C₃₀ aliphatic, a C₆-C₃₀ aromatic group, or a combination thereof,
wherein Ar comprises one or more C₆-C₃₀ aromatic group(s), or one or more alkyl containing C₆-C₃₀ aromatic group(s), wherein E has an average value of 20-200; or
   (ii) the structure 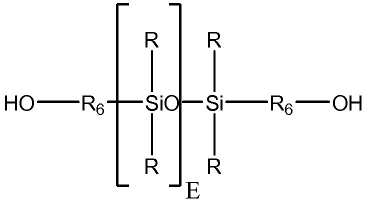 wherein R comprises a C₁-C₃₀ aliphatic, a C₆-C₃₀ aromatic group, or a combination thereof, wherein R₆ comprise C₆-C₃₀ aromatic group, or a combination of a C₆-C₃₀ aromatic group and a C₁-C₃₀ aliphatic group, wherein E has an average value of 20-200;
   wherein the wt% siloxane of (b) is between 1-25 %;
   (c) greater than 0.1 wt.% and less than 0.3 wt.% of the total blend composition of an anti-drip agent being polytetrafluoroethylene encapsulated in styrene-acrylonitrile (TSAN), the perfluorinated polyolefin of the anti-drip agent being in a fibrous form;
      and
   (d) 0.01 to 0.15 wt% of the blend composition of perfluorobutane sulfonate (Rimar salt);
wherein the wt% of siloxane of the blended composition is between 1.5 and 5 %;
wherein the blend composition has a heat deflection temperature (HDT) of at least 150°C at 1.8MPa, according to ASTM D 648-07; wherein the blend composition has a vicat softening temperature (Vicat B/50) of at least 170°C, according to ASTM D 1525-09;
and wherein a molded article from the blend composition has a UL94 rating of V₀ at 1.5mm thickness.

In the various embodiments, (i) the E value of the second polycarbonate can be between 20 and 70 or 30 and 50; and/or (ii) the first polycarbonate can comprise carbonate units derived from at least one of the following monomers 3,3-bis(4-hydroxyphenyl)-2-phenylisoindolin-1-one (PPPBP), 1,1-bis(4-hydroxyphenyl)-1-phenylethane(Bisphenol-AP), and 1,1-bis(4-hydroxyphenyl)-3,3,5-trimethyl-cyclohexane (Bisphenol-TMC); and/or (iii) the first polycarbonate can comprise carbonate units derived from monomers of 3,3-bis(4-hydroxyphenyl)-2-phenylisoindolin-1-one (PPPBP); and/or (iv) the first polycarbonate can further comprise carbonate units derived from 2,2-bis(4-hydroxyphenyl)propane (bisphenol-A); and/or (v) the first polycarbonate can comprise aromatic ester units derived from isophthalic acid or terephthalic acid or isophthalic acid esters or terephthalic esters or a combination isophthalic acid and terephthalic acid or isophthalic acid esters and terephthalic acid esters; and/or (vi) the first polycarbonate can comprise 4,4'-(3,3,5-trimethylcyclohexane-1,1-diyl)diphenol; and/or (vii) the second polycarbonate can further comprise a carbonate unit derived from the polysiloxane blocks having the structure 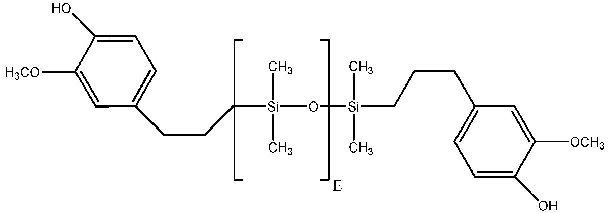 or 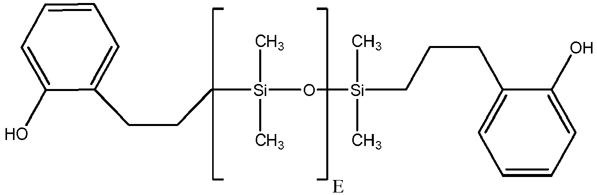 wherein E has an average value of between 20 and 200; and/or (viii) wherein Ar can be derived from resorcinol, the polydiorganosiloxane repeating units can be derived from dihydroxy aromatic compounds of formula: 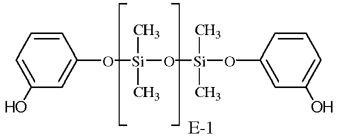 or, where Ar is derived from bisphenol-A, wherein the dihydroxy aromatic compounds can have a formula: 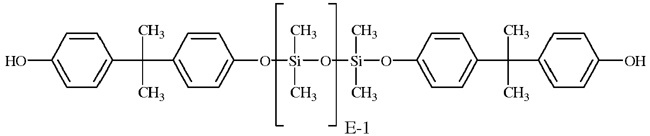 wherein E has an average value of between 20 and 200; and/or (ix) the flame retardant additive can be selected from at least one of the following: perfluorinated C₁₋₁₆ alkyl sulfonates, potassium diphenylsulfone sulfonate (KSS), sodium benzene sulfonate, sodium toluene sulfonate (NATS), salts derived from an alkali metal or alkaline earth metal (including lithium, sodium, potassium, magnesium, calcium and barium salts) or an inorganic acid complex salt; and/or (x) the perfluorinated C₁₋₁₆ alkyl sulfonate can be selected from at least one of the following: potassium perfluorobutane sulfonate (Rimar salt), potassium perfluoroctane sulfonate, and tetraethylammonium perfluorohexane sulfonate; and/or (xi) the perfluorinated polyolefin can have the molecular formula (C₂F₄)ₙ, wherein n is 2 to 200; and/or (xii) the perfluorinated polyolefin of the anti-drip agent is in a fibrous form ; and/ef (xiii) the anti-drip agent is T-SAN; and (xiv) the T-SAN is greater than 0.1 wt% and less than 0.3 wt%; and (xv) T-SAN can be made from emulsion polymerization; and/or (xvi) the second polycarbonate can have an overall siloxane % weight of 15 %-25 %, and the total siloxane weight percent in the blend composition can be between 1.5 and 5%, wherein an article molded from the blend composition can have a
notched izod impact strength of at least 400 J/m at 23° C at a thickness of 5 mm (0.2 inches), according to ASTM D 256-10; and/or (xvii) the second polycarbonate can have an overall siloxane weight percent of 3 %-10 %, and the total siloxane weight percent in the blend composition can be between 1.5 and 5 %, wherein an
article injection -molded from the blend composition has a notched izod impact strength of at least 400 J/m at 23° C at a thickness of 5 mm (0.2 inches), according to ASTM D 256-10; and (xviii) the article can be subjected to a metallization process, dye sublimation process or an overmolding process; and/or (xix) the article can be metalized; and/or (xx) the article can be an enclosure or housing for a vehicle light (headlight or tail-light), or a cell phone; and/or (xxi) the metallized article can be formed by vapor deposition; and/or (xxii) the article can be a home electrical component, a medical device component, an enclosure or housing for a vehicle light (headlight or tail-light), a cell phone, a computer, a docking station, a PDA, a MP3 player, or a GPS module; and/or (xxiii) the home electrical component can be a cell phone, a housing for a video gaming device, a camera, a video recording, a computer housing, an electronic tablet, a hand receiver, and a kitchen device; and/or (xxiv) the home electrical component can be subject to dye sublimation; and/or (xxv) a method of reducing or inhibiting the amount of surface structural defects on an article, can comprise molding the polycarbonate blend composition, wherein the article molded from the polycarbonate blend composition exhibits between a 0.5 % and 100 % decrease in the level of a surface structural defect as compared to the surface of a known control article having a polysiloxane content greater than 5 % of the total wt% of the control article, wherein the surface structural defect is delamination, pearlescence, surface imperfections, uneven shine, non-uniform pearlescence, fractures, pealing, scaling, breakage, undesired coloring, abrasions, and/or hazing; and/or (xxvi) the second polycarbonate can haves an overall siloxane weight percent of 15 %-25 %, and the total siloxane weight percent in the blend composition can be between 1.5 and 5 %, wherein an article molded from the blend composition can have a notched izod impact
strength of at least 400 J/m at 23° C at a thickness of 5 mm (0.2 inches), according to ASTM D 256-10; and/or (xxvii) the second polycarbonate can have an overall siloxane weight percent of 3 %-10 %, and the total siloxane weight percent in the blend composition can be between 1.5 and 5 %, wherein an article molded from the blend composition can have a notched izod impact strength of at least 400 J/m at 23° C at a thickness of 5 mm (0.2 inches, according to ASTM D 256-10.

### EXAMPLES

### EXAMPLE 1:

### BPA COPOLYCARBONATE/20% SILOXANE PC (POLYCARBONATE) COPOLYMER BLENDS

Various blends of PPPBP/BPA copolycarbonate with polysiloxane block copolycarbonate and with BPA polycarbonate were formed, according to formulations specified in Tables 1 and 2. BPA copolycarbonate/siloxane based polycarbonate copolymer blends (a 20% siloxane content in the polycarbonate polysiloxane copolymer ("SiPC1")), according to the formulations specified below in Tables 1 and 2, were tested for various attributes, such as heat resistance, and impact strength. Delamination and surface defects were also noted in molded articles from these formulations, as indicated in Tables 2 and 3. Delamination was determined based on visual inspection for surface imperfections and appearance.

**Table 1**

| Formulation for a 20 wt% Siloxane Based Blend | | |
|---|---|---|
| Name of Polymer/Ingredient | Description | Amount in Kilograms (KG) |
| PPPBP/BPA Copolymer (CoPC) | Co-PC made from 35 wt% (65 wt% BPA with molecular wt (Mw) of 25,000 (25K) Mw | 64.00 |
| Si-PC1 | CoPC having 20 wt% Siloxane content (with an average E length of 48 and 80 wt%. Mw approximately (∼) 29,000) | 19.00 |
| BPA-PC Copolymer | PC130/100/High Flow (HF) Grade with PCT Eng Cap (PC130 has a Mw of 35,000; PC100 has a Mw of 30,000); and HF Grade PC has a Mw of 22,000 - all Mw values are average values derived from gas permeation chromatography with polycarbonate as the internal Mw standard) These materials are available from SABIC Innovative Plastics US | 17.00 |
| Phosphite Stabilizer | Stabilizer | 0.08 |
| Hindered Phenol Anti-Oxidant | Oxidation Preventer | 0.04 |
| Pentaerythiritol Tetrastearate | Mold Release | 0.27 |
| Potassium Perfluorobutane Sulfonate/Rimar Salt | Flame Retardant Additive | 0.08 |
| SAN Encapsulated PTFE-Intermediate Resin | Anti-drip and flame retardant additive | 0.20 |

For formulations 1-19 in Table 2, the weights of the polymer components total 100 parts per hundred (pph). All other additives, such as Rimar salt are added to the 100 pph of the polymer composition. For example, the polymer composition of Formulation 3 in Table 2 is composed of 64 pph of PPPBP/BPA co-PC, 19 pph of BPA-PC and 17 pph of Si-PC1 for a total of 100 pph. Additives were then added to the 100 pph of the polymer composition as described in Table 2. To determine the wt% of the Rimar salt in formulation 3, for example, 0.08 % Rimar salt is divided by the total wt of the composition and multiplied by 100 % (wt% Rimar salt = 0.08/100.67 x 100%). Irgaphos 168 (phosphite stabilizer) and Irganox 1076 (hindered phenol) are available from CIBA Specialty Chemicals Corporation.

**Table 2**

| Formulations and Resultant Properties of Siloxane Based Blends | | | | | | | | | | | | | | | | | | | |
|---|---|---|---|---|---|---|---|---|---|---|---|---|---|---|---|---|---|---|---|
| RAW MATERIAL | 0.2% T-SAN, 0.08% Rimar | | | | | 0.1% T-SAN, 0.08% Rimar | | | | 0.2% Granular T-SAN, 0.08% Rimar | | | | No T-SAN, No Rimar | | | No T-SAN, 0.08% Rimar | | |
| Formulation | 1 | 2 | 3 | 4 | 5 | 6 | 7 | 8 | 9 | 10 | 11 | 12 | 13 | 14 | 15 | 16 | 17 | 18 | 19 |
| PPPBP/BPA Co-PC | 64 | 64 | 64 | 64 | 64 | 64 | 64 | 64 | 64 | 64 | 64 | 64 | 64 | 64 | 64 | 64 | 64 | 64 | 64 |
| 100 grade BPA-PC | 23 | 21 | 19 | 17 | 15 | 21 | 19 | 17 | 15 | 21 | 19 | 17 | 15 | 21 | 19 | 17 | 21 | 19 | 17 |
| Si-PC1 | 13 | 15 | 17 | 19 | 21 | 15 | 17 | 19 | 21 | 15 | 17 | 19 | 21 | 15 | 17 | 19 | 15 | 17 | 19 |
| Irgaphos 168 | 0.08 | 0.08 | 0.08 | 0.08 | 0.08 | 0.08 | 0.08 | 0.08 | 0.08 | 0.08 | 0.08 | 0.08 | 0.08 | 0.08 | 0.08 | 0.08 | 0.08 | 0.08 | 0.08 |
| Irganox 1076 | 0.04 | 0.04 | 0.04 | 0.04 | 0.04 | 0.04 | 0.04 | 0.04 | 0.04 | 0.04 | 0.04 | 0.04 | 0.04 | 0.04 | 0.04 | 0.04 | 0.04 | 0.04 | 0.04 |
| PETS | 0.27 | 0.27 | 0.27 | 0.27 | 0.27 | 0.27 | 0.27 | 0.27 | 0.27 | 0.27 | 0.27 | 0.27 | 0.27 | 0.27 | 0.27 | 0.27 | 0.27 | 0.27 | 0.27 |
| Rimar salt | 0.08 | 0.08 | 0.08 | 0.08 | 0.08 | 0.08 | 0.08 | 0.08 | 0.08 | 0.08 | 0.08 | 0.08 | 0.08 | | | | 0.08 | 0.08 | 0.08 |
| Fibrous T-SAN | 0.2 | 0.2 | 0.2 | 0.2 | 0.2 | 0.1 | 0.1 | 0.1 | 0.1 | | | | | | | | | | |
| Granular PTFE | | | | | | | | | | 0.2 | 0.2 | 0.2 | 0.2 | | | | | | |
| Izod Impact Strength: ASTM D256 at 23°C (J/m) | 286 | 307 | 328 | 421 | 387 | 230 | 233 | 303 | 440 | 286 | 208 | 343 | 396 | 444 | 457 | 441 | 458 | 303 | 453 |
| Heat Deflection Temperature 1.82MPa | 166.8 | 167.9 | 169 | 167.8 | 168.2 | 168.7 | 168.5 | 168.7 | 167.6 | 167.6 | 168.3 | 168.7 | 168.1 | 168.5 | 167.8 | 168.4 | 167.4 | 168.1 | 167.8 |
| Delamination | N | N | N | N | N | N | N | Y | Y | N | N | Y | Y | Y | Y | Y | Y | Y | Y |

In above Table 2, formulations 1-3 and 5-9 are not encompassed by the invention as claimed herein; formulations 10-19 are provided instead for comparison.

The blends described in Table 2 (*i.e*., Formulations 1 to 19) were initially formulated to have a very similar Heat Deflection Temperature values (HDT) of between 168-169°C at 1.82 MPa and 3.2 mm thickness. As shown in Table 2 above, different PPPBP/BPA/SiPCl blends were formulated and tested with different wt% of different PC/siloxane weight percent loadings, 100 grade BPA/PC, presence or absence of T-SAN, or use of granular PTFE (Formulations 1-19). Formulations 1-19 were processed using the same 35 mm lab twin-screw extruder at 293°C (560°F) to ensure good dispersion of two different types of T-SAN having the PTFE in either a fibrous or granular form. A twin-screw extruder was required to ensure sufficient dispersion during the mixing and blending.

Impact property was evaluated by Notched Izod Test (NII) at room temperature (23°C). The NII impact strength on the datasheet of the high impact PPPBP/BPA copolycarbonate is 97J/m at 23°C per ASTM D 256 standards. One of the targets was to achieve a NII impact strength in the blends of at least 300 J/m while achieving a Heat Deflection Temperature at 0.45 MPa of greater than 165°C with no visible delamination or appearance defects in molded parts. Results regarding Izod Impact Strength at 23°C, according to ASTM D256, heat deflection temperature at 1.82 MPa, according to ASTM D 648-07, and whether delamination or surface defects was observable are shown in the last three rows of Table 2.

Delamination was observed in formulations in three different ways and was measured by a tool used to probe for delamination or visual streaking defects having a 100 mm diameter disc with a thickness of 1.35 mm. The part contains a circular gate in the center of the flat surface of the disc. The diameter of the gate is 16 mm. Visual streaking or physical delamination typically occurs in a radical pattern originating from the gate area at the center of the disc. The discs may be molded on a Van Dorn HT Model 120 ton molding machine, with resin melt temperature at 325°C and mold temperature of 105°C. Injection speed was 25 millimeters per second (mm/sec), and total shot to shot cycle time was 35 seconds.

The results indicate that Formulation 4, encompassed by the instant invention, had impact strength of at least 400 J/at 23°C ASTM D256, a Heat Deflection Temperature of greater than 167°C, and no delamination. Formulation 4 contains at least 19 wt% of the SiPC1 where the level of total siloxane in the formulation was between 3 and 4.5 total wt% and 0.2 wt% of T-SAN. In contrast, Formulation 8 (not encompassed by the instant invention) with the same level of siloxane, but 0.1 wt% of T-SAN, had an impact strength of 303 J at 23°C ASTM D256, a Heat Deflection Temperature at .45 MPa of greater than 167°C, but delamination. Formulation 18 (provided for comparison), with same siloxane content but no T-SAN, has an impact strength of 453 J at 23°C ASTM D256, a Heat Deflection Temperature at 0.45 MPa of greater than 167°C, but delamination. This indicates that although acceptable levels of impact strength and heat deflection temperature were maintained formulations with reduced or no T-SAN, delaminating arose.

Further delamination results are shown Table 3 and can be correlated with the formulations of Table 2. Formulations 8 and 9 (not encompassed by the instant invention) have 0.1% fibrous T-SAN, and a 19 or 21 weight% of the SiPC1 based polycarbonates, and showed delamination. Formulations 12 and 13 (provided for comparison) contained 0.2 % granular T-SAN and at least 19 or 21 wt% SiPC1-based polycarbonates and showed delamination. Formulations 14-17 and 19 (all provided for comparison) with no T-SAN at all levels of SiPC1 based formulations indicated delamination.

**Table 3**

| Delamination Results of Tested Samples of Table 2 | | | | | |
|---|---|---|---|---|---|
| SiPC1 Loadings in Wt% | 13 | 15 | 17 | 19 | 21 |
| 0.2 % fibrous T-SAN, 0.08 % Rimar | N | N | N | N | N |
| 0.1 % fibrous T-SAN, 0.08 % Rimar | | N | N | Y | Y |
| 0.2 % Granular T-SAN, 0.08 % Rimar | | N | N | Y | Y |
| No T-SAN, No Rimar | | Y | Y | Y | |
| No T-SAN, 0.08 % Rimar | | Y | N | Y | |

PPPBP/BPA siloxane based polycarbonate blends without any fire retardant additives (either granular or fibrous T-SAN) were most likely to have delamination even with siloxane loadings as low as 15 wt%. The 0.2 wt% loading of fibrous T-SAN ensure no delamination with SiPC1 based loadings as high as 19%. Granular T-SAN at 0.2 wt% did not prevent delamination of formulations with siloxane based loadings at 19 %. With a slight reduction in fibrous T-SAN to 0.1 % wt however, delamination was observed in the SiPC1 based loadings at 19 %.

### EXAMPLE 2:

### SYNTHESIS OF PPPBP/BPA

PPPBP/BPA was synthesized in the following manner. PPPBP monomer (2075 g, 5.27 mol), 33 % aqueous sodium hydroxide (1407 g, 11.6 mol) and deionized (DI) water (4818 g) were combined in a tank and agitated until a solid free solution was obtained. The PPPBP monomer solution was transferred to a reactor addition pot. To the formulation tank was added dichloromethane (15 liters (L)), DI water (8 L), bisphenol-A (2425 g, 10.6 mol), para-cumylphenol (160 g, 0.75 mol), triethylamine (30.0 g, 0.30 mol) and sodium gluconate (10 g, iron scavenger). The formulation mixture was stirred then transferred to the batch reactor. The formulation tank was rinsed with dichloromethane (5 L) which was transferred to the batch reactor. The reactor agitator was started and the circulation flow was set at 80 L/min. Phosgene vapor flow to the reactor was initiated by the DCS at 80 g/min. Addition of the PPPBP monomer solution was initiated and controlled by the DCS at 830 g/min at simultaneous point in the process. The pH of the reaction was maintained at a target of 8.5 by DCS controlled addition of 33 % aqueous NaOH. After complete addition of the PPPBP monomer solution to the reactor (10 min) the addition pot was flushed with DI water (2 L). Phosgene addition continued until the total set point was reached (2200 g, 22.2 moles, 27.5 min total time). After completion of the phosgene addition, the reactor pH was raised to 9.5 by addition of 33 % aqueous NaOH. A sample of the reactor was obtained and verified to be free of un-reacted BPA and free of chloroformate. Mw of a reaction sample was determined by gel permeation chromatography (GPC) (Mw = 23610, PDI = 2.3). An additional charge of phosgene was added (200 g, 2.0 mole) to the reactor. The reactor was purged with nitrogen then the batch was transferred to the centrifuge feed tank.

To the batch in the centrifuge feed tank was added dilution dichloromethane (8 L) then the mixture was purified using a train of liquid - liquid centrifuges. Centrifuge cycle one removed the brine phase. Centrifuge cycle two removed the catalyst by extracting the resin solution with aqueous hydrochloric acid (pH 1). Centrifuge three through eight removed residual ions by extracting the resin solution with DI water. A sample of the resin solution was tested and verified less than 5 ppm each of ionic chloride and residual triethylamine.

The resin solution was transferred to the precipitation feed tank. The resin was isolated as a white powder by steam precipitation followed by drying in a cone shaped dryer using heated nitrogen (99°C (210°F)). Powder yield 3175 g. Mw = 23130, polydispersity index (PDI) = 2.2.

### EXAMPLE 3:

### SYNTHESIS OF SIPC1

SiPC1 was synthesized in the following manner. Dichloromethane (15 L), DI water (10 L), bisphenol-A (3700 g, 16.2 moles), E45 (i.e., an average siloxane chain of 45 repeating units) eugenol siloxane (1150 g, 0.30 mole), triethylamine (30 g, 0.30 mole, 1.7 mole %) and sodium gluconate (10 g, iron scavenger) was added to a formulation tank. The mixture was stirred and transferred to the batch reactor. The formulation tank was rinsed with dichloromethane (5 L), and transferred to the batch reactor. The reactor agitator was started and the circulation flow was set at 80 L/min. Phosgene vapor over the reactor was initiated by the DCS (segment 1: 215 g, 80 g/min rate). The pH of the reaction was maintained at a target of 10.0 by a distributed control system ("DCS") controlled addition of 33 % aqueous NaOH. After addition of 215 g of phosgene, a solution of PCP (116 g, 0.55 mole) in dichloromethane was added to the reactor by DCS control while phosgene flow to the reactor continued. Phosgene addition continued until the total set point was reached (2150 g, 21.7 moles). After completion of the phosgene addition, a sample of the reactor was obtained and verified to be free of un-reacted bis-phenol A and free of chloroformate. Mw of a reaction sample was determined by GPC (Mw = 30278, PDI = 2.7). An additional charge of phosgene was added (200 g, 2.0 mole) to the reactor. The reactor was purged with nitrogen then the batch was transferred to the centrifuge feed tank.

To the batch in the feed tank was added dilution A dilution of dichloromethane (8 L) was added to the batch in the feed tank and then the mixture was purified using a train of liquid - liquid centrifuges. Centrifuge cycle one removed the brine phase. Centrifuge cycle two removed the catalyst by extracting the resin solution with aqueous hydrochloric acid (pH 1). Centrifuge cycles three through eight removed the residual ions by extracting the resin solution with deionized water. A sample of the resin solution was tested and verified less than 5 ppm each of ionic chloride and residual triethylamine.

The resin solution was transferred to the precipitation feed tank. The resin was isolated as a white powder by steam precipitation followed by drying in a cone shaped dryer using heated nitrogen (99°C(210°F), Powder yield 3130 g. Mw = 28925, PDI = 2.9.

### EXAMPLE 4 (COMPARATIVE):

### BPA COPOLYCARBONATE/6 WT% SILOXANE PC COPOLYMER (SIPC2) BLENDS

Various blends of PPPBP/BPA copolycarbonate with polysiloxane block copolycarbonate and with BPA polycarbonate were formed according to formulations specified in Tables 4 and 5. These formulation blends differ from the formulations in Example 1 in that the siloxane copolymer (SiPC2) contained 6 % siloxane (hereafter "SiPC2") rather than the 20% siloxane ("SiPC1") used in the formulations of Example 1. Accordingly, the formulations A-O, containing SiPC2 are provided here for comparison only. The Formulations specified below in Tables 4 and 5 were tested for various attributes such as heat resistance, and impact strength. Delamination is usually not observed in SiPC2 based polycarbonate copolymer blends.

**Table 4**

| Formulation of a 6 Wt% Siloxane Blend | | |
|---|---|---|
| Name of Polymer/Ingredient | Description | Amount (KG) |
| PPPBP/BPA CoPC | CoPC made from 35 wt% PPPBP and 65 wt% BPA with a Mw of 25K | 554.00 |
| Si-PC2 | CoPC having a 6 wt% Siloxane content with an average E value of 48 and 80 wt% BPA. MW ∼ 24,000 | 35.00-45.00 |
| BPA-PC Copolymer | PC130/100/High Flow (HF) Grade with PCT Eng Cap (PC130 has a Mw of 35,000; PC100 has a Mw of 30,000; and HF Grade PC has a Mw of 22,000 - all Mw values are average values derived from gas permeation chromatography with polycarbonate as the internal Mw standard) | 0.0-10.0 |
| Phosphite Stabilizer | Stabilizer | 0.08 |
| Hindered Phenol Anti-Oxidant | Oxidation Preventer | 0.04 |
| Pentaerythiritol Tetrastearate | Mold Release | 0.27 |
| Potassium Perfluorobutane Sulfonate/Rimar Salt | Flame Retardant Additive | 0.08 |
| SAN Encapsulated PTFE-Intermediate Resin | Anti-drip and flame retardant additive | 0.20 |

**Table 5**

| Formulations and Resultant Properties of 6 Wt% Siloxane Based Blends | | | | | | | | | | | | | | | |
|---|---|---|---|---|---|---|---|---|---|---|---|---|---|---|---|
| Name | A | B | C | D | E | F | G | H | I | J | K | L | M | N | O |
| PPPBP CoPC | 55 | 55 | 55 | 55 | 55 | 55 | 55 | 55 | 55 | 55 | 55 | 55 | 55 | 55 | 55 |
| Si-PC2 | 45 | 35 | 35 | 45 | 35 | 35 | 45 | 35 | 35 | 45 | 35 | 35 | 25 | 18 | 10 |
| 100 PC | | | 10 | | | 10 | | | 10 | | | 10 | 20 | 27 | 35 |
| 130 PC | | 10 | | | 10 | | | 10 | | | 10 | | | | |
| Phosphite | .08 | .08 | .08 | .08 | .08 | .08 | .08 | .08 | .08 | .08 | .08 | .08 | .08 | .08 | .08 |
| Anti-O2 | .04 | .04 | .04 | .04 | .04 | .04 | .04 | .04 | .04 | .04 | .04 | .04 | .04 | .04 | .04 |
| PETS | .27 | .27 | .27 | .27 | .27 | .27 | .27 | .27 | .27 | .27 | .27 | .27 | .27 | .27 | .27 |
| Rimar salt | .08 | .08 | .08 | .08 | .08 | .08 | .08 | .08 | .08 | .08 | .08 | .08 | .08 | .08 | .08 |
| T-SAN | | | | | | | 0.2 | 0.2 | 0.2 | 0.2 | 0.2 | 0.2 | 0.2 | 0.2 | 0.2 |
| Carbon black from Clariant; | | | | .35 | .35 | .35 | | | | .35 | .35 | .35 | .35 | .35 | .35 |
| Titanium Dioxide ("Ti-Pure" from DuPont) | 2 | 2 | 2 | | | | 2 | 2 | 2 | | | | | | |
| Heat deflection 1.82 MPa | 147.5 | 149.2 | 148.6 | 147.6 | 148.6 | 150.1 | 147.8 | 148.9 | 148.5 | 149.2 | 151.4 | 149.4 | 150.4 | 150.3 | 151.1 |
| Izod ASTM D 256 23°C (J/M) | 202 | 204 | 210 | 212 | 217 | 219 | 209 | 210 | 211 | 255 | 234 | 229 | 183 | 172 | 158 |

The blends with Si-PC2 were initially formulated to achieve a Heat Deflection Temperature of at least 145°C at 1.82 MPa and 3.2 mm thicknesses. In the first formulation as indicated in Table 4, 130 grade of PC was used to further enhance the ductility and heat with a higher available molecular weight among all the PCs. A twin-screw extruder was required to ensure sufficient dispersion during the mixing and blending.

Impact property was evaluated by Notched Izod Test (NII) at room temperature (23°C). One of the targets was to improve the NII impact strength in the Si-PC2 based polycarbonate blends to at least 200 J/m while achieving a Heat Deflection Temperature of greater than 145 °C with no visible delamination or appearance defects in the molded parts.

As shown in Table 5 above, different PPPBP/BPA/SiPC2 polycarbonate blends with different levels of PC/siloxane loadings (SiPC2), T-SAN-types and loadings were formulated (Comparative Formulations A-O) and tested. Comparative Formulations A-O were processed using the same 35 mm lab twin-screw extruder at 560°F to ensure the T-SAN form as either fibrous or granular.

Results regarding Izod Impact Strength at 23°C, according to ASTM D256, and heat deflection temperature at 1.82 MPa, according to ASTM D 648-07, are shown in the last two rows of Table 5. Due to the level of PPPBP/BPA copolycarbonate levels at 55 wt% of the total formulation blends, comparative Formulations A-O exhibited at least a 147.5°C heat deflection temperature at 1.82 MPa, according to ASTM D 648-07. Accordingly, since all comparative Formulations A-O had this same wt% of PPPBP/BPA copolycarbonates, the formulations exhibited a heat resistance lower than the heat resistance characterizing the instant invention.

Impact strength also of at least 200 J/at 23°C ASTM D256 were observed in the formulations with at least 35 wt% of the Si-PC2 based polycarbonate where the level of total siloxane in the formulation was between 3 and 4.5 total wt%. Additionally, the comparative formulations A-O show a vicat softening temperatures of 170°C at ASTM D 1525-09, V0 at 1.5 mm, UL94 rating. Importantly, the T-SAN containing formulations (Comparative Formulations G-O of Table 5) provided good colorability to both black (data not shown) and white and colors in between (data not shown) without delamination or appearance defects.

As indicated by Table 5 vs. Table 2, it was observed that an improvement in impact strength was greater in PPPBP/BPA/Si-PC1 (i.e., 20% siloxane content in Si-PC1) formulations than PPPBP/BPA/Si-PC2 (i.e., 6 wt% siloxane content in Si-PC2). Nevertheless, impact strength and Heat Deflection Temperature improved in both types of Formulations (Table 1 and Table 4) over BPA-PPPBP alone based polycarbonate blends (data not shown). T-SAN was helpful to prevent visual surface defects and delamination, as well as good colorability.

### EXAMPLE 5 (COMPARATIVE):

### SYNTHESIS OF SIPC2

SiPC2 was synthesized in the following manner. Dichloromethane (8L), DI water (9 L), bisphenol-A (4000 g, 17.5 moles), p-cumylphenol (160 g, 0.75 mole), triethylamine (30 g, 0.30 mole) and sodium gluconate (10 g). The mixture was transferred to the batch reactor. The formulation tank was rinsed with dichloromethane (3 L), which was transferred to the batch reactor. The reactor agitator was started and circulation flow was set at 80 L/min. Phosgene flow to the reactor was initiated (segment 1: 230 g, 80 g/min rate). A pH target of 10.0 was maintained throughout the batch by the DCS controlled addition of 33 % aqueous sodium hydroxide. After 230 g phosgene addition to the batch reactor the tubular reactor initiated to add E45 siloxane bis-chloroformate to the batch reactor (312 g, 0.08 mole, 20 wt% solution in dichloromethane chilled to 50 F). The D45 solution flow rate to the tubular reactor was 500 g/min (3.1 min addition cycle) with phosgene addition to the tubular reactor at 28 g/min (5 mol phosgene / mol D45 OH group) and 18 % aqueous sodium hydroxide flow to the tubular reactor at 316 g/min (5 mol NaOH / mol phosgene, chilled to 40 F). After completion of siloxane addition via the tubular reactor, the tubular reactor was flushed with dichloromethane (2 L) and DI water (2 L) to the batch reactor. Phosgene flow continued to the batch reactor during the tubular reactor cycle (segment 2: 2070 g, 80 g/min rate). The total phosgene addition time to the batch reactor was 29 minutes. After completion of the phosgene addition, a sample of the reactor was obtained and verified to be free of un-reacted BPA and free of chloroformate. Mw of the reaction sample was determined by GPC (Mw = 23629, PDI = 2.8). The reactor was purged with nitrogen then the batch was transferred to the centrifuge feed tank.

To the batch in the feed tank was added dilution dichloromethane (8 L) then the mixture was purified using a train of liquid - liquid centrifuges. Centrifuge one removed the brine phase. Centrifuge two removed the catalyst by extracting the resin solution with aqueous hydrochloric acid (pH 1). Centrifuges three through eight removed residual ions by extracting the resin solution with DI water. A sample of the resin solution was tested and verified less than 5 ppm each of ionic chloride and residual triethylamine.

The resin solution was transferred to the precipitation feed tank. The resin was isolated as a white powder by steam precipitation followed by drying in a cone shaped dryer using heated nitrogen (99°C(210°F)), Powder yield 3.7 kg. Mw = 23523, PDI = 2.6.

### EXAMPLE 6:

### IMPORTANCE OF T-SAN TO DISPERSEMENT OF SILICONE DOMAINS

The presence of at least 0.1% of T-SAN having fibrous PTFE significantly helps eliminate any delamination and improves surface appearances of PPBP/BPA copolycarbonate blends particularly with blends using 20 wt% siloxane block copolycarbonate (SiPC1). The combination of fibrous PTFE and polystyrene-polyacrylonitrile in T-SAN may help to effectively disperse siloxane blocks of the PPPBP/BPA molecules throughout the polycarbonate matrix of the blends thereby reducing the tendency of the siloxane blocks to form large aggregates that lead to delamination of unacceptable surface appearances in molded parts. As can be observed in Figure 1, Scanning Transmission Electron Microscopy (STEM) pictures at two magnifications show different mixing behavior for blends of SiPC1 (20 wt% siloxane block) copolycarbonate with PPPBP/BPA copolycarbonate with T-SAN (at 0.2 wt%) in the blend formulation and without T-SAN in the blend formulation. As seen in Figure 1, the siloxane-rich domains (the white shapes in the picture) are smaller and better dispersed when fibrous T-SAN was present (Examples A and B of Figure 1) than when fibrous T-SAN was not present (Examples C and D).

Surprisingly, smaller size siloxane rich domains were also observed for 6 wt% siloxane block copolycarbonate blends when fibrous T-SAN was present (Examples G and H) compared to blends that contained no fibrous T-SAN even though delamination or surface defects were not observed for molded parts from these blends. The STEM pictures perhaps suggest that under more severe sheer molding conditions that was produced in the molding process for the molded articles of this study, delamination or surface defects might appear in formulations without T-SAN even with the SiPC2 (6 wt% siloxane blocks) copolycarbonate blend formulations.

### EXAMPLE 7 (COMPARATIVE):

### FLAME RETARDANCY (FR) ADDITIVE STUDY

Flammability tests were performed on the Si-PC2 based comparative Formulations A-O as shown in Table 7. These comparative formulations are the same as those shown in Table 5. The flammability tests were performed following the procedure of Underwriter's Laboratory Bulletin 94 entitled "Tests for Flammability of Plastic Materials, UL94". According to this procedure, the materials were classified as either UL94 V-0, UL94 V-1 or UL94 V-2 on the basis of the test results obtained for five samples. The procedure and criteria for each of these flammability classifications according to UL94, are, briefly, as follows:
Procedure: A total of 10 specimens (2 sets of 5) are tested per thickness. Five of each thickness are tested after conditioning for 48 hours at 23°C, 50 % relative humidity. The other five of each thickness are tested after conditioning for seven days at 70° C. The bar is mounted with the long axis vertical for flammability testing. The specimen is supported such that its lower end is 9.5 mm above the Bunsen burner tube. A blue 19 mm high flame is applied to the center of the lower edge of specimen for 10 seconds. The time till the flaming of the bar ceases is recorded. If burning ceases, the flame is reapplied for an additional 10 seconds. Again the time until the flaming of the bar ceases is recorded. If the specimen drips particles, these shall be allowed to fall onto a layer of untreated surgical cotton placed 305 mm below the specimen.

**Table 6**

| Criteria for flammability classifications according to UL94: | | | |
|---|---|---|---|
| Type of Test | Fire Rating V0 | Fire Rating V1 | Fire Rating V2 |
| Individual Flame Time | Greater than or equal to (≥) 10 | ≥30 | ≥30 |
| Total Flame Time of 5 Specimens | ≥50 | ≥250 | ≥350 |
| Glowing Time of Individual Specimen | ≥30 | ≥60 | ≥60 |
| Particles Ignite Cotton | No | No | Yes |

The probability of first time pass ("p(FTP)") value is a statistical evaluation of the robustness of UL94 V0 performance. When the p(FTP) value is one or nearly one the material is expected to consistently meet the UL94 V0 rating.

**Table 7**

| Comparative Formulations A-O and Resultant Properties of 6 Wt% Siloxane Based Blends | | | | | | | | | | | | | | | |
|---|---|---|---|---|---|---|---|---|---|---|---|---|---|---|---|
| | | | | | | | | | | | | | | | |

| Name | A | B | C | D | E | F | G | H | I | J | K | L | M | N | O |
|---|---|---|---|---|---|---|---|---|---|---|---|---|---|---|---|
| PPPBP CoPC | 55 | 55 | 55 | 55 | 55 | 55 | 55 | 55 | 55 | 55 | 55 | 55 | 55 | 55 | 55 |
| Si-PC2 | 45 | 35 | 35 | 45 | 35 | 35 | 45 | 35 | 35 | 45 | 35 | 35 | 25 | 18 | 10 |
| 100 PC | | | 10 | | | 10 | | | 10 | | | 10 | 20 | 27 | 35 |
| 130 PC | | 10 | | | 10 | | | 10 | | | 10 | | | | |
| Phosphite | .08 | .08 | .08 | .08 | .08 | .08 | .08 | .08 | .08 | .08 | .08 | .08 | .08 | .08 | .08 |
| Anti-O2 | .04 | .04 | .04 | .04 | .04 | .04 | .04 | .04 | .04 | .04 | .04 | .04 | .04 | .04 | .04 |
| PETS | .27 | .27 | .27 | .27 | .27 | .27 | .27 | .27 | .27 | .27 | .27 | .27 | .27 | .27 | .27 |
| Rimar salt | .08 | .08 | .08 | .08 | .08 | .08 | .08 | .08 | .08 | .08 | .08 | .08 | .08 | .08 | .08 |
| T-SAN | | | | | | | 0.2 | 0.2 | 0.2 | 0.2 | 0.2 | 0.2 | 0.2 | 0.2 | 0.2 |
| Carbon black | | | | .35 | .35 | .35 | | | | .35 | .35 | .35 | .35 | .35 | .35 |
| Titanium Dioxide | 2 | 2 | 2 | | | | 2 | 2 | 2 | | | | | | |
| Total FOT (seconds) (V0 at 1.5mm/23°C, 48 hours) | 29.85 | 27.55 | 30.0 | 18.1 | 15.05 | 17.1 | 18.35 | 21.55 | 21.75 | 16.85 | 17.80 | 14.15 | 15.85 | 17.80 | 23.95 |
| P(FTP) (V0 at 1.5mm/23°C, 48 hours) | 0.9 | 0 | 0 | 1 | 1 | 1 | 1 | 1 | 1 | 1 | 1 | 1 | 1 | 1 | 1 |
| Drip No./Burn to Clamp No. | 0 | 3/0 | 3/0 | 0 | 0 | 0 | 0 | 0 | 0 | 0 | 0 | 0 | 0 | 0 | 0 |

As can be seen above, most of the formulations of Table 7 meet the UL94 V0 rating (See Formulations A and D-O). This is generally due to the effectiveness of the PPPBP and Si-PC in lowering the fuel content, and the positive flame retardant effects of the Rimar salt and/or T-SAN that is present in the formulation. When comparing comparative Formulation B with comparative Formulation H, it was observed that when T-SAN is absent, the white formulation may fail to meet the UL94 V0 rating due to flaming drips (see Formulation B). When T-SAN is present, the dripping effect is suppressed (see Formulation H).

### EXAMPLE 8 (COMPARATIVE):

### VARIED BLEND COMPOSITIONS AND CORRESPONDING VO, NI, AND HDT VALUES

Various blends of PPPBP/BPA copolycarbonate with polysiloxane block copolycarbonate as specified in the Table 8 below. Each of comparative Formulations AA-LL contained the same amount of TSAN, KSS, and NaTS. The amounts of PPPBP and siloxane were varied in order to investigate their effects on ductility, heat deflection temperature, and flammability.

**Table 8**

| Formulation # → | AA | BB | CC | DD | EE | FF | GG | HH | II | JJ | KK | LL |
|---|---|---|---|---|---|---|---|---|---|---|---|---|
| 48 mol % PPPBP/BPA CoPC | | | 25.00 | 25.00 | 30.00 | - | 37.00 | 37.00 | - | 43.00 | 50.00 | 100.00 |
| 25 mol % PPPBP/BPA CoPC | | | | | | 50.0 | | | 75.0 | | | |
| SiPC2 (PC-Si copolymer with 6% Si content) | 100.0 | | 25.00 | 30.00 | 25.00 | 30.00 | 25.00 | 30.00 | 25.00 | 30.00 | 30.00 | |
| 100 grade PC | | 100 | 50.00 | 25.00 | 45.00 | | 38.00 | 13.00 | | 7.00 | | |
| NaTS | 0.02 | 0.02 | 0.02 | 0.02 | 0.02 | 0.02 | 0.02 | 0.02 | 0.02 | 0.02 | 0.02 | 0.02 |
| KSS | 0.07 | 0.07 | 0.07 | 0.07 | 0.07 | 0.07 | 0.07 | 0.07 | 0.07 | 0.07 | 0.07 | 0.07 |
| TSAN | 0.50 | 0.50 | 0.50 | 0.50 | 0.50 | 0.50 | 0.50 | 0.50 | 0.50 | 0.50 | 0.50 | 0.50 |
| MFR(330°C, 201 Kg) | 43.3 | 37.60 | 39.4 | 32.2 | 37.0 | 17.30 | 37.8 | 31.5 | 15.90 | 30.2 | 32.5 | 14.4 |
| PPPBP % of total composition | 0 | 0 | 7 | 7 | 14 | 14 | 18 | 18 | 21 | 21 | 24 | 48 |
| Si % of total composition | 6.0 | 0 | 1.5 | 5.8 | 1.5 | 5.8 | 1.5 | 5.8 | 1.5 | 5.8 | 5.8 | 0.0 |
| UL (V0@1.0mm) | F | F | P | P | P | P | P | P | P | P | P | F |
| UL (% VB@2.0mm) | P | F | P | P | P | P | P | P | P | P | P | F |
| NI Impact 23°C (J/m) | 721 | 712 | 656 | 563 | 550 | 472 | 183 | 390 | 199 | 336 | 264 | 98 |
| NI Impact 23°C (% Ductility) | 100 | 100 | 100 | 100 | 100 | 00 | 0 | 100 | 0 | 100 | 0 | 0 |
| HDT (1.8 MPa) | 114 | 126 | 125 | 124 | 137 | 136 | 140 | 140 | 150 | 145 | 147 | 192 |

The values of these characteristics can be controlled by adjusting the total PPPBP and siloxane content of the blend. See Table 9, wherein a comparison of comparative Formulations II-KK reveals that a balance of roughly 21 % PPPBP and 5.8 % siloxane imparts 100 % ductility, a UL V0 pass grade, and a heat deflection temperature of 150°C. For example, comparative Formulation II has 21 mole % PPPBP/BPA and 1.5 mole % siloxane of the total composition, and exhibited a Notched Izod impact at 23°C of 183 J/m. By increasing the mole wt% of siloxane and keeping the same mole % of PPPBP/BPA, comparative Formulation JJ exhibited an increased Notched Izod impact strength at 23°C of 336 J/m. An increase in the mole wt% of PPPBP/BPA while keeping the same mole wt % of siloxane in comparative Formulation KK resulted in a decrease Notched Izod impact strength at 23°C of 264 J/m. Accordingly, a higher mole wt% of PPPBP/BPA to mole wt % of siloxane resulted in a lower impact strength. The Heat Deflection Temperature increased with an increase in ratio of mole wt% of PPPBP/BPA to mole wt% of siloxane. This balance, however, is not perturbed by the presence of TSAN, KSS, or NATS. Comparative Formulations AA, BB, and LL show that a UL V0 pass grade is not obtained with transparent PC-siloxane copolymer, 100 grade polycarbonate, or 48 mol % PPPBC as the only polymer of their respective compositions.

### EXAMPLE 9:

### OVERALL OBSERVATIONS

The addition of fibrous T-SAN as an anti-dripping agent in the formulations described above at 0.2 wt% ensured FR performance of V0 at 1.5 mm as per UL standard. The T-SAN assisted the PPPBP/polycarbonate/ 20% siloxane (SiPC1) polycarbonate blends and reduced delamination in molded articles from these compositions. As can be seen in Figure 2, good aesthetics were observed in the PPPBP/polycarbonate/SiPC2 polycarbonate blends (with T-SAN and Rimar salt) and still were able to maintain good impact strength with notched izod values of 250 J/m at 23°C according to ASTM D 256 and Heat Distortion Temperatures near 150°C. Upon further reduction of siloxane percent weight content however, these blends loss their high impact strength values.

With regard to the PPPBP/polycarbonate/20% siloxane (SiPC1) formulations with T-SAN and Rimar salt, resistance to delamination was achieved with Heat Distortion Temperatures (exceeding 150°C) and with notched Izod values equal to or exceeding 400 J/m at 23°C according to ASTM D 256. However, higher siloxane content over 5 % total wt caused delamination to occur even in formulations with 0.2 wt% T-SAN. Further, issues arose with respect to die swelling and fabrication when the formulation contained 0.3 wt% or greater of T-SAN.

In addition, with an increase 20 wt% siloxane (SiPC1) polycarbonate or % PDMS loadings, the impact energy increased. The control group of PPPBP/carbonate/SiPCl blends without any T-SAN or Rimar salt had the highest impact energy, however, delamination occurred that makes the formulation not suitable for commercial use. Again, this may be occurring because the phase-separated layers of the delamination might contain higher loadings of region loadings of opaque siloxane polycarbonate. Granular T-SAN at 0.2 wt% loading behaved similar to fibrous T-SAN at 0.1 wt%. Rimar salt seemed to have no influence on the impact properties. Overall, Table 8 provides a summary of two blends meeting requirements of at least 250 J/m notched Izod at 23°C, a 149°C or greater Heat Deflection Temperature at 1.82 MPa, MFR values of greater than 15, and no appearance or delamination issues in molded parts. Inventive Formulation A (Tg = 182.6) of Table 9 is based on 64 wt% PPPBP/BPA, 19 wt% of 20% siloxane PC-Si and 17 wt% of Lexan* 130 resin with the additives as provided in formulation 3 of Table 2 except that the formulation does not contain TiO₂. Comparative Formulation B (Tg = 175) of Table 9 is based on 55 wt% PPPBP/BPA, 35 wt% of the 6% siloxane PC-Si, and 10 wt% of Lexan 130 resin with the additives as provided in formulation C of Table 5 except that the formulation does not contain any TiO₂. Overall, these results indicate a balance is required between PPPBP/BPA for heat resistance, polysiloxane polycarbonate and the level of siloxane for impact strength, and the presence of T-SAN for good aesthetics and colorability.

**Table 9**

| Test Code | Unit | Formulation A (invention) | Formulation B (comparative) |
|---|---|---|---|
| Tg | °C | 182.6 | 175 |
| Vicat B/50 | °C | 173 | 169 |
| HDT-0.455MPa | °C | 168.4 | 163 |
| HDT-1.82MPa | °C | 154.5 | 149 |
| PPP-BP | Mole % | 21 | 17 |
| % PDMS | % | 3.72 | 2.1 |
| MFR at 330°C, 2.16 kg | g/10 min | 17.2 | 31 |
| Notched Izod Impact Strength, 23°C | J/m | 400 | 250 |
| Notched Izod Impact Strength, 0°C | J/m | 190 | 160 |
| Notched Izod Impact Strength, -30°C | J/m | 150 | 130 |

## Claims

1. A polycarbonate blend composition comprising:
(a) a first polycarbonate having a glass transition temperature of greater than 170°C as measured using a differential scanning calorimetry method, wherein the first polycarbonate is derived from:
(i) one or more monomers having the structure HO-A₁-Y₁-A₂-OH wherein each of A₁ and A₂ comprise a monocyclic divalent arylene group, and Y₁ is a bridging group having one or more atoms; or
(ii) polyester monomer units having the structure 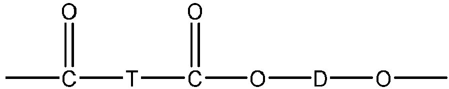 wherein D comprises one or more alkyl containing C₆-C₂₀ aromatic group(s), or one or more C₆-C₂₀ aromatic group(s), and T comprises a C₆-C₂₀ aromatic group; and
(b) a second polycarbonate wherein the second polycarbonate is a polysiloxane block copolymer derived from
(i) the structure 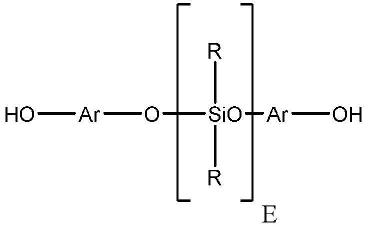 wherein R comprises a C₁-C₃₀ aliphatic, a C₆-C₃₀ aromatic group, or a combination thereof, wherein Ar comprises one or more C₆-C₃₀ aromatic group(s), or one or more alkyl containing C₆-C₃₀ aromatic group(s), wherein E has an average value of 20-200; or
(ii) the structure 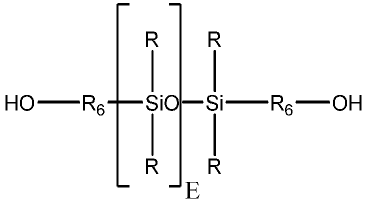 wherein R comprises a C₁-C₃₀ aliphatic, a C₆-C₃₀ aromatic group, or a combination thereof, wherein R₆ comprise C₆-C₃₀ aromatic group, or a combination of a C₆-C₃₀ aromatic group and a C₁-C₃₀ aliphatic group, wherein E has an average value of 20-200;
wherein the wt% siloxane of (b) is between 15% to 25%;
(c) greater than 0.1 wt.% and less than 0.3 wt.% of the total blend composition of an anti-drip agent being polytetrafluoroethylene encapsulated in styreneacrylonitrile (TSAN), the perfluorinated polyolefin of the anti-drip agent being in a fibrous form;
(d) 0.01 to 0.15 wt.% of a flame retardant additive based on weight of the blend composition; wherein the wt% of siloxane of the blended composition is between 1.5 and 5 %;
wherein the blend composition has a heat deflection temperature (HDT) of at least 150°C at 1.8 MPa, according to ASTM D 648-07;
wherein the blend composition has a vicat softening temperature (Vicat B/50) of at least 170°C, according to ASTM D 1525-09;
wherein an article molded from the blend composition has a notched Izod impact strength of at least 400 J/m at 23°C at a thickness of 5 mm (0.2 inches), according to ASTM D256-10; and
wherein a molded article from the blend composition has a UL94 rating of V₀ at 1.5 mm thickness.

2. The blend composition of Claim 1, wherein the E value of the second polycarbonate is between 20 and 70 or 30 and 50.

3. The blend composition of any one of Claims 1-2, wherein the first polycarbonate comprises carbonate units derived from at least one of the following monomers 3,3-bis(4-hydroxyphenyl)-2-phenylisoindolin-1-one (PPPBP), 1,1-bis(4-hydroxyphenyl)-1-phenyl-ethane(Bisphenol-AP), and 1,1-bis(4-hydroxyphenyl)-3,3,5-trimethyl-cyclohexane (Bisphenol-TMC).

4. The blend composition of Claim 1, wherein the first polycarbonate comprises aromatic ester units derived from isophthalic acid or terephthalic acid or isophthalic acid esters or terephthalic esters or a combination isophthalic acid and terephthalic acid or isophthalic acid esters and terephthalic acid esters.

5. The blend composition of Claim 1, wherein the second polycarbonate further comprises a carbonate unit derived from the polysiloxane blocks having the structure 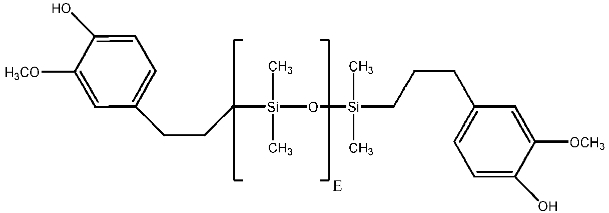 or 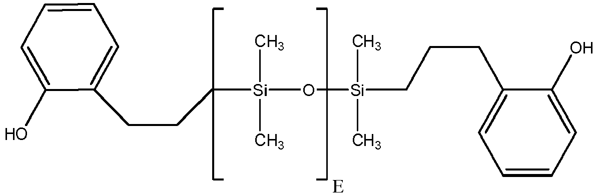 wherein E has an average value of between 20 and 200.

6. The blend composition of any one of Claims 1-5, wherein the flame retardant additive is selected from at least one of the following: perfluorinated C₁₋₁₆ alkyl sulfonates, potassium diphenylsulfone sulfonate (KSS), sodium benzene sulfonate, sodium toluene sulfonate (NATS), salts derived from an alkali metal or alkaline earth metal (including lithium, sodium, potassium, magnesium, calcium and barium salts) or an inorganic acid complex salt.

7. The blend composition of Claim 6, wherein the perfluorinated C₁₋₁₆ alkyl sulfonate is selected from at least one of the following: potassium perfluorobutane sulfonate (Rimar salt), potassium perfluoroctane sulfonate, and tetraethylammonium perfluorohexane sulfonate.

8. An injection molded article comprising: the blend composition of Claim 1,
wherein the article has the following characteristics:
(a) a notched izod impact strength of at least 400 J/m at 23° C at a thickness of 5 mm (0.2 inches), according to ASTM D 256-10; and
(b) a UL94 rating of V₀ at 1.5 mm thickness.

9. The article of Claim 8, wherein the article is subjected to a metallization process, dye sublimation process or an overmolding process.

10. A method of reducing or inhibiting the amount of surface structural defects on an article, comprising molding the polycarbonate blend composition of Claim 1, wherein the article molded from the polycarbonate blend composition exhibits between a 0.5 % and 100 % decrease in the level of a surface structural defect as compared to the surface of a known control article having a polysiloxane content greater than 5 % of the total wt% of the control article, wherein the surface structural defect is delamination, pearlescence, surface imperfections, uneven shine, non-uniform pearlescence, fractures, pealing, scaling, breakage, undesired coloring, abrasions, and/or hazing.

11. The blend composition of Claim 1, wherein:
the first polycarbonate is derived from 2-phenyl-3,3-bis-(4-hydroxyphenyl)isoindoline-1-one (PPPBP); and
the flame retardant is potassium perfluorobutane sulfonate (Rimar salt).

## Patentansprüche

1. Eine Polycarbonat-Mischungs-Zusammensetzung, die folgendes umfasst:
(a) ein erstes Polycarbonat, das eine Glassübergangstemperatur von größer als 170°C besitzt, gemessen unter Einsatz eines Differential-Scanning-Kalorimetrie Verfahrens, wobei das erste Polycarbonat abgeleitet ist von:
(i) einem oder mehreren Monomeren mit der Struktur HO-A₁-Y₁-A₂-OH, wobei jedes A₁ und A₂ eine monocyclische bivalente Arylen-Gruppe umfasst, und Y₁ eine überbrückende Gruppe ist, die eines oder mehrere Atome hat; oder
(ii) Polyester-Monomer-Einheiten mit der Struktur 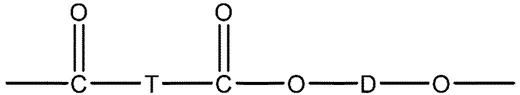 wobei D eine oder mehrere Alkyl-beinhaltende aromatische C₆-C₂₀ Gruppe(n), oder eine oder mehrere aromatische C₆-C₂₀ Gruppe(n) umfasst, und T eine aromatische C₆-C₂₀ Gruppe umfasst; und
(b) ein zweites Polycarbonat, wobei das zweite Polycarbonat ein Polysiloxan-Blockcopolymer ist, abgeleitet von 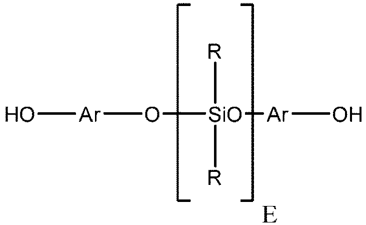
(i) der Struktur
wobei R eine aliphatische C₁-C₃₀ Gruppe, eine aromatische C₆-C₃₀ Gruppe, oder eine Kombination davon umfasst, wobei Ar eine oder mehrere aromatische C₆-C₃₀ Gruppe(n), oder eine oder mehrere Alkyl-beinhaltende aromatische C₆-C₃₀ Gruppe(n) umfasst, wobei E einen durchschnittlichen Wert von 20-200 besitzt; oder 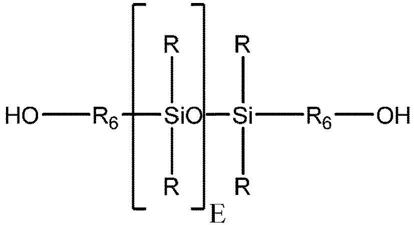
(ii) der Struktur
wobei R eine aliphatische C₁-C₃₀ Gruppe, eine aromatische C₆-C₃₀ Gruppe, oder eine Kombination davon umfasst, wobei R₆ eine aromatische C₆-C₃₀ Gruppe umfasst, oder eine Kombination von einer aromatischen C₆-C₃₀ Gruppe und einer aliphatischen C₁-C₃₀ Gruppe, wobei E einen durchschnittlichen Wert von 20-200 besitzt;
wobei die Gewichtsprozente an Siloxan von (b) zwischen 15% bis 25% betragen;
(c) mehr als 0,1 Gewichtsprozent und weniger als 0,3 Gewichtsprozent von der gesamten Mischungs-Zusammensetzung eines Anti-Tropf-Mittels, das Polytetrafluoroethylen, eingekapselt in Styrenacrylonitril (TSAN), ist, wobei das perfluorinierte Polyolefin des Anti-Tropf-Mittels in einer faserigen Form vorliegt;
(d) 0,01 bis 0,15 Gewichtsprozent eines Flammenhemmstoff-Zusatzes, bezogen auf das Gewicht der Mischungs-Zusammensetzung;
wobei die Gewichtsprozente an Siloxan von der Mischungs-Zusammensetzung zwischen 1,5 und 5% betragen;
wobei die Mischungs-Zusammensetzung eine Wärmeformbeständigkeitstemperatur (HDT) von mindestens 150°C bei 1,8 MPa besitzt, gemäß ASTM D 648-07;
wobei die Mischungs-Zusammensetzung eine Vicat-Erweichungstemperatur (Vicat B/50) von mindestens 170°C besitzt, gemäß ASTM D 1525-09;
wobei ein aus der Mischungs-Zusammensetzung geformter Artikel eine Izod-Kerbschlagzähigkeit von mindestens 400 J/m bei 23°C bei einer Dicke von 5mm (0,2 Zoll) besitzt, gemäß ASTM D256-10; und
wobei ein aus der Mischungs-Zusammensetzung geformter Artikel eine UL94-V₀ Bewertung bei einer Dicke von 1,5mm besitzt.

2. Die Mischungs-Zusammensetzung gemäß Anspruch 1, wobei der E Wert des zweiten Polycarbonats zwischen 20 und 70 oder 30 und 50 liegt.

3. Die Mischungs-Zusammensetzung gemäß irgendeinem der Ansprüche 1-2, wobei das erste Polycarbonat Carbonateinheiten umfasst, die von mindestens einem der folgenden Monomere abgeleitet sind: 3,3-bis(4-hydroxyphenyl)-2-phenlyisoindolin-1-one (PPPBP), 1,1-bis(4-hydroxyphenyl)-1-phenyl-ethan(Bisphenol-AP), und 1,1-bis(4-hydroxyphenyl)-3,3,5-trimethyl-cyclohexan(Bisphenol-TMC).

4. Die Mischungs-Zusammensetzung gemäß Anspruch 1, wobei das erste Polycarbonat aromatische Estereinheiten umfasst, die abgeleitet sind von Isophthalsäure oder Terephthalsäure oder Isophthalsäureestern oder Terephthalsäureestern oder eine Kombination von Isophthalsäure und Terephthalsäure oder Isophthalsäureestern und Terephthalsäureestern.

5. Die Mischungs-Zusammensetzung gemäß Anspruch 1, wobei das zweite Polycarbonat weiter eine Carbonateinheit umfasst, die abgeleitet ist von den Polysiloxan-Blöcken mit der Struktur 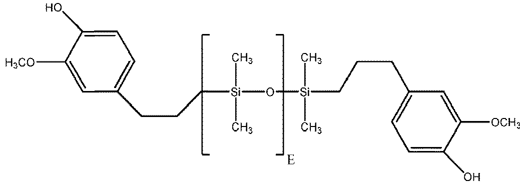 or 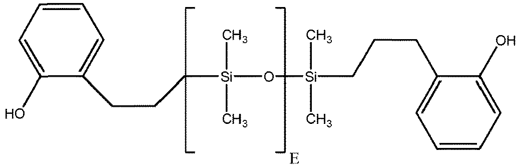 wobei E einen durchschnittlichen Wert zwischen 20 und 200 besitzt.

6. Die Mischungs-Zusammensetzung gemäß irgendeinem der Ansprüche 1-5, wobei der Flammenhemmstoff-Zusatz aus mindestens einem der folgenden ausgewählt wird: Perfluorinierte C₁₋₁₆ Alkylsulfonate, Kalium-Diphenylsulfon-Sulfonat (KSS), Natrium-Benzen-Sulfonat, Natrium-Toluen-Sulfonat (NATS), Salze abgeleitet von einem Alkalimetall oder einem Erdalkalimetall (einschließlich Lithium, Natrium, Kalium, Magnesium, Calcium und Bariumsalzen) oder einem anorganischen Säuren-Komplexsalz.

7. Die Mischungs-Zusammensetzung gemäß Anspruch 6, wobei das perfluorinierte C₁₋₁₆ Alkylsulfonat aus mindestens einem der folgenden ausgewählt wird: Kalium-Perfluorobutan-Sulfonat (Rimar-Salz), Kalium -Perfluoroctan-Sulfonat, und Tetraethylammonium-Perfluorohexan-Sulfonat.

8. Ein spritzgegossener Artikel, der folgendes umfasst: Die Mischungs-Zusammensetzung gemäß Anspruch 1, wobei der Artikel die folgenden Eigenschaften besitzt:
(a) eine Izod-Kerbschlagzähigkeit von mindestens 400 J/m bei 23°C bei einer Dicke von 5mm (0,2 Zoll), gemäß ASTM D256-10; und
(b) eine UL94-V₀ Bewertung bei einer Dicke von 1,5mm.

9. Der Artikel gemäß Anspruch 8, wobei der Artikel einem Metallisierungs-Verfahren, einem Farbstoffsublimations-Verfahren oder einem Umspritzungs-Verfahren unterworfen wird.

10. Ein Verfahren zur Reduktion oder Hemmung der Menge an Oberflächenstrukturen-Mängeln auf einem Artikel, das folgendes umfasst: Das Formen der Polycarbonat-Mischungs-Zusammensetzung gemäß Anspruch 1, wobei der Artikel, der aus der Polycarbonat-Mischungs-Zusammensetzung geformt wird, zwischen 0,5% und 100% an Abnahme in dem Niveau eines Oberflächenstrukturen-Mangels aufweist, verglichen mit der Oberfläche eines bekannten Kontrollartikels, der einen Polysiloxan-Gehalt von mehr als 5 % der gesamten Gewichtsprozente des Kontrollartikels hat, wobei der Oberflächenstrukturen-Mangel eine Delamination, Perlglanz, Oberflächen-Unvollkommenheiten, ungleichmäßige Glanzstellen, ungleichmäßiger Perlglanz, Frakturen, Pealing, Abblättern, Bruch, unerwünschte Färbung, Abrieb und/oder Schleierbildung ist.

11. Die Mischungs-Zusammensetzung gemäß Anspruch 1, wobei:
das erste Polycarbonat von 2-phenyl-3,3-bis-(4-hydroxyphenyl)isoindolin-1-one (PPPBP) abgeleitet ist; und
der Flammenhemmstoff Kalium-Perfluorobutan-Sulfonat (Rimar Salz) ist.

## Revendications

1. Composition de mélange de polycarbonate comprenant :
(a) un premier polycarbonate ayant une température de transition vitreuse supérieure à 170°C, telle que mesurée par utilisation d'un procédé de calorimétrie à balayage différentiel, lequel premier polycarbonate dérive de :
(i) un ou plusieurs monomères de structure HO-A₁-Y₁-A₂-OH dans laquelle chacun de A₁ et A₂ comprend un groupe arylène divalent monocyclique, et Y₁ est un groupe pontant ayant un ou plusieurs atomes ; ou
(ii) des motifs monomères de polyester de structure 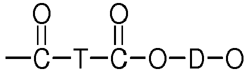 dans laquelle D comprend un ou plusieurs groupes aromatiques en C₆ à C₂₀ contenant un alkyle, ou un ou plusieurs groupes aromatiques en C₆ à C₂₀, et T comprend un groupe aromatique en C₆ à C₂₀ ; et
(b) un deuxième polycarbonate, lequel deuxième polycarbonate est un copolymère séquencé de polysiloxane dérivé de
(i) la structure 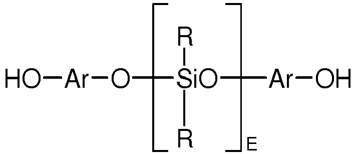 dans laquelle R comprend un groupe aliphatique en C₁ à C₃₀, un groupe aromatique en C₆ à C₃₀, ou une combinaison de ceux-ci, dans laquelle Ar comprend un ou plusieurs groupes aromatiques en C₆ à C₃₀, ou un ou plusieurs groupes aromatiques en C₆ à C₃₀ contenant un alkyle, dans laquelle E a une valeur moyenne de 20 à 200 ; ou
(ii) la structure 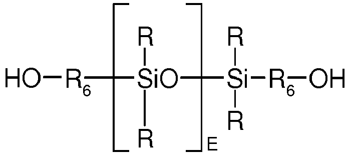 dans laquelle R comprend un groupe aliphatique en C₁ à C₃₀, un groupe aromatique en C₆ à C₃₀, ou une combinaison de ceux-ci, dans laquelle R₆ comprend un groupe aromatique en C₆ à C₃₀, ou une combinaison d'un groupe aromatique en C₆ à C₃₀ et d'un groupe aliphatique en C₁ à C₃₀, dans laquelle E a une valeur moyenne de 20 à 200 ;
dans laquelle le pourcentage en poids du siloxane de (b) est compris entre 15 % et 25 % ;
(c) plus de 0,1 % en poids et moins de 0,3 % en poids, de la composition de mélange totale, d'un agent antigoutte qui est du polytétrafluoroéthylène encapsulé dans du styrène-acrylonitrile (TSAN), la polyoléfine perfluorée de l'agent antigoutte étant sous forme fibreuse ;
(d) 0,01 à 0,15 % en poids d'un additif ignifugeant, par rapport au poids de la composition de mélange ;
dans laquelle le pourcentage en poids de siloxane dans la composition mélangée est compris entre 1,5 et 5 % ;
laquelle composition de mélange a une température de déformation thermique (HDT) d'au moins 150°C sous 1,8 MPa, conformément à la norme ASTM D 648-07 ;
laquelle composition de mélange a un point de ramollissement Vicat (Vicat B/50) d'au moins 170°C, conformément à la norme ASTM D 1525-09 ;
dans laquelle un article moulé à partir de la composition de mélange a une résistance au choc Izod sur barreau entaillé d'au moins 400 J/m à 23°C pour une épaisseur de 5 mm (0,2 pouce), conformément à la norme ASTM D256-10 ; et
dans laquelle un article moulé à partir de la composition de mélange a une note UL94 de V₀ pour une épaisseur de 1,5 mm.

2. Composition de mélange selon la revendication 1, dans laquelle la valeur de E dans le deuxième polycarbonate est comprise entre 20 et 70 ou entre 30 et 50.

3. Composition de mélange selon l'une quelconque des revendications 1 et 2, dans laquelle le premier polycarbonate comprend des motifs carbamate dérivés d'au moins l'un des monomères suivants : 3,3-bis(4-hydroxyphényl)-2-phénylisoindolin-1-one (PPPBP), 1,1-bis(4-hydroxyphényl)-1-phényléthane (bisphénol-AP), et 1,1-bis(4-hydroxyphényl)-3,3,5-triméthylcyclohexane (bisphénol-TMC).

4. Composition de mélange selon la revendication 1, dans laquelle le premier polycarbonate comprend des motifs ester aromatique dérivés d'acide isophtalique ou d'acide téréphtalique ou d'esters d'acide isophtalique ou d'esters d'acide téréphtalique ou d'une combinaison d'acide isophtalique et d'acide téréphtalique ou d'esters d'acide isophtalique et d'esters d'acide téréphtalique.

5. Composition de mélange selon la revendication 1, dans laquelle le deuxième polycarbonate comprend en outre un motif carbonate dérivé des blocs de polysiloxane de structure 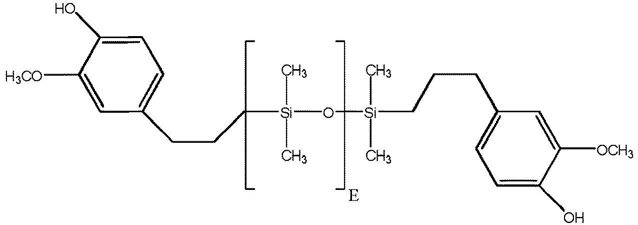 ou 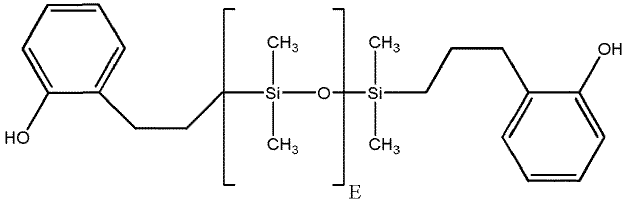 où E a une valeur moyenne comprise entre 20 et 200.

6. Composition de mélange selon l'une quelconque des revendications 1 à 5, dans laquelle l'additif ignifugeant est choisi parmi au moins l'un des suivants : alkylsulfonates en C₁ à C₁₆ perfluorés, diphénylsulfonesulfonate de potassium (KSS), benzènesulfonate de sodium, toluènesulfonate de sodium (NATS), sels dérivés d'un métal alcalin ou d'un métal alcalino-terreux (y compris les sels de lithium, sodium, potassium, magnésium, calcium et baryum), ou un sel complexe d'acide inorganique.

7. Composition de mélange selon la revendication 6, dans laquelle l'alkylsulfonate en C₁ à C₁₆ perfluoré est choisi parmi au moins l'un des suivants : perfluorobutanesulfonate de potassium (sel de Rimar), perfluorooctanesulfonate de potassium, et perfluorohexanesulfonate de tétraéthylammonium.

8. Article moulé par injection comprenant la composition de mélange de la revendication 1, lequel article a les caractéristiques suivantes :
(a) une résistance au choc Izod sur barreau entaillé d'au moins 400 J/m à 23°C pour une épaisseur de 5 mm (0,2 pouce), conformément à la norme ASTM D 256-10 ; et
(b) une note UL94 de V₀ pour une épaisseur de 1,5 mm.

9. Article selon la revendication 8, lequel article est soumis à un traitement de métallisation, un traitement de sublimation de colorant, ou un traitement de surmoulage.

10. Procédé pour réduire ou inhiber la quantité de défauts structurels en surface sur un article, comprenant le moulage de la composition de mélange de polycarbonate de la revendication 1, dans lequel l'article moulé à partir de la composition de mélange de polycarbonate présente une diminution comprise entre 0,5 % et 100 % du niveau d'un défaut structurel en surface, en comparaison avec la surface d'un article témoin connu ayant une teneur en siloxane supérieure à 5 % du pourcentage en poids total de l'article témoin, dans lequel le défaut structurel en surface est une déstratification, une nacrescence, des imperfections en surface, un brillant inégal, une nacrescence non uniforme, des fractures, un pelage, une desquamation, une rupture, une coloration non souhaitée, des abrasions, et/ou un voile.

11. Composition de mélange selon la revendication 1, dans laquelle :
le premier polycarbonate dérive de 2-phényl-3,3-bis-(4-hydroxyphényl)isoindolin-1-one (PPPBP) ; et
l'ignifugeant est le perfluorobutanesulfonate de potassium (sel de Rimar).
